(19)

**Europäisches Patentamt**
**European Patent Office**
**Office européen des brevets**

(11) **EP 3 523 631 B1**

(12) **EUROPÄISCHE PATENTSCHRIFT**

(45) Veröffentlichungstag und Bekanntmachung des Hinweises auf die Patenterteilung:
**20.01.2021 Patentblatt 2021/03**

(21) Anmeldenummer: **17784259.8**

(22) Anmeldetag: **10.10.2017**

(51) Int Cl.:
*G01N 21/64* (2006.01)   *G02B 21/00* (2006.01)

(86) Internationale Anmeldenummer:
**PCT/EP2017/075756**

(87) Internationale Veröffentlichungsnummer:
**WO 2018/069283 (19.04.2018 Gazette 2018/16)**

(54) **VERFAHREN ZUM RÄUMLICH HOCHAUFLÖSENDEN BESTIMMEN DES ORTS EINES VEREINZELTEN, MIT ANREGUNGSLICHT ZUR EMISSION VON LUMINESZENZLICHT ANREGBAREN MOLEKÜLS IN EINER PROBE**

METHOD FOR SPATIAL HIGH-RESOLUTION DETERMINATION OF THE POSITION OF AN ISOLATED MOLECULE EXCITABLE WITH EXCITATION LIGHT TO EMIT LUMINESCENCE LIGHT

PROCÉDÉ POUR LA DÉTERMINATION SPATIALE À HAUTE RÉSOLUTION DE LA POSITION D'UNE MOLÉCULE ISOLÉE APTE À ÊTRE EXCITÉE PAR UNE LUMIÈRE D'EXCITATION À ÉMETTRE UNE LUMIÈRE DE LUMINESCENCE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **10.10.2016 DE 102016119263**
**10.10.2016 DE 102016119262**
**10.10.2016 DE 102016119264**

(43) Veröffentlichungstag der Anmeldung:
**14.08.2019 Patentblatt 2019/33**

(73) Patentinhaber: **Max-Planck-Gesellschaft zur Förderung der Wissenschaften e.V.**
**80539 München (DE)**

(72) Erfinder:
• **BALZAROTTI, Francisco**
**37083 Göttingen (DE)**
• **EILERS, Yvan**
**81241 München (DE)**
• **GWOSCH, Klaus**
**78086 Brigachtal (DE)**
• **HELL, Stefan W.**
**37085 Göttingen (DE)**

(74) Vertreter: **REHBERG HÜPPE + PARTNER Patentanwälte PartG mbB**
**Robert-Gernhardt-Platz 1**
**37073 Göttingen (DE)**

(56) Entgegenhaltungen:
**WO-A1-2013/072273     WO-A1-2015/097000**
**WO-A1-2017/153430**

• **FRANCISCO BALZAROTTI ET AL: "Nanometer resolution imaging and tracking of fluorescent molecules with minimal photon fluxes", SCIENCE, Bd. 355, Nr. 6325, 10. Februar 2017 (2017-02-10), Seiten 606-612, XP55426923, ISSN: 0036-8075, DOI: 10.1126/science.aak9913**

EP 3 523 631 B1

**Beschreibung**

## TECHNISCHES GEBIET DER ERFINDUNG

Die Erfindung bezieht sich auf Verfahren zum räumlich hochauflösenden Bestimmen des Orts eines vereinzelten Moleküls in einer oder mehreren Raumrichtungen in einer Probe, wobei das Molekül mit Anregungslicht zur Emission von Lumineszenzlicht anregbar ist.

Unter einem vereinzelten, mit Anregungslicht zur Emission von Lumineszenzlicht anregbaren Molekül wird hier ein Molekül verstanden, das einen Mindestabstand zu anderen gleichartigen Molekülen aufweist, die mit demselben Anregungslicht zur Emission von Lumineszenzlicht im selben Wellenlängenbereich anregbar sind. Dieser Mindestabstand wird sicher eingehalten, wenn der Abstand des vereinzelten Moleküls zu derartigen gleichartigen Molekülen mindestens gleich der Beugungsgrenze bei der Wellenlänge des Lumineszenzlichts ist, weil dann das Lumineszenzlicht von den verschiedenen mit Anregungslicht zur Emission von Lumineszenzlicht anregbaren Molekülen getrennt erfasst werden kann. Die Erfindung umfasst aber auch Ausführungsformen, bei denen dieser Mindestabstand kleiner als die Beugungsgrenze bei der Wellenlänge des Lumineszenzlichts ist.

Das Lumineszenzlicht, zu dessen Emission das Molekül mit dem Anregungslicht anregbar ist, kann insbesondere Fluoreszenzlicht sein. Das Emittieren des Lumineszenzlichts durch das Molekül kann aber auf jedem photophysikalischen Prozess basieren, der durch das Anregungslicht angeregt wird. Hierzu zählen alle Prozesse der Photolumineszenz und beispielsweise auch eine durch das Anregungslicht angeregte Emission von Lumineszenzlicht durch Quantum Dots.

## STAND DER TECHNIK

Das einfachste Verfahren zum Bestimmen des Orts eines vereinzelten, mit Anregungslicht zur Emission von Lumineszenzlicht anregbaren Moleküls besteht darin, das Molekül mit dem Anregungslicht zur Emission von Lumineszenzlicht anzuregen und das Lumineszenzlicht auf einen Kamera oder allgemeiner auf einen räumlich auflösenden Detektor abzubilden. Für die bei dieser Abbildung erreichbare räumliche Auflösung gilt zwar grundsätzlich die Beugungsgrenze bei der Wellenlänge des Lumineszenzlichts. Wenn jedoch eine Vielzahl von Photonen des Lumineszenzlichts mit dem räumlich auflösenden Detektor detektiert wird, die von einem einzigen Molekül an einem festen Ort in der Probe stammen, kann aus der räumlichen Verteilung dieser Photonen über den Detektor der Ort des Moleküls mit einer um einen Faktor

$$1/\sqrt{n}$$

verbesserten Präzision bestimmt werden. Dabei ist "n" die Anzahl der registrierten Photonen. Eine deutliche Unterschreitung der Beugungsgrenze bei diesem als Lokalisierung bezeichnet Verfahren setzt daher eine Vielzahl von Photonen des Lumineszenzlichts voraus, die von dem vereinzelten Molekül emittiert und registriert werden. Damit besteht die Gefahr, dass das vereinzelte Molekül beim und evtl. schon vor dem Bestimmen seines Orts in der Probe mit der gewünschten Präzision weggeblichen wird. Insbesondere ein wiederholtes Bestimmen des Orts desselben vereinzelten Moleküls, wie es zum Tracking eines sich in einer Probe bewegenden Moleküls erforderlich ist, ist deshalb oft nicht möglich.

Wenn ein vereinzeltes Molekül Lumineszenzlicht mit einer gerichteten räumlichen Verteilung emittiert, wirkt sich dies bei der Bestimmung seines Orts aus der Verteilung der Photonen des Lumineszenzlichts über einen räumlich auflösenden Detektor, d. h. durch Lokalisierung, in Form eines Ortsfehlers aus. Dieser Ortsfehler hängt von der Orientierung des Moleküls in der jeweiligen Probe ab. Eine gerichtete Verteilung des emittierten Lumineszenzlichts zeigt sich beispielsweise bei Molekülen, deren Rotationsdiffusionszeiten länger als ihre Verweildauer in ihrem angeregten Zustand sind, aus dem heraus sie das Lumineszenzlicht emittieren (siehe Engelhardt, J. et al. "Molecular Orientation Affects Localization Accuracy in Superresolution Far-Field Fluorescence Microscopy", NanoLett2011 Jan. 12; 11 (1):209-13).

Aus der WO 2006/127692 A2 ist es bekannt, eine interessierende Struktur in einer Probe mit aktivierbaren Molekülen zu markieren, die sich in einem nichtfluoreszenten Ausgangszustand befinden, aber mit Aktivierungslicht in einen fluoreszenten Zustand überführt werden können, in dem sie mit Anregungslicht zur Emission von Lumineszenzlicht anregbar sind. So kann mit dem Aktivierungslicht ein geringer Anteil der insgesamt vorhandenen Moleküle in den fluoreszenten Zustand gebracht werden, bei dem nächstbenachbarte Moleküle in dem fluoreszenten Zustand einen größeren Abstand als die Beugungsgrenze aufweisen, d. h. vereinzelt sind. Bei einem anschließenden Beaufschlagen der Probe mit Anregungslicht wird Fluoreszenzlicht nur von den in dem fluoreszenten Zustand befindlichen Molekülen emittiert. So kann das Fluoreszenzlicht von den einzelnen vereinzelten Molekülen in dem fluoreszenten Zustand getrennt registriert werden; und die Orte der einzelnen Moleküle können trotz hoher absoluter Dichte der Moleküle in der Probe durch Lokalisierung mit einer Präzision jenseits der Beugungsgrenze bestimmt werden. Eine Abbildung der Verteilung der Moleküle in der Probe und damit der mit ihnen markierten interessierenden Struktur wird schrittweise erreicht, indem die Schritte des Aktivierens eines geringen Anteils der Moleküle, des Anregens dieser aktivierten Moleküle zur Emission von Fluoreszenzlicht und des Registrieren des Fluoreszenzlichts mit einem räumlich auflösenden Detektor, bis die jeweiligen aktivierten Moleküle weggeblichen sind, wiederholt und damit für immer mehr der Moleküle durchgeführt werden, die die interessierende Struktur markieren.

Die WO 2006/127692 A2 beschreibt auch, dass die Aktivierung nur einer Teilmenge der insgesamt vorhandenen Moleküle auf andere Abbildungsverfahren übertragen werden kann. Dabei können durch eine Intensitätsverteilung des Anregungslichts mit durch Minima begrenzten Maxima die vereinzelten Moleküle speziell in bestimmten Ebenen oder anderen räumlichen Untereinheiten der Probe zur Emission von Fluoreszenzlicht angeregt werden.

Das aus der WO 2006/127692 A2 bekannte Verfahren wird auch als PALM, d. h. als photoaktivierte Lokalisierungsmikroskopie, bezeichnet. Ein sehr ähnliches, als STORM (stochastische optische Rekonstruktionsmikroskopie) bezeichnetes Verfahren weist grundsätzlich dieselben Vor- und Nachteile auf.

Aus der US 8,174,692 B2 ist es bekannt, dass auch Moleküle eines normale Farbstoffs, die nicht aktivierbar sind, sondern einen fluoreszenten Ausgangszustand aufweisen, und auch nicht zwischen zwei Konformationszuständen geschaltet werden können, von denen nur einer fluoreszent ist, genutzt werden können, um den Ort einzelner Moleküle durch Lokalisierung zu bestimmen. Dazu wird die Probe mit einer so hohen Intensität von Anregungslicht, das die Moleküle zugleich mit einer gewissen Übergangswahrscheinlichkeit in einen relativ langlebigen elektronischen Dunkelzustand überführt, beaufschlagt, dass sich zwischen den aktuell in dem fluoreszenten Zustand befindlichen Molekülen Abstände oberhalb der Beugungsgrenze einstellen.

Die jeweils in dem fluoreszenten Zustand vorliegenden Moleküle werden von dem Anregungslicht zur Emission von Fluoreszenzlicht angeregt, das mit einer Kamera als räumlich auflösendem Detektor registriert wird. Auf diese Weise werden sukzessive verschiedene Moleküle des Farbstoffs lokalisiert, da die Moleküle, von denen bereits Photonen registriert wurden, in den Dunkelzustand gelangen, aus dem andere Moleküle mit einer gewissen Übergangswahrscheinlichkeit in den fluoreszenten Zustand zurückkehren. Dieses bekannte Verfahren kann kontinuierlich durchgeführt werden, d. h. es können fortlaufend Frames aus der Kamera ausgelesen werden, während die Probe mit der hohen Intensität des Anregungslichts beaufschlagt wird, die den Farbstoff im Wesentlichen in dem Dunkelzustand hält und zugleich die dadurch vereinzelten fluoreszenten Moleküle zur Emission von Lumineszenzlicht anregt.

Das aus der US 8,174,692 B2 bekannte Verfahren wird auch als GSDIM (Ground State Depletion Individual Molecule Return Microscopy) bezeichnet.

Ein grundsätzlich anderes Verfahren zum räumlich hochaufgelösten Bestimmen von Orten von mit Anregungslicht zur Emission von Lumineszenzlicht anregbaren Molekülen in einer Probe wird bei räumlich hochauflösenden Varianten der Rasterfluoreszenzlichtmikroskopie angewandt. Bei der Rasterfluoreszenzlichtmikroskopie basiert die Präzision beim Bestimmen der Orte von fluoreszenten Molekülen in einer Probe auf einer zu jedem Zeitpunkt nur lokalen Anregung der Probe, so dass zu dem jeweiligen Zeitpunkt registriertes Fluoreszenzlicht dem räumlichen Bereich der Anregung zugeordnet werden kann. Wenn die Moleküle in der Probe mitfokussiertem Anregungslicht angeregt werden, setzt die Beugungsgrenze bei der Wellenlänge des Anregungslichts die Untergrenze für die räumlichen Abmessungen des Bereichs der Anregung und damit für die räumliche Auflösung, die bei der Abbildung einer mit den fluoreszenten Molekülen markierten Struktur in der Probe erreichbar ist.

Bei der STED (Stimulated Emission Depletion)-Fluoreszenzlichtmikroskopie wird die mit fokussiertem Anregungslicht bewirkte Anregung von Molekülen, mit denen eine interessierende Struktur einer Probe markiert ist, im Umfeld jedes Messpunkts durch gerichtete Emission wieder beseitigt. Die gerichtete Emission wird mit STED-Licht stimuliert und verhindert die Emission von Fluoreszenzlicht durch die Moleküle. Danach registriertes Fluoreszenzlicht kann nur noch aus dem Bereich stammen, in dem die Anregung mit dem STED-Licht nicht beseitigt wurde. Dieser Bereich, in dem die Anregung nicht beseitigt wird, kann sehr klein gehalten werden, indem er durch eine Nullstelle der Intensitätsverteilung des STED-Lichts definiert wird und die maximale Intensität des STED-Lichts in der Nullstelle benachbarten Intensitätsmaxima hoch gewählt wird, so dass es die Anregung der Moleküle bereits sehr nahe seiner Nullstelle vollständig beseitigt.

Statt eine vorher bewirkte Anregung der Moleküle in Teilen der Probe wieder abzuregen, kann Fluoreszenzverhinderungslicht mit einer eine Nullstelle aufweisenden Intensitätsverteilung auch dazu genutzt werden, fluoreszente Moleküle außerhalb der Nullstelle in einen nicht-fluoreszenten Dunkelzustand zu schalten. Dies erfolgt beispielsweise bei der RESOLFT (Reversible Saturable Optical (Fluorescence) Transitions)-Fluoreszenzlichtmikroskopie oder der GSD (Ground State Depletion)-Fluoreszenzlichtmikroskopie.

Bei den als STED-, RESOLFT- oder GSD-Rasterfluoreszenzlichtmikroskopie bekannten Verfahren wird jedes Molekül, bereits bevor Fluoreszenzlicht von ihm registriert wird, in den an die Nullstelle des Fluoreszenzverhinderungslichts angrenzenden Bereichen neben dem Anregungslicht mit den dort hohen Intensitäten des Fluoreszenzverhinderungslichts beaufschlagt, die mit einer erheblichen Gefahr des Bleichen der Moleküle verbunden sind. Die Gefahr des Bleichens besteht auch, wenn bei diesen bekannten Verfahren ein vereinzelte, mit Anregungslicht zur Emission von Lumineszenzlicht anregbares Molekül in einer Probe mit der Nullstelle des Fluoreszenzverhinderungslichts verfolgt wird, da dazu die Rate der von dem Molekül emittierten Photonen des Lumineszenzlichts fortlaufend zu maximieren ist.

Aus der WO 2012/171999 A1 ist ein Verfahren bekannt, bei dem eine Probe mit einem Anregungslichtstrahl, der mit einer Intensitätsverteilung von STED-Licht mit einem Minimum am Fokus des Anregungslichtstrahls überlagert ist, so schnell abgetastet wird, dass bei jedem von vielen aufeinanderfolgenden Abtastvorgängen Fluoreszenzlicht nur in Form von einzelnen Photonen registriert wird, die jeweils nur von einem einzelnen Molekül stammen. Die Orte der verschiedenen einzelnen Moleküle, von denen die Photonen stammen, werden den zugehörigen Positionen des Minimums des STED-Lichts in der Probe zugeordnet.

Bei diesem Verfahren werden zwar nur wenige Photonen, im Extremfall nur ein einziges, von jedem Molekül registriert, dem ein Ort in der Probe zugeordnet wird. Die Moleküle werden aber dennoch typischerweise einigen Zyklen von Anregung und stimulierter Emission unterworfen, so dass ihr Bleichen nicht ausgeschlossen ist. Zudem ist mit diesem bekannten Verfahren ein gezieltes Verfolgen eines bestimmten vereinzelten Moleküls nicht sinnvoll möglich.

Aus der DE 10 2011 055 367 A1 ist ein Verfahren zum Verfolgen eines einzelnen fluoreszenten Moleküls bekannt. Das Molekül wird mit Anregungslicht zur Emission von Fluoreszenzlicht angeregt und das Fluoreszenzlicht wird registriert. Dabei wird das Anregungslicht mit einer ein lokales Minimum aufweisenden Intensitätsverteilung auf die Probe gerichtet, und das Minimum wird dem sich in der Probe bewegenden Molekül nachgeführt. Zu diesem Zweck wird die Intensitätsverteilung des Anregungslichts fortlaufend so gegenüber der Probe verschoben, dass eine Rate von Photonen des von dem Molekül emittierten Fluoreszenzlichts minimiert wird. Dies bedeutet ein Halten des Moleküls in dem Minimum der Intensitätsverteilung des Anregungslichts, bei dem es sich um eine Nullstelle der Intensitätsverteilung des Anregungslichts handeln kann.

Aus der WO 2015/097000 A1 ist ein Verfahren zum Bestimmen der Orte vereinzelter Moleküle in einer Probe bekannt, wobei sich die vereinzelten Moleküle in einem fluoreszenten Zustand befinden, in dem sie mit Anregungslicht zur Emission von Fluoreszenzlicht anregbar sind, und wobei Abstände der vereinzelten Moleküle der Substanz einen Mindestwert einhalten. Die vereinzelten Moleküle werden mit dem Anregungslicht zur Emission des Fluoreszenzlichts angeregt, wobei eine Intensitätsverteilung des Anregungslichts eine Nullstelle aufweist. Das Fluoreszenzlicht von den angeregten vereinzelten Molekülen der Substanz wird für verschiedene Positionen der Nullstelle der Intensitätsverteilung des Anregungslichts in der Probe registriert. Dabei sind Abstände zwischen nächstbenachbarten Positionen der Nullstelle nicht größer als der halbe Mindestwert des Abstands der vereinzelten Moleküle. Konkret wird die Probe mit der Nullstelle abgetastet, wobei ein Rastermaß beim Abtasten der Probe nicht größer als der halbe Mindestwert ist. Die Orte der vereinzelten Moleküle in der Probe werden aus einem Verlauf der Intensität des Fluoreszenzlichts von dem jeweiligen vereinzelten Molekül über den Positionen der Nullstelle der Intensitätsverteilung des Anregungslichts abgeleitet. Dabei kann eine Funktion mit Nullstelle an den Verlauf der Intensität des Lumineszenzlichts von dem jeweiligen vereinzelten Molekül angefittet werden; und der Ort des jeweiligen Moleküls kann der Position der Nullstelle der angefitteten Funktion gleichgesetzt werden. Die Funktion kann eine quadratische Funktion sein. Die angefittete Funktion kann aber auch individuell an den Intensitätsverlauf des Lumineszenzlichts von einem vereinzelten Molekül der jeweiligen Substanz als Antwort auf den Intensitätsverlauf des Anregungslichts im Umfeld seiner Nullstelle angepasst werden.

Bei dem aus der WO 2015/097000 A1 bekannten Verfahren wird das jeweilige vereinzelte Molekül, bevor es beim Abtasten der Probe in die Nähe der Nullstelle der Intensitätsverteilung des Anregungslichts gerät, den höheren Intensitäten der angrenzenden Intensitätsmaxima des Anregungslichts ausgesetzt. Diese Intensitäten überschreiten eine Sättigungsintensität des Anregungslichts, oberhalb derer es zu keiner Steigerung der Intensität des Lumineszenzlichts von dem jeweiligen vereinzelten Molekül mehr kommt, so dass dessen Verlauf bei einem Sättigungswert konstant und damit ohne Informationsinhalt ist. Entsprechend werden von jedem vereinzelten Molekül der Substanz sehr viele Photonen emittiert, bevor die Photonen emittiert werden, aus denen der Ort des Moleküls bestimmt wird. Hierdurch besteht eine erhebliche Gefahr des Bleichens des Moleküls, selbst wenn an jeder Position der Nullstelle des Anregungslichts nur eine begrenzte Anzahl von Photonen registriert wird, bevor die Nullstelle weiter verschoben wird.

Aus der DE 10 2010 028 138 A1 ist ein Verfahren zum Bestimmen der Verteilung einer Substanz in einem Messgebiet durch Abtasten mit einer Messfront bekannt. Über eine Tiefe der Messfront, die kleiner als die Beugungsgrenze bei der Wellenlänge eines optischen Signals ist, steigt die Intensität des optischen Signals derart an, dass ein Anteil der Substanz in einem Messzustand zunächst von nicht vorhanden anwächst und dann wieder auf nicht vorhanden abfällt. Die Messfront wird in Gegenrichtung zu dem Anstieg der Intensität des optischen Signals über das Messgebiet verschoben. Das Messsignal, bei dem es sich um Fluoreszenzlicht handeln kann, wird erfasst und der jeweiligen Position der Messfront in dem Messgebiet zugeordnet.

## AUFGABE DER ERFINDUNG

Der Erfindung liegt die Aufgabe zugrunde, ein Verfahren zum räumlich hochauflösenden Bestimmen des Orts eines vereinzelten, mit Anregungslicht zur Emission von Lumineszenzlicht anregbaren Moleküls in einer Probe aufzuzeigen, wobei das Molekül ist, bei dem die Anzahl der Photonen, zu deren Emission das vereinzelte Molekül angeregt werden muss, bezogen auf die erreichte Präzision verglichen mit den bekannten Verfahren zum räumlich hochauflösenden Bestimmen des Orts eines vereinzelten Moleküls deutlich verringert ist.

## LÖSUNG

In einer ersten, in Anspruch 1 definierten Ausführungsform der Erfindung wird die Aufgabe durch ein Verfahren zum räumlich hochauflösenden Bestimmen des Orts eines vereinzelten Moleküls in einer oder mehreren Raumrichtungen in einer Probe, wobei das Molekül mit Anregungslicht zur Emission von Lumineszenzlicht anregbar ist, gelöst, das folgende Merkmale aufweist: Das Anregungslichts wird mit einer Intensitätsverteilung auf die Probe gerichtet, die eine Nullstelle und Intensitätsanstiegsbereiche aufweist, welche in jeder der Raumrichtungen beidseitig an die Nullstelle angrenzen. Zu jeder von verschiedenen Positionen der Nullstelle in der Probe wird das von dem Molekül emittierte Lumineszenzlicht registriert, und der Ort des Moleküls in der Probe wird von den Intensitäten des zu den verschiedenen Positionen der Nullstelle registrierten Lumineszenzlichts abgeleitet. Dabei wird die Nullstelle an nicht mehr als n x 3 verschiedenen Positionen in der Probe angeordnet, um den Ort des Moleküls in den n Raumrichtungen von den zu den verschiedenen Positionen der Nullstelle registrierten Intensitäten des Lumineszenzlichts abzuleiten, wobei die verschiedenen Positionen, an denen die Nullstelle in der Probe angeordnet wird, in jeder Raumrichtung, in der der Ort des Moleküls in der Probe bestimmt wird, je eine Position auf beiden Seiten eines Zentrums eines begrenzten Ortsbereichs in der Probe umfassen, in dem das Molekül angeordnet ist.

In einer zweiten, in Anspruch 8 definierten Ausführungsform der Erfindung wird die Aufgabe durch ein Verfahren zum räumlich hochauflösenden Bestimmen des Orts eines vereinzelten Moleküls in einer oder mehreren Raumrichtungen in einer Probe, wobei das Molekül mit Anregungslicht zur Emission von Lumineszenzlicht anregbar ist, gelöst, das folgende Merkmale aufweist: Das Anregungslichts wird mit einer Intensitätsverteilung auf die Probe gerichtet, die eine Nullstelle und Intensitätsanstiegsbereiche aufweist, welche in jeder der Raumrichtungen beidseitig an die Nullstelle angrenzen. Die Nullstelle wird in jeder der Raumrichtungen in der Probe verschoben, wobei zu jeder Position der Nullstelle in der Probe das von dem Molekül emittierte Lumineszenzlichts registriert wird. Ein anfänglicher Ortsbereich in der Probe wird bestimmt, in dem das Molekül angeordnet ist. In jeder der Raumrichtungen wird mindestens eine anfängliche Position der Nullstelle so festgelegt, dass sie in der jeweiligen Raumrichtung auf einer Seite des anfänglichen Ortsbereichs liegt. Das Lumineszenzlicht wird zu den allen Raumrichtungen zugeordneten Positionen der Nullstelle quasi gleichzeitig registriert, indem die Nullstelle wiederholt zwischen den Positionen verschoben wird. Die Positionen der Nullstelle werden abhängig von den zu jeder der Positionen registrierten Photonen des Lumineszenzlichts sukzessive in den anfänglichen Ortsbereich hinein verschoben, so dass die Positionen der Nullstelle an den tatsächlichen Ort des Moleküls in der Probe angenähert und damit auf einen gegenüber dem anfänglichen Ortsbereich verkleinerten Ortsbereich des Moleküls eingeschränkt werden, dessen Abmessungen einer Präzision entsprechen, mit der der Ort des Moleküls bestimmt wird.

In einer dritten, in Anspruch 17 definierten Ausführungsform der Erfindung wird die Aufgabe durch ein Verfahren zum räumlich hochauflösenden Bestimmen des Orts eines vereinzelten Moleküls in einer oder mehreren Raumrichtungen in einer Probe, wobei das Molekül mit Anregungslicht zur Emission von Lumineszenzlicht anregbar ist, gelöst, das folgende Merkmale aufweist: Das Anregungslichts wird mit einer Intensitätsverteilung auf die Probe gerichtet, die in jeder der Raumrichtungen mindestens einen Intensitätsanstiegsbereich mit bekanntem streng monotonem Verlauf der Intensität des Anregungslichts über einem Abstand zu einem Aufpunkt der Intensitätsverteilung aufweist. Der Aufpunkt der Intensitätsverteilung wird in jeder der Raumrichtungen an verschiedenen Positionen in der Probe angeordnet. Zu jeder Position des Aufpunkts der Intensitätsverteilung in der Probe wird das von dem Molekül emittierte Lumineszenzlicht registriert, und der Ort des Moleküls in der Probe wird von Intensitäten des registrierten Lumineszenzlichts abgeleitet. Dazu wird ein anfänglicher Ortsbereich in der Probe bestimmt, in dem das Molekül angeordnet ist. Dann wird (i) in jeder der Raumrichtungen mindestens eine Position des Aufpunkts der Intensitätsverteilung so festgelegt, dass sich der mindestens eine Intensitätsanstiegsbereich in der jeweiligen Raumrichtung über den anfänglichen Ortsbereich erstreckt. Weiter wird (ii) aus Intensitätswerten des Lumineszenzlichts, die zu jeder der Raumrichtungen zwei Intensitätswerte umfassen, von welchen einer die Intensität des zu der mindestens einen Position des Aufpunkts der Intensitätsverteilung registrierten Lumineszenzlichts angibt, ein weiterer Ortsbereich in der Probe bestimmt, in dem das Molekül angeordnet ist und der kleiner als der anfängliche Ortsbereich ist, wobei der zweite Intensitätswert zu der jeweiligen Raumrichtung, in der der Ort des Moleküls bestimmt wird, eine Intensität des zu einer zweiten Position des Aufpunkts der Intensitätsverteilung registrierten Lumineszenzlichts ist, die in der jeweiligen Raumrichtung an anderer Stelle auf derselben Seite wie die mindestens eine Position des Aufpunkts der Intensitätsverteilung oder auf der der mindestens einen Position des Aufpunkts der Intensitätsverteilung gegenüberliegenden Seite des anfänglichen Ortsbereichs liegt, oder ein Sättigungswert der Intensität des Lumineszenzlichts von dem Molekül bei Anregung mit dem Anregungslicht ist. Die Schritte (i) und (ii) werden mindestens einmal unter Verwendung des weiteren Ortsbereichs als neuer anfänglicher Ortsbereich wiederholt.

Die Erfindung betrifft auch wiederholte Durchführungen der erfindungsgemäßen Verfahren zum Bestimmen des Orts einer Vielzahl von nacheinander vereinzelten Molekülen bzw. zum Tracken des vereinzelten Moleküls sowie Verwendungen eines STED-Rasterfluoreszenzlichtmikroskops zur Durchführung der erfindungsgemäßen Verfahren.

## DEFINITIONEN

Dass die erfindungsgemäßen Verfahren zum räumlich hochaufgelösten Bestimmen des Orts des vereinzelten Moleküls dient, bedeutet, wie sich aus der erreichbaren Präzision von 10 nm und deutlich besser unschwer besser ablesen lässt, dass insbesondere eine räumliche Auflösung deutlich unterhalb der Beugungsgrenze bei der Wellenlänge des Anregungslichts und auch des Lumineszenzlichts erreicht wird. In diesem Zusammenhang sei angemerkt, dass die Formulierung *"räumliche Auflösung"* hier als Synonym für die Präzision verwendet wird, mit der der Ort des jeweiligen vereinzelten Moleküls in der Probe bestimmt wird.

Dass die erfindungsgemäßen Verfahren zum Bestimmen des Orts eines vereinzelten Moleküls dient, bedeutet, wie bereits eingangs angesprochen wurde, dass der Ort des vereinzelten Moleküls einen Mindestabstand zu nächstbenachbarten gleichartigen Molekülen einhält, die mit demselben Anregungslicht zur Emission von Lumineszenzlicht im selben Wellenlängenbereich anregbar sind, so dass das Lumineszenzlicht von den nächstbenachbarten gleichartigen Molekülen nicht aufgrund verschiedener Wellenlängen getrennt werden kann. Dieser Mindestabstand ist bei allen erfindungsgemäßen Verfahren von der Größenordnung der Beugungsgrenze bei der Wellenlänge des Lumineszenzlichts oder kleiner. Tatsächlich kann der Mindestabstand wie bei dem aus der WO 2015/097000 A1 bekannten Verfahren auch erheblich kleiner als die Beugungsgrenze bei der Wellenlänge des Lumineszenzlichts sein, solange er nicht kleiner als eine Ausdehnung eines Intensitätsanstiegsbereichs der Intensitätsverteilung des Anregungslichts in der jeweiligen Raumrichtung ist, über der die Intensität des Anregungslichts unter einer Sättigungsintensität und damit die Intensität des Lumineszenzlichts von dem Molekül unterhalb eines Sättigungswerts bleibt. Wenn der Abstand des vereinzelten Moleküls zu nächstbenachbarten, mit dem Anregungslicht anregbaren Molekülen größer als die Beugungsgrenze bei der Wellenlänge des Lumineszenzlichts ist, kann das von dem vereinzelten Molekül emittierte Lumineszenzlicht mit einem räumlich auflösenden Detektor räumlich getrennt von dem Lumineszenzlicht registriert werden, das von ihm nächstbenachbarten Molekülen emittiert wird. Wenn der Abstand der vereinzelten Moleküle zumindest nicht kleiner als der von dem Intensitätsanstiegsbereich in Bezug auf die Intensität des Lumineszenzlichts von den Molekülen beeinflusste Bereich der Intensitätsverteilung des Anregungslichts ist, kann die Differenz der Intensität des Lumineszenzlichts zu dem Sättigungswert bei der Sättigungsintensität des Anregungslichts unmittelbar dem vereinzelten Molekül zugeordnet werden, weil sich das Molekül dann allein in diesem von dem Intensitätsanstiegsbereich beeinflussten Bereich befindet.

Dass das vereinzelte Molekül mit dem Anregungslicht zur Emission von Lumineszenzlicht anregbar ist, bedeutet, dass das vereinzelte Molekül photolumineszent ist. Konkret kann das vereinzelte Molekül fluoreszent, d. h. mit dem Anregungslicht zur Emission von Fluoreszenzlicht anregbar sein. An dieser Stelle sei angemerkt, dass die Angabe "lumineszent" oder auch "fluoreszent" hier nur angibt, das das vereinzelte Molekül mit dem Anregungslicht zur Emission von Lumineszenzlicht bzw. Fluoreszenzlicht anregbar ist, nicht aber, dass es bereits luminesziert bzw. fluoresziert, d. h. angeregt ist.

Dass das Anregungslicht in der ersten und zweiten Ausführungsform der Erfindung mit einer Intensitätsverteilung auf die Probe gerichtet wird, die eine Nullstelle und Intensitätsanstiegsbereiche aufweist, welche in jeder der Raumrichtungen beidseitig an die Nullstelle angrenzen, kann bedeuten, dass die Nullstelle mit den angrenzenden Intensitätsanstiegsbereichen durch in unterschiedlichem Abstand zu der Nullstelle unterschiedlich stark ausgeprägte destruktive Interferenz ausgeformt wird. Über jeden der an die Nullstelle angrenzenden Intensitätsanstiegsbereiche steigt die Intensität des Anregungslichts mit zunehmendem Abstand zu der Nullstelle streng monoton, das heißt kontinuierlich an.

Die Nullstelle kann eine durch Interferenz gebildete Ideale Nullstelle sein, in der die Intensität des Anregungslichts tatsächlich auf null zurückgeht. Eine geringe Restintensität des Anregungslichts in der Nullstelle ist jedoch unschädlich, zumal es nicht Ziel der Verfahren der ersten und zweiten Ausführungsform der Erfindung ist, die Nullstelle so in der Probe zu positionieren, dass ihre Position mit dem Ort des Moleküls in der Probe zusammenfällt. Aus demselben Grund kann die von den Intensitätsanstiegsbereichen begrenzte Nullstelle grundsätzlich auch durch in der jeweiligen Raumrichtung beabstandete gaußförmige Intensitätsverteilungen, konkret durch das zwischen diesen verbleibende Intensitätsminimum, ausgebildet werden.

Auch mit einer flächenförmigen Nullstelle mit nur in einer einzigen Raumrichtung verlaufenden Intensitätsanstiegsbereichen kann der Ort des Moleküls in der Probe in zwei oder allen drei Raumrichtungen hoch aufgelöst bestimmt werden. Ebenso kann mit einer linienförmigen Nullstelle mit nur in zwei Raumrichtungen verlaufenden Intensitätsanstiegsbereichen der Ort des vereinzelten Moleküls in der Probe nicht nur in diesen zwei sondern auch in allen drei Raumrichtungen hoch aufgelöst bestimmt werden. Dazu sind die Verfahren der ersten und zweiten Ausführungsform der Erfindung unter Ausrichtung des oder der Intensitätsanstiegsbereiche in unterschiedlichen Raumrichtungen durchzuführen.

## BESCHREIBUNG VON AUSFÜHRUNGSFORMEN DER ERFINDUNG

Die Erfindung geht aus von einem aus der WO 2015/097000 A1 bekannten Verfahren zum räumlich hochauflösenden Bestimmen des Orts eines vereinzelten Moleküls in einer oder mehreren Raumrichtungen in einer Probe, wobei das Molekül mit Anregungslicht zur Emission von Lumineszenzlicht anregbar ist.

In einer ersten Ausführungsform der Erfindung wird das Anregungslicht wie bei dem Ausgangsverfahren mit einer Intensitätsverteilung auf die Probe gerichtet, die eine Nullstelle und Intensitätsanstiegsbereiche aufweist, welche in jeder der Raumrichtungen beidseitig an die Nullstelle angrenzen. Zu jeder von verschiedenen Positionen der Nullstelle in der Probe wird das von dem Molekül emittierte Lumineszenzlicht registriert; und der Ort des Moleküls in der Probe wird von Intensitäten des zu den verschiedenen Positionen der Nullstelle registrierten Lumineszenzlichts abgeleitet.

Abweichend von dem bekannten Verfahren wird die Nullstelle in der ersten Ausführungsform der Erfindung an nicht mehr als n x 3 verschiedenen Positionen in der Probe angeordnet, um den Ort des Moleküls in den n Raumrichtungen von den registrierten Intensitäten des Lumineszenzlichts abzuleiten. Tatsächlich hat es sich herausgestellt, dass der Ort des Moleküls in der Probe in den n Raumrichtungen bei sinnvoller Wahl der Positionen der Nullstelle in der Probe aus nicht mehr als den zu n x 3 verschiedenen Positionen registrierten Intensitäten des Lumineszenzlichts mit einer Präzision abgeleitet werden kann, die der beim räumlichen Abtasten eines den Ort des Moleküls umfassenden Ortsbereich in der Probe um nichts nachsteht. Zudem kann bei geschickter Wahl der Positionen, wie sie im Folgenden näher erläutert wird, diese Präzision schon erreicht werden, wenn die Nullstelle an nicht mehr als (n x 2) + 1 oder sogar nur an n + 2 verschiedenen Positionen in der Probe angeordnet wird. Dabei ist es häufig nicht einmal erforderlich, die Anzahl der Photonen des zu jeder Position der Nullstelle in der Probe registrierten Lumineszenzlichts gegenüber der Anzahl von Photonen zu erhöhen, die sinnvoller Weise beim räumlichen Abscannen der Probe an jeder Position der Nullstelle registriert wird.

So wird der Ort des vereinzelten Moleküls in der Probe in der ersten Ausführungsform der Erfindung in jeder Raumrichtung sehr schnell, d. h. auf Basis einer geringen Anzahl von von dem vereinzelten Molekül emittierten und registrierten Photonen, bestimmt. Die Präzision, mit der der Ort des vereinzelten Moleküls bestimmt wird, kann problemlos 10 nm und damit die Beugungsgrenze bei der Wellenlänge des Lumineszenzlichts deutlich unterschreiten.

Wie schon angesprochen wurde, wird die Probe in der ersten Ausführungsform der Erfindung auch in einem begrenzten Ortsbereich der Probe, in dem das Molekül vermutet wird, nicht räumlich abgetastet, sondern die Nullstelle wird nur in wenigen Positionen relativ zu diesem Ortsbereich positioniert.

Beim Ableiten des Orts des Moleküls in der Probe von den zu den verschiedenen Positionen der Nullstelle registrierten Intensitäten des Lumineszenzlichts, ist die Abhängigkeit der Intensität des Lumineszenzlichts, das von dem vereinzelten Molekül emittiert wird, von dem Abstand des vereinzelten Moleküls zu der Nullstelle der Intensitätsverteilung des Anregungslichts zu berücksichtigen. Diese Abhängigkeit hängt von dem Verlauf der Intensität des Anregungslichts in den an die Nullstelle angrenzenden Intensitätsanstiegsbereich und auch von dem photophysikalischen Prozess ab, der der Anregung des Moleküls zur Emission des Lumineszenzlichts zugrunde liegt. So ergibt sich bei einer durch destruktive Interferenz gebildeten Nullstelle und einer Photolumineszenz des Moleküls aufgrund eines Einphotonenprozesses näherungsweise eine quadratische Abhängigkeit der Intensität des von dem Molekül emittierten Lumineszenzlichts von dessen Abstand zu der Nullstelle. Bei einer Photolumineszenz auf Basis eines Zweiphotonenprozesses ist die Abhängigkeit noch ausgeprägter und folgt einer Funktion $x^4$. Faktisch muss bei der ersten Ausführungsform der Erfindung der Verlauf der Intensität des Anregungslichts in den an die Nullstellen angrenzenden Intensitätsanstiegsbereichen nur insoweit bekannt sein, wie er sich auf die Intensität des Lumineszenzlichts von dem Molekül auswirkt. D. h., die Abhängigkeit der Intensität des Lumineszenzlichts vom Abstand des Moleküls zu der Nullstelle muss bekannt sein, um sie beim Ableiten des Orts des Moleküls in der Probe berücksichtigen zu können. Diese Abhängigkeit lässt sich aber leicht bestimmen, beispielsweise empirisch durch einmaliges Abtasten der Umgebung eines vereinzelten Moleküls mit der Nullstelle in kleinen Schritten.

Konkret kann der Ort des Moleküls von den zu den verschiedenen Positionen der Nullstelle registrierten Intensitäten des Lumineszenzlichts abgeleitet werden, indem an diese Intensitäten eine Funktion angefittet wird, die den Verlauf der Intensität des Lumineszenzlichts von dem Molekül über dem Abstand des Moleküls von der Nullstelle in den verschiedenen Raumrichtungen beschreibt und eine Nullstelle aufweist. Der Ort des Moleküls kann der Lage der Nullstelle der angefitteten Funktion in der Probe gleichgesetzt werden.

Dass der Ort des Moleküls von den zu den verschiedenen Positionen der Nullstelle registrierten Intensitäten des Lumineszenzlichts abgeleitet wird, schließt nicht nur die Möglichkeit ein, verschiedene Raten von Photonen des Lumineszenzlichts zu berücksichtigen, sondern auch die Möglichkeit, zeitliche Abstände der registrierten Photonen zu betrachten. Dabei versteht es sich, dass der Mittelwert der zeitlichen Abstände der registrierten Photonen gleich dem Kehrwert der Rate der zu einer Position der Nullstelle registrierten Photonen des Lumineszenzlichts ist.

Zusätzlich zu den Intensitäten des zu den verschiedenen Positionen der Nullstelle registrierten Lumineszenzlichts kann beim Ableiten des Orts des Moleküls ein Maß für die relative Leuchtstärke des vereinzelten Moleküls berücksichtigt werden. Bei diesem Maß kann es sich konkret um eine Maximalintensität des Lumineszenzlichts von dem Molekül bei Anregung mit dem Anregungslicht oder um einen hiermit unmittelbar korrelierten Intensitätswert handeln. Die Maximalintensität oder der damit korrelierte Intensitätswert kann für das jeweilige vereinzelte Molekül konkret gemessen oder auch für alle potentiellen vereinzelten Moleküle mit einem bestimmten Wert abgeschätzt werden.

Um mit einer besonders kleinen Anzahl von verschiedenen Positionen auszukommen, an denen die Nullstelle in der Probe angeordnet wird, werden die verschiedenen Positionen so angeordnet, dass sie in jeder Raumrichtung, in der der Ort des Moleküls in der Probe bestimmt wird, je eine Position auf beiden Seiten eines Zentrums des Ortsbereichs in der Probe umfassen, in dem das Molekül angeordnet ist. Dies bedeutet jedoch nicht, dass je Raumrichtung zwei separate Positionen der Nullstelle vorgesehen werden müssen. So umfassen auch drei, in den Ecken eines insbesondere gleichschenkligen Dreieckes angeordnete Positionen in einer Ebene in jeder beliebigen Raumrichtung innerhalb der Ebene mindestens zwei Positionen, die auf unterschiedlichen Seiten des Mittelpunkts des Dreiecks angeordnet sind. Entsprechend verhält es sich mit einem gleichseitigen Tetraeder in Bezug auf alle möglichen Raumrichtungen.

Bei der ersten Ausführungsform der Erfindung ist es weiterhin bevorzugt, wenn die verschiedenen Positionen, an denen die Nullstelle in der Probe angeordnet wird, in jeder Raumrichtung, in der der Ort des Moleküls in der Probe bestimmt wird, neben den beiden Positionen auf beiden Seiten des Zentrums des Ortsbereichs eine Position in dem Zentrum dieses Ortsbereichs umfassen. Diese eine Position im Zentrum des Ortsbereichs kann dabei für alle Raumrichtungen dieselbe sein.

Konkret können die verschiedenen Positionen, an denen die Nullstelle in der Probe angeordnet wird, in dem Fall, dass der Ort des Moleküls in zwei Raumrichtungen bestimmt wird, eine zentrale Position und drei periphere Positionen, also insgesamt vier Positionen sein, wobei die peripheren Positionen in einer von den beiden Raumrichtungen aufgespannten und durch die zentrale Position verlaufenen Ebene äquidistant auf einem Kreisbogen um die zentrale Position angeordnet sind. Anders gesagt liegen die drei peripheren Positionen in den Ecken eines gleichseitigen Dreiecks, und die zentrale Position liegt im Mittelpunkt des Dreiecks.

Wenn der Ort des Moleküls in allen drei Raumrichtungen bestimmt wird, können die verschiedenen Positionen, an denen die Nullstelle in der Probe angeordnet wird, eine zentrale Position und vier periphere Positionen sein, wobei die peripheren Positionen äquidistant auf einer Kugelschale um die zentrale Position angeordnet sind. Anders gesagt liegen die peripheren Positionen dann in den Ecken eines gleichseitigen Tetraeders, und die zentrale Position liegt im Mittelpunkt des Tetraeders.

Wie bereits angesprochen wurde, sollte sich der gesamte Ortsbereich der Probe, in dem das Molekül vermutet wird, relativ zu jeder Position der Nullstelle in einem Bereich der Intensitätsverteilung des Anregungslichts befinden, in dem die Intensitäten in den an die Nullstelle angrenzenden Intensitätsanstiegsbereichen unter der Sättigungsintensität des Anregungslichts bleiben, über der eine weitere Erhöhung der Intensität des Anregungslichts keine höhere Intensität des Lumineszenzlichts von dem vereinzelten Molekül mehr zur Folge hat. Bevorzugt ist es bei der ersten Ausführungsform der Erfindung, wenn eine maximale Intensität, d. h. ein absolutes Intensitätsniveau des Anregungslichts jeweils so eingestellt wird, dass ein maximaler Abstand jeder Position der Nullstelle zu jedem Punkt zwischen den Positionen der Nullstelle in der Probe nicht größer als eine Ausdehnung jedes Intensitätsanstiegsbereichs in Richtung des Abstands ist. Noch mehr bevorzugt ist der maximale Abstand nicht größer als eine Ausdehnung jedes Intensitätsanstiegsbereichs in Richtung des Abstands, über der die Intensität des Anregungslichts bis auf 90 % einer Sättigungsintensität des Anregungslichts ansteigt.

Bei der ersten Ausführungsform der Erfindung können die an die Nullstelle angrenzenden Intensitätsanstiegsbereiche rotationssymmetrisch um die Nullstelle ausgebildet sein. Zumindest kann diese rotationssymmetrische Ausbildung in einer Hauptebene orthogonal zu der Richtung vorliegen, in der das Anregungslicht in die Probe gerichtet wird. Es ist aber auch möglich, das Anregungslicht hinsichtlich seiner Wellenlänge und/oder Polarisation und/oder die an die Nullstelle angrenzenden Intensitätsbereiche hinsichtlich des Verlaufs der Intensität des Anregungslichts in den verschiedenen Raumrichtungen abhängig von derjeweiligen Position der Nullstelle unterschiedlich auszubilden. Hiermit kann insbesondere das Ziel verfolgt werden, den Ort des Moleküls an jedem Punkt zwischen den Positionen der Nullstelle in jeder Raumrichtung mit derselben Präzision zu bestimmen. Es versteht sich zwar, dass hiermit die in bestimmten Raumrichtungen maximal möglichen Präzisionen bei der Bestimmung des Orts des vereinzelten Moleküls nicht ausgeschöpft werden. Umgekehrt erscheint jedes vereinzelte Molekül bei Wiedergabe seines Orts mit einem Punkt von der Ausdehnung der erreichten Präzision nur dann als kleiner Kreis beziehungsweise Kugel, wenn diese Präzision in allen Raumrichtungen gleich ist.

Bei der ersten Ausführungsform der Erfindung kann das Lumineszenzlicht zu den verschiedenen Positionen der Nullstelle in der Probe quasi gleichzeitig registriert werden, indem die Nullstelle wiederholt zwischen den Positionen in der Probe verschoben wird. Zu diesem Zweck kann dieselbe Intensitätsverteilung des Anregungslichts mit Hilfe eines Scanners verschoben werden. Es ist aber auch möglich, die Intensitätsverteilung für jede der verschiedenen Positionen ihrer Nullstelle in der Probe neu auszubilden, beispielsweise mit Hilfe eines im Strahlengang des Anregungslichts angeordneten Spatial Light Modulators (SLM). Dann kann zumindest insoweit auf einen Scanner verzichtet werden. Weiterhin ist es möglich, die Nullstelle in der Probe zu verschieben, indem das Anregungslicht nacheinander durch ganz oder teilweise verschiedene Lichtquellen bereitgestellt wird. Bei allen diesen möglichen Ausgestaltungen der ersten Ausführungsform der Erfindung kann die Nullstelle zwischen ihren Positionen in der Probe wiederholt hin und her verschoben werden. Es versteht sich, dass dabei das zu den einzelnen Positionen der Nullstelle gehörige Lumineszenzlicht von dem Molekül getrennt registriert wird. Das quasi gleichzeitige Registrieren des Lumineszenzlichts zu den verschiedenen Positionen der Nullstelle hat den Vorteil, dass das Beaufschlagen der Probe mit dem Anregungslicht und das Registrieren des Lumineszenzlichts von der Probe sofort abgebrochen werden kann, wenn es die zu den einzelnen Positionen der Nullstelle registrierten Photonen des Lumineszenzlichts bereits erlauben, den Ort des Moleküls mit einer gewünschten Präzision von den zu den verschiedenen Positionen der Nullstelle registrierten Intensitäten des Lumineszenzlichts abzuleiten.

Ein entsprechendes Abbruchkriterium kann zwar auch bei einem kontinuierlichen Registrieren des Lumineszenzlichts zu jeder Position der Nullstelle in der Probe angewandt werden. Es gibt jedoch Fälle, in denen die Betrachtung der Intensitäten des zu allen Nullstellen registrierten Lumineszenzlichts schon nach insgesamt weniger Photonen von dem Molekül erkennen lässt, dass der Ort des Moleküls mit einer gewünschten Präzision ableitbar ist.

Wenn bei der ersten Ausführungsform der Erfindung das Lumineszenzlicht zu den Positionen der Nullstelle der Intensitätsverteilung des Anregungslichts jeweils nur solange registriert wird, bis die Intensitäten des registrierten Lumineszenzlichts zu den Positionen mit einer ausreichenden Genauigkeit erfasst sind, dass der Ort des Moleküls mit einer mit einer gewünschten Präzision ableitbar ist, kann diese gewünschte Präzision im Bereich von 20 nm oder kleiner liegen. Sie kann auch kleiner als 10 nm sein. Auch eine gewünschte Präzision in der Größenordnung von 1 nm und damit herab bis zu 0,5 nm ist möglich. Grundsätzlich weist die erste Ausführungsform der Erfindung keine inhärente Grenze für die bei der Bestimmung des Orts des vereinzelten Moleküls in der Probe erreichbare Präzision auf. Im jeweiligen Einzelfall auftretende Verhältnisse, wie beispielsweise ein abnehmendes Signal-zu-Rauschen-Verhältnis können jedoch die praktisch erreichbare Präzision begrenzen.

Eine wiederholte Durchführung der ersten Ausführungsform der Erfindung mit kleiner werdenden Abständen der Positionen der Nullstelle in der Probe, wobei die Positionen der Nullstelle in der Probe bei jeder Wiederholung des Verfahrens um den Ort des Moleküls in der Probe herum angeordnet werden, der bei der vorherigen Durchführung des Verfahrens von den registrierten Intensitäten des Lumineszenzlichts abgeleitet wurde, kann zur iterativen Steigerung der mit der ersten Ausführungsform der Erfindung erreichten Präzision dienen. Mit den kleiner werdenden Abständen der Positionen der Nullstelle in der Probe kann die maximale Intensität des Anregungslichts erhöht werden. Auf diese Weise kann der kleiner werdende begrenzte Ortsbereich, in das Molekül mutmaßlich befindet, wieder auf die volle Bandbreite der unterschiedlichen Intensitäten des Anregungslichts in den Intensitätsanstiegsbereichen und damit auf die volle Bandbreite der unterschiedlichen Intensitäten des Lumineszenzlichts von dem vereinzelten Molekül aufgeteilt werden.

In der zweiten Ausführungsform der Erfindung wird das Anregungslicht wie bei dem aus der WO 2015/097000 A1 bekannten Ausgangsverfahren mit einer Intensitätsverteilung auf die Probe gerichtet, die eine Nullstelle und Intensitätsanstiegsbereiche aufweist, welche in jeder der Raumrichtungen beidseitig an die Nullstelle angrenzen. Diese Nullstell wird in jeder der Raumrichtungen in der Probe verschoben, wobei zu jeder Position der Nullstelle in der Probe das von dem Molekül emittierte Lumineszenzlicht registriert wird.

Zusätzlich zu dem bekannten Verfahren wird in der zweiten Ausführungsform der Erfindung zunächst ein anfänglicher Ortsbereich in der Probe bestimmt, in dem das Molekül angeordnet ist. Dann wird in jeder der Raumrichtungen mindestens eine anfängliche Position der Nullstelle so festgelegt, dass sie in der jeweiligen Raumrichtung auf einer Seite des anfänglichen Ortsbereichs liegt. Das Lumineszenzlicht zu den allen Raumrichtungen zugeordneten Positionen der Nullstelle wird quasi gleichzeitig registriert, indem die Nullstelle wiederholt zwischen ihren jeweiligen Positionen hin und her verschoben wird; und die die Positionen der Nullstelle werden abhängig von den zu jeder der Positionen registrierten Photonen des Lumineszenzlichts sukzessive in den anfänglichen Ortsbereich hinein verschoben.

Auf diese Weise werden die allen Raumrichtungen zugeordneten Positionen der Nullstelle sehr schnell, d. h. auf Basis einer geringen Anzahl von von dem vereinzelten Molekül emittierten und registrierten Photonen, an den tatsächlichen Ort des Moleküls in der Probe angenähert und damit auf einen gegenüber dem anfänglichen Ortsbereich stark verkleinerten Ortsbereich eingeschränkt. Die Abmessungen dieses stark verkleinerten Ortsbereichs entsprechen einer Präzision, mit der der Ort des vereinzelten Moleküls bestimmt wird. Sie können problemlos 10 nm und damit die Beugungsgrenze bei der Wellenlänge des Lumineszenzlichts deutlich unterschreiten.

In der zweiten Ausführungsform der Erfindung wird die Probe auch in dem anfänglichen Ortsbereich des Moleküls nicht räumlich abgetastet, sondern die Positionen des Aufpunkts der Intensitätsverteilung werden aufgrund der zu den bisherigen Positionen des Aufpunkts der Intensitätsverteilung registrierten Photonen des Lumineszenzlichts intelligent, d. h. unter maximaler Ausnutzung aller bislang aus den registrierten Photonen des Lumineszenzlichts verfügbaren Informationen über den tatsächlichen Ort des vereinzelten Moleküls und damit regelmäßig in nur einer Richtung, zu dem tatsächlichen Ort des Moleküls hin verschoben. Das erfindungsgemäße Verschieben der Positionen der Nullstelle erfolgt dementsprechend auch nicht nach einem trial-and-error-Verfahren, sondern immer - wenn auch nicht notwendigerweise auf dem kürzesten Weg - zu dem tatsächlichen Ort des Moleküls in der Probe hin.

Bei dem sukzessiven Verschieben der Nullstelle kann ein Maß für die relative Leuchtstärke des vereinzelten Moleküls berücksichtigt werden, beispielsweise um die Entfernung festzulegen über die die Nullstelle jeweils verschoben wird. Bei diesem Maß kann es sich konkret um eine Maximalintensität des Lumineszenzlichts von dem Molekül bei Anregung mit dem Anregungslicht oder um einen hiermit unmittelbar korrelierten Intensitätswert handeln. Die Maximalintensität oder der damit korrelierte Intensitätswert kann für das vereinzelte Molekül konkret gemessen oder auch für alle potentiellen vereinzelten Moleküle mit einem bestimmten Wert abgeschätzt werden.

In der zweiten Ausführungsform der Erfindung wird das Lumineszenzlicht zu den jeweiligen verschiedenen Positionen der Nullstelle in der Probe quasi gleichzeitig registriert, indem der Aufpunkt wiederholt zwischen den jeweiligen Positionen in der Probe verschoben wird. Zu diesem Zweck kann dieselbe Intensitätsverteilung des Anregungslichts mit Hilfe eines Scanners verschoben werden. Es ist aber auch möglich, die Intensitätsverteilung für jede der verschiedenen Positionen ihrer Nullstelle in der Probe neu auszubilden, beispielsweise mit Hilfe eines im Strahlengang des Anregungslichts angeordneten Spatial Light Modulators (SLM). Dann kann zumindest insoweit auf einen Scanner verzichtet werden. Weiterhin ist es möglich, die Nullstelle in der Probe zu verschieben, indem das Anregungslicht nacheinander durch ganz oder teilweise verschiedene Lichtquellen bereitgestellt wird. Bei allen diesen Ausgestaltungen der zweiten Ausführungsform der Erfindung kann die Nullstelle sehr schnell zwischen ihren Positionen in der Probe wiederholt hin und her verschoben werden. Es versteht sich, dass dabei das zu den einzelnen Positionen der Nullstelle gehörige Lumineszenzlicht von dem Molekül getrennt registriert wird. Durch das quasi gleichzeitige Registrieren des Lumineszenzlichts zu den verschiedenen Positionen des Aufpunkts der Intensitätsverteilung des Anregungslichts, kann das Beaufschlagen der Probe mit dem Anregungslicht und das Registrieren des Lumineszenzlichts von der Probe sofort abgebrochen werden, wenn es die zu den einzelnen Positionen des Aufpunkts der Intensitätsverteilung des Anregungslichts registrierten Photonen des Lumineszenzlichts bereits erlauben, die Positionen näher an den tatsächlichen Ort des Moleküls in der Probe heran zu schieben.

In der zweiten Ausführungsform der Erfindung können die Positionen der Nullstelle konkret abhängig von den Raten oder zeitlichen Abständen der zu jeder der Positionen registrierten Photonen des Lumineszenzlichts sukzessive in den anfänglichen Ortsbereich hinein verschoben werden. Dabei versteht es sich, dass der Mittelwert der zeitlichen Abstände der registrierten Photonen gleich dem Kehrwert der Rate der zu der jeweiligen Position des Aufpunkts der Intensitätsverteilung des Anregungslichts registrierten Photonen des Lumineszenzlichts ist.

Das gezielte Verschieben der Positionen der Nullstelle in den anfänglichen Bereich kann beispielsweise zunächst mit der Maßgabe erfolgen, die Raten der Photonen des zu den einzelnen Positionen registrierten Lumineszenzlichts beziehungsweise die entsprechenden zeitlichen Abstände der Photonen aneinander anzupassen. Dazu kann die Position der Nullstelle mit der größten Rate beziehungsweise den kleinsten zeitlichen Abständen der dazu registrierten Photonen des Lumineszenzlichts in Richtung der Positionen der Nullstelle mit den kleinsten Raten beziehungsweise den größten zeitlichen Abständen verschoben werden. Parallel oder anschließend können alle Positionen der Nullstelle in den anfänglichen Ortsbereich hinein verschoben werden, um die Rate beziehungsweise die zeitlichen Abstände der zu ihnen registrierten Photonen zu minimieren beziehungsweise zu maximieren. Wenn beispielsweise die Raten beziehungsweise die zeitlichen Abstände der zu allen Positionen der Nullstelle registrierten Photonen bereits aneinander angeglichen sind, können diese Positionen in Richtung ihres gemeinsamen Mittelpunkts weiter in den Ortsbereich hinein verschoben werden, um die Raten zu minimieren beziehungsweise die zeitlichen Abstände der Photonen zu maximieren.

Eine Anzahl der Positionen der Nullstelle, wie sie gegenüber dem anfänglichen Ortsbereich festgelegt und dann erfindungsgemäß verschoben werden, kann zwischen n und 2n liegen, wobei n die Anzahl der Raumrichtungen ist, in denen das Molekül lokalisiert wird. D. h., die Anzahl der Positionen der Nullstelle kann sehr klein sein. Mindestens ist eine Position der Nullstelle zu jeder der Raumrichtungen nötig, in denen der Ort des Moleküls in der Probe zu bestimmen ist, um die Gesamtheit der Positionen auf Basis der zu ihnen registrierten Photonen des Lumineszenzlichts gezielt verschieben zu können. Mit zwei Positionen der Nullstelle in jeder Raumrichtung kann der tatsächliche Ort des Moleküls in der Probe eingeschachtelt werden, wie noch näher erläutert werden wird.

In der zweiten Ausführungsform der Erfindung kann der Ort des Moleküls in der Probe in mindestens einer der Raumrichtungen mit der der jeweiligen Raumrichtung zugeordneten Position der Nullstelle gleichgesetzt werden, in der eine Rate der Photonen des von dem Molekül emittierten Lumineszenzlichts minimiert ist. Bei dieser Ausgestaltung der zweiten Ausführungsform der Erfindung ist die entsprechende Nullstelle mit dem Molekül bestmöglich in der Probe zur Deckung zu bringen.

Der Ort des Moleküls kann aber auch in mindestens einer der Raumrichtungen aus einer Rate oder aus zeitlichen Abständen der Photonen des Lumineszenzlichts abgeleitet werden, die zu mindestens einer der der jeweiligen Raumrichtung zugeordneten Positionen der Nullstelle registriert werden.

Dabei ist die Abhängigkeit der Rate bzw. der zeitlichen Abstände der Photonen des Lumineszenzlichts, von dem räumlichen Abstand des vereinzelten Moleküls zu der Nullstelle der Intensitätsverteilung des Anregungslichts zu berücksichtigen. Diese Abhängigkeit hängt von dem Verlauf der Intensität des Anregungslichts in den an die Nullstelle angrenzenden Intensitätsanstiegsbereichen und auch von dem photophysikalischen Prozess ab, der der Anregung des Moleküls zur Emission des Lumineszenzlichts zugrunde liegt. So ergibt sich bei einem an eine durch destruktive Interferenz gebildeten Nullstelle angrenzenden Intensitätsanstiegsbereich und einer Photolumineszenz auf Basis eines Einphotonenprozesses näherungsweise eine quadratische Abhängigkeit der Intensität des von dem Molekül emittierten Lumineszenzlichts von dessen Abstand zu der Nullstelle. Bei einer Photolumineszenz auf Basis eines Zweiphotonenprozesses ist die Abhängigkeit noch ausgeprägter und folgt einer Funktion x4. Faktisch muss dazu der Verlauf der Intensität des Anregungslichts in dem Intensitätsanstiegsbereich nur insoweit bekannt sein, wie er sich auf die Intensität des Lumineszenzlichts von dem Molekül auswirkt. D. h., die Abhängigkeit der Intensität des Lumineszenzlichts vom Abstand des Moleküls zu der Nullstelle der Intensitätsverteilung des Anregungslichts muss bekannt sein, um sie bei der Bestimmung des tatsächlichen Orts des Moleküls in der Probe berücksichtigen zu können. Diese Abhängigkeit lässt sich aber leicht bestimmen, beispielsweise empirisch durch Abtasten der Umgebung des Moleküls mit der Nullstelle in kleinen Schritten.

Beim Ableiten des tatsächlichen Ort des Moleküls in der Probe aus der Rate oder den zeitlichen Abständen der Photonen des Lumineszenzlichts, die zu mindestens einer der der jeweiligen Raumrichtung zugeordneten Positionen der Nullstelle registriert werden, kann eine weitere Rate oder können weitere zeitliche Abstände von Photonen des Lumineszenzlichts berücksichtigt werden. Hierbei kann es sich um eine weitere Rate oder weitere zeitliche Abstände von Photonen des Lumineszenzlichts handeln, die zu einer weiteren der jeweiligen Raumrichtung zugeordneten Position der Nullstelle registriert werden. Dabei ist auch der Abstand der Positionen der Nullstelle in der jeweiligen Raumrichtung zu berücksichtigen. Alternativ oder zusätzlich kann beim Ableiten des Orts des Moleküls in der Probe aus der Rate oder den zeitlichen Abständen der Photonen des zu der mindestens einen Position der Nullstelle registrierten Lumineszenzlichts auch das schon angesprochene Maß für die relative Leuchtstärke des vereinzelten Moleküls berücksichtigt werden.

In einer Ausgestaltung der zweiten Ausführungsform der Erfindung umfassen die anfänglichen Positionen der Nullstelle zu jeder der Raumrichtungen zwei Positionen, die in der jeweiligen Raumrichtung auf beiden Seiten des anfänglichen Ortsbereichs liegen. Durch das sukzessive Verschieben der allen Raumrichtungen zugeordneten Positionen der Nullstelle abhängig von den zu allen Positionen bestimmten Raten oder zeitlichen Abständen der Photonen des Lumineszenzlichts wird dann ein zwischen den Positionen der Nullstelle verbleibender Ortsbereich des Moleküls sukzessive eingeengt. Dabei müssen für jede der Raumrichtungen nicht zwei separate anfängliche Positionen der Nullstelle festgelegt werden. Vielmehr kann eine der anfänglichen Positionen der Nullstelle auch mehreren Raumrichtungen zugeordnet sein. So können zum Beispiel zur Bestimmung des Orts des Moleküls in zwei Raumrichtungen die anfänglichen Positionen der Nullstelle in einer von diesen beiden Raumrichtungen aufgespannten Ebene in den Ecken eines Dreiecks liegen, also insgesamt nur drei Positionen umfassen. Entsprechend können die anfänglichen Positionen der Nullstelle zur Bestimmung des Orts des Moleküls in drei Raumrichtungen in den Ecken eines Tetraeders liegen. Grundsätzlich sind natürlich auch zwei separate Positionen der Nullstelle je Raumrichtung möglich, in der der Ort des Moleküls in der Probe bestimmt wird. Unter dem Gesichtspunkt, den Ort des Moleküls in der Probe mit möglichst wenig Photonen des Lumineszenzlichts zu bestimmen, ist die damit größere Zahl der Positionen der Nullstelle in der Probe, zu denen das Lumineszenzlicht registriert wird, aber nicht unbedingt bevorzugt.

Insbesondere wenn die anfänglichen Positionen der Nullstelle zu jeder der Raumrichtungen zwei Positionen umfassen, die in der jeweiligen Raumrichtung auf beiden Seiten des anfänglichen Ortsbereichs liegen, ist es bevorzugt, wenn die in jeder der Raumrichtungen an die Nullstelle angrenzenden Intensitätsbereiche symmetrisch zu der Nullstelle ausgebildet sind. Noch mehr bevorzugt sind die Intensitätsanstiegsbereiche in allen Raumrichtungen, in denen die Positionen des Moleküls in der Probe bestimmt wird, rotationssymmetrisch um die Nullstelle ausgebildet.

Der zwischen den Positionen der Nullstelle verbleibende Ortsbereich des Moleküls kann solange sukzessive eingeengt werden, bis seine Abmessungen nicht mehr größer als eine vorgegebene Präzision sind. Diese vorgegebene Präzision kann im Bereich von 20 nm oder kleiner liegen. Sie kann auch kleiner als 10 nm sein. Selbst eine vorgegebene Präzision in der Größenordnung von 1 nm und damit herab bis zu 0,5 nm ist möglich. Grundsätzlich weist die zweite Ausführungsform der Erfindung keine inhärente Grenze für die bei der Bestimmung des Orts des vereinzelten Moleküls in der Probe erreichbare Präzision auf. Im jeweiligen Einzelfall auftretende Verhältnisse, wie beispielsweise ein abnehmendes Signal-zu-Rauschen-Verhältnis können jedoch die praktisch erreichbare Präzision begrenzen.

So kann als Abbruchkriterium für das weitere Verschieben der Nullstellen bei der zweiten Ausführungsform der Erfindung auch das Unterschreiten eines vorgegebenen Signal-zu-Rauschen-Verhältnisses festgelegt werden. Dieses Signal-zu-Rauschen-Verhältnis kann durch ein Verkleinern einer Lochblende vor einem Punktdetektor verbessert werden, mit dem das von dem vereinzelten Molekül emittierte Lumineszenzlicht konfokal zu der jeweiligen Position der Nullstelle in der Probe registriert wird. Dieses Verkleinern der Lochblende geht mit einer Verringerung der Ausbeute an registrierten Photonen gegenüber den von dem Molekül emittierten Photonen des Lumineszenzlichts einher. Es kann daher auf die letzten Positionen der Nullstelle in der unmittelbaren Nähe des Orts des Moleküls in der Probe beschränkt werden, an denen das Signal-zu-Rauschen-Verhältnis typischerweise kritisch wird.

Bei der zweiten Ausführungsform der Erfindung kann mindestens eine der allen Raumrichtungen, in denen der Ort des Moleküls in der Probe bestimmt wird, zugeordneten Positionen der Nullstelle verschoben werden, sobald an den bisherigen Positionen im Mittel p Photonen des Lumineszenzlichts registriert wurden, wobei p vergleichsweise klein ist oder sogar sehr klein sein kann. Konkret kann p einen Wert haben, der nicht größer als 30, nicht größer als 20, nicht größer 10 oder sogar nicht größer als 5 ist. Es versteht sich, dass von dem Wert von p abhängt, wie weit die mindestens eine der Positionen sinnvoller Weise verschoben werden kann, weil p nach den Grundsätzen der Statistik die Genauigkeit bestimmt, mit der die Raten beziehungsweise die zeitlichen Abstände der Photonen des Lumineszenzlichts zu den einzelnen Positionen bestimmt werden können.

Alternativ oder zusätzlich kann mindestens eine der allen Raumrichtungen zugeordneten Positionen der Nullstelle verschoben werden, sobald an den bisherigen Positionen insgesamt n x q Photonen des Lumineszenzlichts registriert wurden, wobei n die Anzahl der Raumrichtung ist, in welchen der Ort des Moleküls in der Probe bestimmt wird. Auch q kann dabei vergleichsweise klein sein. Konkret kann q gleich 50 oder kleiner oder gleich 25 oder kleiner oder sogar gleich 5 oder kleiner sein. Auch hier gilt wieder, dass von dem Wert von q abhängt, wie weit die mindestens eine Position der Nullstelle beim Erreichen von n x q registrierten Photonen sinnvoller Weise verschoben werden kann.

In einer weiteren Ausgestaltung der zweiten Ausführungsform der Erfindung wird die Position jeder Nullstelle verschoben, sobald an der bisherigen Position dieser Nullstelle m Photonen des Lumineszenzlichts registriert wurden. Hierbei kann m wieder klein oder sogar sehr klein sein. Konkret kann m 30 oder kleiner, 20 oder kleiner, 10 oder kleiner oder sogar 5 oder kleiner bis hinab zu nur 1 sein.

Insbesondere bei sehr kleinen Werten von m versteht es sich, dass beim Verschieben der Positionen der Nullstelle möglichst nur signifikante Photonen des Lumineszenzlichts von dem Molekül berücksichtigt werden, das heißt solche Photonen unberücksichtigt bleiben, die zwar registriert werden, aber zum Beispiel einem Rauschen zuzuordnen sind. Wenn die Nullstelle keine ideale Nullstelle ist, in der die Intensität des Anregungslichts auf null zurückgeht, kann auch eine mit der Restintensität des Anregungslichts in der Nullstelle verknüpfte Rate von Photonen des Lumineszenzlichts von dem Molekül als ein solches insignifikantes Rauschen betrachtet und zum Abzug gebracht werden, bevor die Rate beziehungsweise die zeitlichen Abstände der Photonen ermittelt wird/werden, auf deren Basis die Positionen der Nullstelle verschoben werden.

Wie bereits angesprochen wurde, sollte sich der gesamte anfängliche Ortsbereich an jeder Position der Nullstelle in einem Bereich der Intensitätsverteilung des Anregungslichts befinden, in dem die Intensitäten in dem Intensitätsanstiegsbereich unter der Sättigungsintensität des Anregungslichts bleiben, über der eine weitere Erhöhung der Intensität des Anregungslichts keine höhere Intensität des Lumineszenzlichts von dem vereinzelten Molekül mehr zur Folge hat. Bevorzugt ist es bei der zweiten Ausführungsform der Erfindung, wenn eine maximale Intensität, d. h. ein absolutes Intensitätsniveau des Anregungslichts jeweils so eingestellt wird, dass sich der anfängliche Ortsbereich bezüglich jeder Position der Nullstelle der Intensitätsverteilung des Anregungslichts in einem Bereich von nicht mehr als 90 % der Sättigungsintensität des Anregungslichts befindet.

Mit dem sukzessiven Verschieben der Positionen der Nullstelle kann die maximale Intensität des Anregungslichts sukzessive erhöht werden. Mit dem sukzessiven Verschieben der Positionen der Nullstelle verringert sich deren Abstand zu dem tatsächlichen Ort des Moleküls in der Probe. Durch das Erhöhen der maximalen Intensität des Anregungslichts wird der kleiner gewordene Abstand wieder über eine größere Bandbreite unterschiedlicher Intensitäten des Lumineszenzlichts von dem vereinzelten Molekül verteilt.

Beispielsweise kann die absolute Intensität des Anregungslichts so erhöht werden, dass eine Rate der zu allen jeweiligen Positionen der Nullstelle registrierten Photonen gleich bleibt. Dies ist gleichbedeutend damit, dass die zeitlichen Abstände dieser Photonen gleich bleiben. Das Gleichhalten der Rate bzw. der zeitlichen Abstände durch Erhöhen der absoluten Intensität des Anregungslichts kann zumindest vorübergehend, d. h. für einen Teilzeitraum des Verschiebens der Nullstellen angestrebt werden.

Konkret kann die maximale Intensität des Anregungslichts über das gesamte Verschieben der Nullstellen hinweg um mindestens 50 % erhöht werden. Sie kann aber auch um mindestens 100 % oder auch auf das 3-fache, 4-fache oder mehrfache ihres Anfangswerts erhöht werden.

In der dritten Ausführungsform der Erfindung wird das Anregungslicht wie bei dem aus der WO 2015/097000 A1 bekannten Ausgangsverfahren mit einer Intensitätsverteilung auf die Probe gerichtet, die in jeder der Raumrichtungen mindestens einen Intensitätsanstiegsbereich mit bekanntem streng monotonem Verlauf der Intensität des Anregungslichts über einem Abstand zu einem Aufpunkt der Intensitätsverteilung aufweist. Dieser Aufpunkt der Intensitätsverteilung wird in jeder der Raumrichtungen an verschiedenen Positionen in der Probe angeordnet. Zu jeder Position des Aufpunkts der Intensitätsverteilung in der Probe wird das von dem Molekül emittierte Lumineszenzlicht registriert; und der Ort des Moleküls in der Probe wird von Intensitäten des registrierten Lumineszenzlichts abgeleitet.

Zusätzlich zu dem bekannten Verfahren wird bei der dritten Ausführungsform der Erfindung zunächst ein anfänglicher Ortsbereich in der Probe bestimmt, in dem das Molekül angeordnet ist. Dann wird (i) in jeder der Raumrichtungen mindestens eine Position des Aufpunkts der Intensitätsverteilung so festgelegt, dass sich der mindestens eine Intensitätsanstiegsbereich in der jeweiligen Raumrichtung über den gesamten anfänglichen Ortsbereich hinweg erstreckt, und (ii) aus Intensitätswerten des Lumineszenzlichts, die zu jeder der Raumrichtungen zwei Intensitätswerte umfassen, von welchen einer die Intensität des zu der mindestens einen Position des Aufpunkts der Intensitätsverteilung registrierten Lumineszenzlichts angibt, wird ein weiterer Ortsbereich in der Probe bestimmt, in dem das Molekül angeordnet ist und der kleiner als der anfängliche Ortsbereich ist. Die Schritte (i) und (ii), einschließlich des Anordnens des Aufpunkts der Intensitätsverteilung des Anregungslichts an den in Schritt (i) festgelegten Positionen und des Registrierens des von dem Molekül emittierten Lumineszenzlichts zu jeder dieser Positionen, werden mindestens einmal unter Verwendung des weiteren Ortsbereichs als neuer anfänglicher Ortsbereich wiederholt.

Auf diese Weise wird der Ort des vereinzelten Moleküls in der Probe in jeder Raumrichtung sehr schnell, d. h. auf Basis einer geringen Anzahl von von dem vereinzelten Molekül emittierten und registrierten Photonen, auf einen kleinen Ortsbereich eingeschränkt. Die Abmessungen dieses kleinen Ortsbereichs entsprechen der Präzision, mit der der Ort des vereinzelten Moleküls bestimmt wird. Sie können problemlos 10 nm und damit die Beugungsgrenze bei der Wellenlänge des Lumineszenzlichts deutlich unterschreiten.

Bei der dritten Ausführungsform der Erfindung wird die Probe auch in dem anfänglichen Ortsbereich des Moleküls nicht räumlich abgetastet, sondern die Positionen des Aufpunkts der Intensitätsverteilung werden aufgrund der zu den bisherigen Positionen des Aufpunkts der Intensitätsverteilung registrierten Intensitäten des Lumineszenzlichts relativ zu dem Ortsbereich intelligent, d. h. unter maximaler Ausnutzung aller bislang aus den registrierten Intensitäten des Lumineszenzlichts verfügbaren Informationen über den tatsächlichen Ort des vereinzelten Moleküls, festgelegt. Dabei können die festgelegten Positionen des Aufpunkts den Ortsbereich selbst vollständig aussparen.

Dass das Anregungslicht bei der dritten Ausführungsform der Erfindung mit einer Intensitätsverteilung auf die Probe gerichtet wird, die in jeder der Raumrichtungen mindestens einen Intensitätsanstiegsbereich mit bekanntem, streng monotonem Verlauf der Intensität des Anregungslichts über einem Abstand zu einem Aufpunkt der Intensitätsverteilung aufweist, kann bedeuten, dass der Intensitätsanstiegsbereich durch in unterschiedlichem Abstand zu dem Aufpunkt unterschiedlich starke destruktive Interferenz ausgeformt wird. Weiterhin kann die Intensität des Anregungslichts in dem mindestens einen Intensitätsanstiegsbereich von null, d. h. zum Beispiel von einer vollständigen destruktiven Interferenz des Anregungslichts, ansteigen. Dann umfasst der Intensitätsanstiegsbereich insbesondere kleine Intensitäten des Anregungslichts, die das vereinzelte Molekül nur wenig durch Anregung zur Emission von Lumineszenzlicht beanspruchen. Dabei kann der Intensitätsanstiegsbereich an eine Nullstelle der Intensitätsverteilung des Anregungslichts angrenzen, an die auf der gegenüberliegenden Seit in der jeweiligen Raumrichtung ein weiterer Intensitätsanstiegsbereich angrenzt, wobei die beiden Intensitätsanstiegsbereiche in Bezug auf die Nullstelle symmetrisch zueinander ausgebildet sein können. Die Nullstelle kann zugleich als der Aufpunkt der Intensitätsverteilung des Anregungslichts verwendet werden, der sich dann in günstiger Weise nahe den kleinsten Intensitäten des Anregungslichts befindet, die das vereinzelte Molekül nur wenig beanspruchen. Allgemein ist der Aufpunkt der Intensitätsverteilung des Anregungslichts ein innerhalb der Intensitätsverteilung definierter Bezugspunkt, dessen jeweilige Position in der Probe definiert ist und der entsprechend an definierten Positionen in der Probe positionierbar ist. Wenn der Aufpunkt der Intensitätsverteilung des Anregungslichts eine Nullstelle ist, an die Intensitätsanstiegsbereiche angrenzen, steigt die Intensität des Anregungslichts über jeden dieser Intensitätsanstiegsbereiche mit zunehmendem Abstand zu dem Aufpunkt streng monoton, das heißt kontinuierlich an. Je nach Art des Aufpunkts der Intensitätsverteilung kann die Intensität des Anregungslichts mit zunehmendem Abstand zu dem Aufpunkt aber auch streng monoton über die Intensitätsanstiegsbereiche hinweg abfallen.

Unabhängig davon, ob zwei an eine Nullstelle oder einen anderen Aufpunkt der Intensitätsverteilung des Anregungslichts anschließenden Intensitätsanstiegsbereiche symmetrisch zueinander ausgebildet sind, kann bei der dritten Ausführungsform der Erfindung von beiden Intensitätsanstiegsbereichen Gebrauch gemacht werden, indem beispielsweise im Schritt (i) Positionen des Aufpunkts auf unterschiedlichen Seiten des anfänglichen Ortsbereichs festgelegt werden.

Die Nullstelle kann eine durch Interferenz gebildete Ideale Nullstelle sein, in der die Intensität des Anregungslichts tatsächlich auf null zurückgeht. Eine geringe Restintensität des Anregungslichts in der Nullstelle ist jedoch unschädlich, zumal es nicht Kern der dritten Ausführungsform der Erfindung ist, die Nullstelle, sofern sie in der Intensitätsverteilung des Anregungslichts vorhanden ist, so in der Probe zu positionieren, dass ihre Position mit dem Ort des Moleküls in der Probe zusammenfällt. Aus demselben Grund kann die von den Intensitätsanstiegsbereichen begrenzte Nullstelle grundsätzlich auch durch in der jeweiligen Raumrichtung beabstandete gaußförmige Intensitätsverteilungen, konkret durch das zwischen diesen verbleibende Intensitätsminimum, ausgebildet werden. Weiterhin kann der mindestens eine Intensitätsanstiegsbereich auch durch eine Flanke nur einer gaußförmigen Intensitätsverteilung bereitgestellt werden. In diesem Fall ist jedoch der Schwerpunkt des zu der gaußförmigen Intensitätsverteilung fokussierten Anregungslichts ein von den besonders interessanten kleinen Intensitäten des Anregungslichts in dem Intensitätsanstiegsbereich relativ weit entfernter Aufpunkt der Intensitätsverteilung.

Auch mit einem nur in einer einzigen Raumrichtung verlaufenden Intensitätsanstiegsbereich kann der Ort des Moleküls in der Probe in zwei oder allen drei Raumrichtungen hoch aufgelöst bestimmt werden. Ebenso kann mit nur in zwei Raumrichtungen verlaufenden Intensitätsanstiegsbereichen der Ort des vereinzelten Moleküls in der Probe nicht nur in diesen zwei, sondern auch in allen drei Raumrichtungen hoch aufgelöst bestimmt werden. Dazu ist die dritte Ausführungsform der Erfindung unter Ausrichtung des oder der Intensitätsanstiegsbereiche in unterschiedlichen Raumrichtungen durchzuführen. Dies kann für die verschiedenen Ausrichtungen des oder der Intensitätsanstiegsbereiche nacheinander oder auch quasi gleichzeitig erfolgen, beispielsweise unter Wiederholung der Schritte (i) und (ii) erst dann, wenn sie für alle Raumrichtungen der Ausrichtung des oder der Intensitätsanstiegsbereiche zumindest einmal durchgeführt wurden.

Bei der dritten Ausführungsform der Erfindung kann der anfängliche Ortsbereich, in dem das Molekül angeordnet ist, auf unterschiedliche Weise bestimmt werden. Beispiele hierfür werden weiter unten angegeben.

Dass bei der dritten Ausführungsform der Erfindung im Schritt (i) in jeder der Raumrichtungen die mindestens eine Position des Aufpunkts der Intensitätsverteilung so festgelegt wird, dass sich der mindestens eine Intensitätsanstiegsbereich in der jeweiligen Raumrichtung über den anfänglichen Ortsbereich erstreckt, bedeutet, dass sich das Molekül sicher in dem von dem Intensitätsanstiegsbereich in Bezug auf die Intensität des Lumineszenzlichts von dem Molekül beeinflusste Bereich der Intensitätsverteilung des Anregungslichts befindet.

Dass im Schritt (ii) Intensitätswerte des Lumineszenzlichts, die zu jeder der Raumrichtungen zwei Intensitätswerte umfassen, von welchen einer die Intensität des zu der mindestens einen Position des Aufpunkts der Intensitätsverteilung registrierten Lumineszenzlichts ist, ausgewertet werden, schließt nicht aus, dass der jeweilige zweite Intensitätswert zu der jeweiligen Raumrichtung für alle Raumrichtungen derselbe Wert ist, so dass in dem Schritt (ii) insgesamt nur n+1 Intensitätswerte ausgewertet werden, wobei "n" die Anzahl der Raumrichtungen ist, in denen der Ort des vereinzelten Moleküls bestimmt wird. Grundsätzlich kann für jede Raumrichtung aber auch ein zusätzlicher Intensitätswert Berücksichtigung finden, so dass dann insgesamt 2n-Intensitätswerte ausgewertet werden.

Um in dem Schritt (ii) den weiteren Ortsbereich in der Probe zu bestimmen, in dem das Molekül angeordnet ist und der kleiner als der anfängliche Ortsbereich ist, ist die Abhängigkeit der Intensität des Lumineszenzlichts, das von dem vereinzelten Molekül emittiert wird, von dem Abstand des vereinzelten Moleküls zu dem Aufpunkt der Intensitätsverteilung des Anregungslichts zu berücksichtigen. Diese Abhängigkeit hängt von dem bekannten, in Richtung dieses Abstands streng monoton ansteigenden oder abfallenden Verlauf der Intensität des Anregungslichts in dem Intensitätsanstiegsbereich und auch von dem photophysikalischen Prozess ab, der der Anregung des Moleküls zur Emission des Lumineszenzlichts zugrunde liegt. So ergibt sich bei einem an eine durch destruktive Interferenz gebildeten Nullstelle angrenzenden Intensitätsanstiegsbereich und einer Photolumineszenz auf Basis eines Einphotonenprozesses näherungsweise eine quadratische Abhängigkeit der Intensität des von dem Molekül emittierten Lumineszenzlichts von dessen Abstand zu der Nullstelle. Bei einer Photolumineszenz auf Basis eines Zweiphotonenprozesses ist die Abhängigkeit noch ausgeprägter und folgt einer Funktion $x^4$. Faktisch muss bei der dritten Ausführungsform der Erfindung der streng monotone Verlauf der Intensität des Anregungslichts in dem Intensitätsanstiegsbereich nur insoweit bekannt sein, wie er sich auf die Intensität des Lumineszenzlichts von dem Molekül auswirkt. D. h., die Abhängigkeit der Intensität des Lumineszenzlichts vom Abstand des Moleküls zu dem Aufpunkt der Intensitätsverteilung des Anregungslichts muss bekannt sein, um sie bei der Bestimmung des weiteren Ortsbereichs berücksichtigen zu können. Diese Abhängigkeit lässt sich aber leicht bestimmen, beispielsweise empirisch durch Abtasten der Umgebung des Moleküls mit dem Intensitätsanstiegsbereich in kleinen Schritten.

Dass in dem Schritt (ii) der kleinere weitere Ortsbereich des Moleküls in der Probe aus Intensitätswerten des Lumineszenzlichts bestimmt wird, die zu jeder der Raumrichtungen zwei Intensitätswerte des Lumineszenzlichts umfassen, schließt nicht nur die Möglichkeit ein, verschiedene Raten von Photonen des Lumineszenzlichts zu berücksichtigen, sondern auch die Möglichkeit, zeitliche Abstände der registrierten Photonen zu betrachten. Dabei versteht es sich, dass der Mittelwert der zeitlichen Abstände der registrierten Photonen gleich dem Kehrwert der Rate der zu einer Position des Aufpunkts der Intensitätsverteilung des Anregungslichts registrierten Photonen des Lumineszenzlichts ist.

Bei der dritten Ausführungsform der Erfindung werden die Schritte (i) und (ii) mindestens einmal wiederholt. D. h., der Ortsbereich, in dem sich das Molekül in der Probe befindet, wird gegenüber dem anfänglichen Ortsbereich zumindest zweimal verkleinert. Dies bedeutet, dass mit Hilfe der dritten Ausführungsform der Erfindung zumindest zweimal der Ortsbereich des Moleküls in der Probe gegenüber seiner ersten Abschätzung eingeengt wird. Es können auch weitere Einengungen des Ortsbereichs auf dieselbe oder auf andere Weise erfolgen. Der nach den mindestens zwei Einengungen des anfänglichen Ortsbereichs erhaltene kleinere Ortsbereich kann aber auch direkt verwendet werden, um den Ort des vereinzelten Moleküls anzugeben, beispielsweise als Zentrum des Ortsbereichs mit dem Radius des Ortsbereichs als möglichem Fehler.

Der zweite Intensitätswert zu der jeweiligen Raumrichtung, der in dem Schritt (ii) der dritten Ausführungsform der Erfindung ausgewertet wird, kann eine Intensität des zu einer zweiten Position des Aufpunkts der Intensitätsverteilung in der Probe registrierten Lumineszenzlichts sein. Diese zweite Position kann in der jeweiligen Raumrichtung an anderer Stelle auf derselben Seite wie die mindestens eine Position des Aufpunkts der Intensitätsverteilung oder auf der der mindestens einen Position des Aufpunkts der Intensitätsverteilung gegenüberliegenden Seite des anfänglichen Ortsbereichs liegen. In jedem Fall wird die Auswirkung der unterschiedlichen Intensitäten des Anregungslichts in dem Intensitätsanstiegsbereich bei dieser Ausgestaltung der dritten Ausführungsform der Erfindung an zwei Positionen des Aufpunkts der Intensitätsverteilung des Anregungslichts erfasst, von denen bekannt ist, wo sie in der jeweiligen Raumrichtung in Bezug auf den anfänglichen Ortsbereich des Moleküls liegen.

Unter Berücksichtigung des bekannten Verlaufs der Intensität des Anregungslichts in dem Intensitätsanstiegsbereich kann in Verbindung mit dem Abstand der Positionen des Aufpunkts in der jeweiligen Raumrichtung aus den zugehörigen Intensitäten des Lumineszenzlichts auf den tatsächlichen Ort des Moleküls in der jeweiligen Raumrichtung geschlossen werden. Auch bei dieser Ausgestaltung der dritten Ausführungsform der Erfindung müssen für jede Raumrichtung nicht zwei separate Positionen des Aufpunkts bezüglich der dazu registrierten Intensitäten des Lumineszenzlichts berücksichtigt werden. Vielmehr können z. B. zur Bestimmung des Orts des Moleküls in zwei Raumrichtungen die Positionen des Aufpunkts in einer von diesen beiden Raumrichtungen aufgespannten Ebene in den Ecken eines Dreiecks liegen, also insgesamt nur drei Positionen umfassen. Entsprechend können die Positionen des Aufpunkts zur Bestimmung des Ortes in drei Raumrichtungen in den Ecken eines Tetraeders liegen. Grundsätzlich sind natürlich auch zwei separate Positionen des Aufpunkts je Raumrichtung möglich, in der der Ort des Moleküls bestimmt wird. Unter dem Gesichtspunkt, den Ort des Moleküls in der Probe mit möglichst wenig Photonen des Lumineszenzlichts zu bestimmen, ist die damit größere Zahl der Positionen des Aufpunkts in der Probe, zu denen das Lumineszenzlicht registriert wird, aber nicht unbedingt bevorzugt.

In einer anderen Ausführungsform ist der zweite Intensitätswert zu der jeweiligen Raumrichtung im Schritt (ii) ein Maß für die relative Leuchtstärke des vereinzelten Moleküls. Bei diesem Maß kann es sich konkret um eine Maximalintensität des Lumineszenzlichts von dem Molekül bei Anregung mit dem Anregungslicht oder um einen hiermit unmittelbar korrelierten Intensitätswert handeln. Die Maximalintensität oder der damit korrelierte Intensitätswert kann für das vereinzelte Molekül konkret gemessen oder auch für alle potentiellen vereinzelten Moleküle mit einem bestimmten Wert abgeschätzt werden.

Bei der dritten Ausführungsform der Erfindung kann das Lumineszenzlicht zu den verschiedenen Positionen des Aufpunkts der Intensitätsverteilung in der Probe quasi gleichzeitig registriert werden, indem der Aufpunkt wiederholt zwischen den Positionen in der Probe verschoben wird. Zu diesem Zweck kann dieselbe Intensitätsverteilung des Anregungslichts mit Hilfe eines Scanners verschoben werden. Es ist aber auch möglich, die Intensitätsverteilung für jede der verschiedenen Positionen ihres Aufpunkts in der Probe neu auszubilden, beispielsweise mit Hilfe eines im Strahlengang des Anregungslichts angeordneten Spatial Light Modulators (SLM). Dann kann zumindest insoweit auf einen Scanner verzichtet werden. Weiterhin ist es möglich, den Aufpunkt der Intensitätsverteilung des Anregungslichts in der Probe zu verschieben, indem das Anregungslicht nacheinander durch ganz oder teilweise verschiedene Lichtquellen bereitgestellt wird. Bei allen diesen möglichen Ausgestaltungen der dritten Ausführungsform der Erfindung kann der Aufpunkt der Intensitätsverteilung des Anregungslichts zwischen seinen Positionen in der Probe wiederholt hin und her verschoben werden. Es versteht sich, dass dabei das zu den einzelnen Positionen des Aufpunkts gehörige Lumineszenzlicht von dem Molekül getrennt registriert wird. Das quasi gleichzeitige Registrieren des Lumineszenzlicht zu den verschiedenen Positionen des Aufpunkts der Intensitätsverteilung des Anregungslichts hat den Vorteil, dass das Beaufschlagen der Probe mit dem Anregungslicht und das Registrieren des Lumineszenzlichts von der Probe sofort abgebrochen werden kann, wenn es die zu den einzelnen Positionen des Aufpunkts der Intensitätsverteilung des Anregungslichts registrierten Photonen des Lumineszenzlichts bereits erlauben, den anfänglichen Ortsbereich in der Probe, in dem das Molekül angeordnet ist, um ein vorgegebenes Maß einzuengen.

Ein entsprechendes Abbruchkriterium kann zwar auch bei einem kontinuierlichen Registrieren des Lumineszenzlichts zu jeder Position des Aufpunkts der Intensitätsverteilung des Anregungslichts in der Probe angewandt werden. Es gibt jedoch Fälle, in denen die Betrachtung der Intensitäten des zu allen Positionen des Aufpunkts der Intensitätsverteilung des Anregungslichts registrierten Lumineszenzlichts schon nach insgesamt weniger Photonen von dem Molekül erkennen lässt, dass der anfängliche Ortsbereich um ein gewünschtes Maß eingrenzbar ist.

Wenn bei der dritten Ausführungsform der Erfindung das Lumineszenzlicht zu den Positionen des Aufpunkts der Intensitätsverteilung des Anregungslichts jeweils nur solange registriert wird, bis die Intensitäten des registrierten Lumineszenzlichts zu den Positionen mit einer ausreichenden Genauigkeit erfasst sind, dass der weitere Ortsbereich um einen vorgegebenen Wert kleiner als der anfängliche Wert bestimmbar ist, kann dieser vorgegebene Wert in einem Bereich von 5 % bis 75 % liegen. Dabei bezieht sich diese Angabe auf die Abmessung des Ortsbereichs in der jeweiligen Raumrichtung. Es versteht sich, dass die Intensitäten des zu den verschiedenen Positionen des Aufpunkts der Intensitätsverteilung des Anregungslichts registrierten Lumineszenzlichts umso genauer erfasst werden müssen, desto mehr der weitere Ortsbereich gegenüber dem anfänglichen Ortsbereich eingegrenzt werden soll. Eine geringere Eingrenzung erfordert eine geringere Genauigkeit bei der Erfassung der Intensitäten des Lumineszenzlichts zu den verschiedenen Positionen des Aufpunkts, aber auch mehr Wiederholungen der Schritte (i) und (ii) der dritten Ausführungsform der Erfindung, um dieselbe Präzision zu erreichen. Hier kann in Bezug auf die Anzahl der Photonen des Lumineszenzlichts, die für das Erreichen einer bestimmten Präzision bei der Bestimmung des Orts des Moleküls in der Probe benötigt werden, eine Optimierung durchgeführt werden.

Wie bereits angesprochen wurde, sollte sich der gesamte anfängliche Ortsbereich an jeder Position des Aufpunkts in einem Bereich der Intensitätsverteilung des Anregungslichts befinden, in dem die Intensitäten in dem Intensitätsanstiegsbereich unter der Sättigungsintensität des Anregungslichts bleiben, über der eine weitere Erhöhung der Intensität des Anregungslichts keine höhere Intensität des Lumineszenzlichts von dem vereinzelten Molekül mehr zur Folge hat. Bevorzugt ist es bei der dritten Ausführungsform der Erfindung, wenn eine maximale Intensität, d. h. ein absolutes Intensitätsniveau des Anregungslichts jeweils so eingestellt wird, dass sich der anfängliche Ortsbereich bezüglich jeder in dem Schritt (i) festgelegten Position des Aufpunkts der Intensitätsverteilung des Anregungslichts in einem Bereich von nicht mehr als 90 % der Sättigungsintensität des Anregungslichts befindet.

Mit kleiner werdendem Ortsbereich kann die maximale Intensität des Anregungslichts erhöht werden. Auf diese Weise kann der kleiner werdende Ortsbereich wieder auf die volle Bandbreite der unterschiedlichen Intensitäten des Anregungslichts in dem Intensitätsanstiegsbereich und damit auf die volle Bandbreite der unterschiedlichen Intensitäten des Lumineszenzlichts von dem vereinzelten Molekül aufgeteilt werden.

Konkret kann die maximale Intensität des Anregungslichts über alle Wiederholungen der Schritte (i) und (ii) um mindestens 50 % erhöht werden. Sie kann aber auch um mindestens 100 % oder auch auf das 3-fache, 4-fache oder mehrfache ihres Anfangswerts erhöht werden.

Die Schritte (i) und (ii) der dritten Ausführungsform der Erfindung können solange wiederholt werden, bis der weitere Ortsbereich in dem zuletzt durchgeführten Schritt (ii) nicht mehr größer als eine vorgegebene Präzision ist. Diese vorgegebene Präzision kann im Bereich von 20 nm oder kleiner liegen. Sie kann auch kleiner als 10 nm sein. Auch eine vorgegebene Präzision in der Größenordnung von 1 nm und damit herab bis zu 0,5 nm ist möglich. Grundsätzlich weist die dritte Ausführungsform der Erfindung keine inhärente Grenze für die bei der Bestimmung des Orts des vereinzelten Moleküls in der Probe erreichbare Präzision auf. Im jeweiligen Einzelfall auftretende Verhältnisse, wie beispielsweise ein abnehmendes Signal-zu-Rauschen-Verhältnis können jedoch die praktisch erreichbare Präzision begrenzen. So kann als Abbruchkriterium für das Wiederholen der Schritte (i) und (ii) bei der dritten Ausführungsform der Erfindung auch das Unterschreiten eines vorgegebenen Signal-zu-Rauschen-Verhältnisses oder einer Untergrenze für eine erreichte weitere Verkleinerung des Ortsbereichs festgelegt werden, in dem sich das vereinzelte Molekül in der Probe befindet.

Bei allen erfindungsgemäßen Verfahren kann der anfängliche Ortsbereich, in dem das Molekül mutmaßlich angeordnet ist, auf unterschiedliche Weise bestimmt werden. Beispiele hierfür werden nachfolgend angegeben.

Bei allen erfindungsgemäßen Verfahren kann zu Beginn des Bestimmens des Orts des vereinzelten Moleküls ein das vereinzelte Molekül umfassender Bereich der Probe in jeder der Raumrichtungen mit der Nullstelle abgetastet werden, wobei aus dem Verlauf der Intensität des Lumineszenzlichts während des Abtastens der Ort des vereinzelten Moleküls abgeschätzt und der abgeschätzte Ort dem Festlegen der Positionen der Nullstelle in der Probe zugrunde gelegt wird. Dieses räumliche Abtasten zumindest eines Bereichs der Probe kann mit vergleichsweise geringer Intensität des Anregungslichts und in vergleichsweise großen räumlichen und kleinen zeitlichen Schritten durchgeführt werden, weil der Ort des Moleküls, d. h. ein begrenzter Ortsbereich, in dem sich das Molekül mutmaßlich befindet, hieraus nur grob abgeschätzt werden muss. Statt mit der Nullstelle der Intensitätsverteilung des Anregungslichts kann der das vereinzelte Molekül umfassende Bereich der Probe zu Beginn des Bestimmens des Orts des vereinzelten Moleküls mit einer gaußförmigen Intensitätsverteilung des Anregungslichts, d. h. mit einem einfachen fokussierten Strahl des Anregungslichts, in jeder der Raumrichtungen abgetastet werden. Dies entspricht einer konfokal-mikroskopischen Abbildung des vereinzelten Moleküls in der Probe.

In einer anderen Ausgestaltung der erfindungsgemäßen Verfahren wird zu Beginn des Bestimmens des Orts des vereinzelten Moleküls das Anregungslichts mit einer gaußförmigen Intensitätsverteilung nur punktweise oder auf Kreis- oder Spiralbahnen auf einen das vereinzelte Molekül umfassenden Bereich der Probe gerichtet, wobei der der Ort des vereinzelten Moleküls aus dem Verlauf der Intensität des Lumineszenzlichts über den Punkten bzw. Bahnen abgeschätzt und der abgeschätzte Ort dem Festlegen der Positionen der Nullstelle in der Probe zugrunde gelegt wird. Um dabei die Anzahl der von dem vereinzelten Molekül emittierten Photonen des Lumineszenzlichts zu begrenzen, ist die gaußförmige Intensitätsverteilung sehr schnell zu bewegen und/oder bezüglich der maximalen Intensität des Anregungslichts klein zu halten. Bei dem Bewegen der gaußförmigen Intensitätsverteilung auf Kreis- oder Spiralbahnen kann der Intensitätsanstiegsbereich in der Peripherie der gaußförmigen Intensitätsverteilung des Anregungslichts genutzt werden, um das vereinzelte Molekül mit nur geringer Intensität des Anregungslichts zu beaufschlagen, die aber ausreichend ist, um einen begrenzten Ortsbereich, in dem sich das Molekül mutmaßlich befindet, durch Lokalisierung des Moleküls zu bestimmen.

Bei noch einer anderen Ausgestaltung der erfindungsgemäßen Verfahren wird zu Beginn des Bestimmens des Orts des vereinzelten Moleküls ein das vereinzelte Molekül umfassender Bereich der Probe räumlich, d. h. insgesamt, mit dem Anregungslicht beaufschlagt und auf einen das Lumineszenzlicht mit räumlicher Auflösung registrierenden Detektor, wie beispielsweise eine Kamera, abgebildet. Dann kann aus einer räumlichen Verteilung des mit dem Detektor registrierten Lumineszenzlichts der Ort des vereinzelten Moleküls abgeschätzt und der abgeschätzte Ort dem Festlegen der Positionen der Nullstelle in der Probe zugrunde gelegt werden. Da ein begrenzter Ortsbereich, in dem sich das Molekül mutmaßlich befindet, bei dieser Abschätzung noch nicht besonders eingeengt werden muss, reichen hierfür wenige Photonen von dem vereinzelten Molekül aus.

Bei allen hier geschilderten, zu Beginn des Bestimmens des Orts des vereinzelten Moleküls durchführbaren Schritten, um den Ort des Moleküls abzuschätzen bzw. eine begrenzten Ortsbereich zu bestimmen, in dem sich das Molekül mutmaßlich befindet, kann zugleich eine Maximalintensität des Lumineszenzlichts von dem Molekül bei Anregung mit dem Anregungslicht oder ein damit korrelierter Intensitätswert erfasst werden, die/der ein Maß für die relative Leuchtstärke des vereinzelten Moleküls ist.

Bei allen erfindungsgemäßen Verfahren kann das Lumineszenzlicht auch grundsätzlich mit einem räumlich auflösenden Detektor, wie beispielsweise einer Kamera, aber auch einem kleineren Array von beispielsweise nur 2x2 oder 3x3 Punktsensoren, registriert werden. Aus der Summe der über die verschiedenen Positionen der Nullstelle registrierten Photonen des Lumineszenzlichts von dem vereinzelten Molekül kann dessen Position zusätzlich durch Lokalisierung bestimmt werden. Dabei kann ein sich bei der Lokalisierung ergebender anderer Ort des Moleküls in der Probe auf eine bestimmte Orientierung des Moleküls in der Probe hinweisen, weil zwar die Lokalisierung zur Bestimmung des Orts des Moleküls in der Probe von dessen Orientierung beeinflusst wird, nicht aber die erfindungsgemäße Bestimmung des Orts des Moleküls in der Probe. Bei allen erfindungsgemäßen Verfahren kommt es nicht darauf an, wo das jeweilige von dem Molekül emittierte Photon registriert wird. Entsprechend kann das Lumineszenzlicht bei allen erfindungsgemäßen Verfahren auch mit einem Punktdetektor registriert werden.

Bei allen erfindungsgemäßen Verfahren kann die Probe vor dem Bestimmen des Orts des vereinzelten Moleküls mit einem Schaltsignal beaufschlagt werden, das das Molekül von benachbarten gleichartigen Molekülen vereinzelt, indem es die benachbarten gleichartigen Moleküle - im Gegensatz zu dem vereinzelten Molekül - in einen Dunkelzustand schaltet, in dem sie mit dem Anregungslicht nicht zur Emission von Lumineszenzlicht anregbar sind. Dieser Dunkelzustand kann ein anderer Konformationszustand der Moleküle sein, der nicht lumineszent ist. Es kann sich aber auch um einen elektronischen Dunkelzustand handeln. Alternativ kann das Schaltsignal nur das zu vereinzelnde Molekül in einen lumineszenten Zustand schalten. Das Schaltsignal kann Schaltlicht mit einer anderen Wellenlänge und Intensität als das Anregungslicht sein. Es kann aber auch dieselbe Wellenlänge wie und nur eine andere Intensität als das Anregungslicht aufweisen. Grundsätzlich kann das Schaltsignal auch das Anregungslicht selbst sein.

Eine wiederholte Durchführung der erfindungsgemäßen Verfahren kann zum Bestimmen des Orts einer Vielzahl von nacheinander vereinzelten, mit Anregungslicht zur Emission des Lumineszenzlichts anregbaren Molekülen genutzt werden, die eine interessierende Struktur in der Probe markieren. In einer anderen Ausführungsform dient eine wiederholte Durchführung der erfindungsgemäßen Verfahren zum Verfolgen des sich in der Probe bewegenden vereinzelten Moleküls. Dabei kann der begrenzte Ortsbereich, in dem sich das Molekül mutmaßlich befindet, bei jeder Wiederholung der erfindungsgemäßen Verfahren der zuvor bestimmte Ort des Moleküls plus ein diesen umgebender Fehlerbereich sein. Die Breite dieses Fehlerbereichs ist auf die maximale Bewegungsgeschwindigkeit des Moleküls in der Probe abzustimmen.

Zur Durchführung der erfindungsgemäßen Verfahren kann ein STED-Rasterfluoreszenzlichtmikroskop verwendet werden, wobei das durch das STED-Rasterfluoreszenzlichtmikroskop bereitgestellte STED-Licht mit einer von Intensitätsmaxima benachbarten Nullstelle als das Anregungslicht verwendet wird.

Vorteilhafte Weiterbildungen der Erfindung ergeben sich aus den Patentansprüchen, der Beschreibung und den Zeichnungen. Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Ohne dass hierdurch der Gegenstand der beigefügten Patentansprüche verändert wird, gilt hinsichtlich des Offenbarungsgehalts der ursprünglichen Anmeldungsunterlagen und des Patents Folgendes: weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einem vereinzelten Molekül die Rede ist, ist dies so zu verstehen, dass genau ein vereinzeltes Molekül, zwei vereinzelte Moleküle oder mehr vereinzelte Moleküle vorhanden sind, deren Orte bestimmt werden. Die in den Patentansprüchen angeführten Merkmale können durch andere Merkmale ergänzt werden oder die einzigen Merkmale sein, die der beanspruchte Gegenstand aufweist.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

Weitere Informationen zu möglichen Ausführungsformen der vorliegenden Erfindung können der WO 2015/097000 A1 entnommen werden. Alles was dort offenbart ist und nicht im Widerspruch zu der vorliegenden Erfindung steht, kann auch bei der Umsetzung der vorliegenden Erfindung realisiert werden.

## KURZBESCHREIBUNG DER FIGUREN

Im Folgenden wird die Erfindung anhand in den Figuren dargestellter bevorzugter Ausführungsbeispiele weiter erläutert und beschrieben.

Fig. 1     zeigt schematisch ein STED-Mikroskop, das zur Durchführung des erfindungsgemäßen Verfahrens zum Bestimmen des Orts eines vereinzelten, mit Anregungslicht zur Emission von Lumineszenzlicht anregbaren Moleküls verwendbar ist.

Fig. 2     zeigt einen Schnitt durch eine Intensitätsverteilung von Anregungslicht mit einer von Intensitätsmaxima benachbarten Nullstelle, das bei der Durchführung des erfindungsgemäßen Verfahrens mit dem STED-Mikroskop gemäß Fig. 1 auf eine Probe gerichtet wird, und resultierende Intensitäten von Lumineszenzlicht, das von dem an den jeweiligen Ort in der Probe angeordneten lumineszenten Molekül emittiert wird.

Fig. 3     illustriert eine Durchführung der ersten Ausführungsform der Erfindung in Bezug auf einen begrenzten zweidimensionalen Ortsbereich in der Probe, in dem sich das vereinzelte Molekül mutmaßlich befindet.

Fig. 4     illustriert die Zusammenhänge zwischen unterschiedlichen Intensitäten des bei der Durchführung der ersten Ausführungsform der Erfindung zu verschiedenen Positionen der Nullstelle der Intensitätsverteilung des Anregungslichts in der Probe registrierten Lumineszenzlichts.

Fig. 5     ist ein Blockdiagramm einer Ausgestaltung der ersten Ausführungsform der Erfindung.

Fig. 6     illustriert eine Durchführung der zweiten Ausführungsform der Erfindung in Bezug auf einen begrenzten zweidimensionalen Ortsbereich in der Probe, in dem sich das vereinzelte Molekül mutmaßlich befindet.

Fig. 7     illustriert in einer Fig. 4 entsprechenden Darstellung die Zusammenhänge zwischen unterschiedlichen Intensitäten des bei der Durchführung der zweiten Ausführungsform der Erfindung zu verschiedenen Positionen der Nullstelle der Intensitätsverteilung des Anregungslichts in der Probe registrierten Lumineszenzlichts.

Fig. 8     ist ein Blockdiagramm einer Ausführungsform der zweiten Ausführungsform der Erfindung.

Fig. 9     illustriert eine erste Durchführung von Schritten der dritten Ausführungsform der Erfindung in Bezug auf einen ersten anfänglichen Ortsbereich des vereinzelten Moleküls in der Probe.

Fig. 10    illustriert eine zweite Durchführung der Schritte der dritten Ausführungsform der Erfindung in Bezug auf einen verkleinerten anfänglichen Ortsbereich des vereinzelten Moleküls in der Probe.

Fig. 11    illustriert eine alternative Ausgestaltung einer Durchführung der Schritte der dritten Ausführungsform der Erfindung mit einer gaußförmigen Intensitätsverteilung des Anregungslichts.

Fig. 12    illustriert zwei aufeinanderfolgende Durchführungen der Schritte der dritten Ausführungsform der Erfindung mit einer ersten Relativanordnung von Positionen eines Aufpunkts der Intensitätsverteilung des Anregungslichts in Bezug auf die anfänglichen Ortsbereiche.

Fig. 13   illustriert zwei aufeinanderfolgende Durchführungen der Schritte der dritten Ausführungsform der Erfindung mit einer anderen Relativanordnung der Positionen des Aufpunkts der Intensitätsverteilung des Anregungslichts in Bezug auf die anfänglichen Ortbereiche.

Fig. 14   ist ein Blockdiagramm einer Ausgestaltung der dritten Ausführungsform der Erfindung zur Bestimmung des Orts eines vereinzelten Moleküls in einer Probe.

Fig. 15   ist ein Blockdiagramm einer wiederholten Durchführung der dritten Ausführungsform der Erfindung zur Abbildung einer mit vereinzelbaren Molekülen markierten Struktur in einer Probe; und

Fig. 16   ist ein Blockdiagramm einer wiederholten Durchführung der dritten Ausführungsform der Erfindung zum Tracken einer Bewegung eines vereinzelten Moleküls in einer Probe.

**FIGURENBESCHREIBUNG**

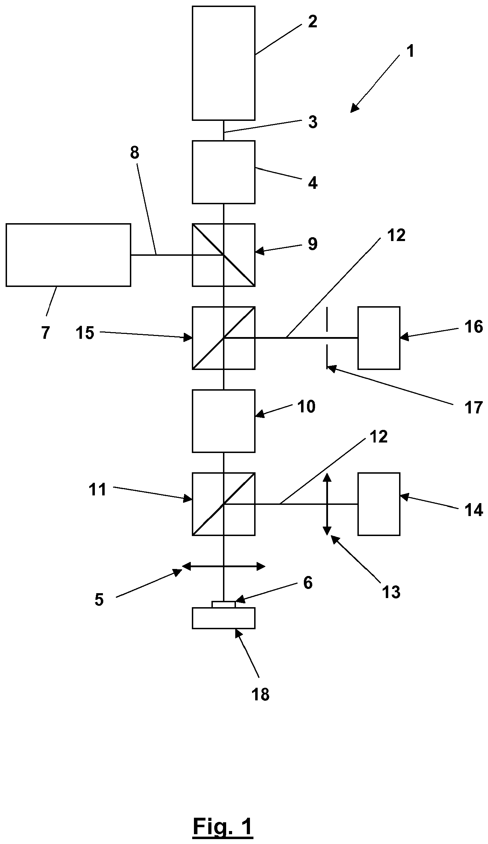

**Fig. 1** zeigt schematisch ein STED-Fluoreszenzlicht-Mikroskop 1, mit dem die erfindungsgemäßen Verfahren durchführbar sind. Bei der Durchführung der erfindungsgemäßen Verfahren werden nicht notwendigerweise alle Bestandteile des STED-Fluoreszenzlichtmikroskops 1 verwendet. Das STED-Fluoreszenzlichtmikroskop 1 umfasst jedoch alle Bestandteile, die zur Durchführung der erfindungsgemäßen Verfahren notwendig sind. Eine Lichtquelle 2, die bei der üblichen Verwendung des STED-Fluoreszenzlichtmikroskops 1 STED-Licht bereitstellt, stellt bei der Verwendung des STED-Fluoreszenzlichtmikroskops 1 zur Durchführung der erfindungsgemäßen Verfahren Anregungslicht 3 bereit. Mit Strahlformungsmitteln 4 wird das Anregungslicht 3 so geformt, dass es im Fokus eines Objektivs 5 eine Intensitätsverteilung mit mindestens einem Intensitätsanstiegsbereich aufweist. In einer Ausgestaltung der erfindungsgemäßen Verfahren weist das Anregungslicht 3 im Fokus des Objektivs 5 eine Intensitätsverteilung mit einer Nullstelle auf, der in allen Raumrichtungen, in denen der Ort eines vereinzelten Moleküls in einer Probe 6 bestimmt werden soll, Intensitätsmaxima auf beiden Seiten benachbart sind. Die Flanken dieser Intensitätsmaxima bilden dann die bei allen erfindungsgemäßen Verfahren genutzten Intensitätsanstiegsbereiche aus. Die Strahlformungsmittel 4 können ausschließlich passive Komponenten oder auch eine aktive Optik, wie beispielsweise einen Spatial Light Modulator (SLM) umfassen. Eine weitere Lichtquelle 7 des STED-Fluoreszenzlichtmikroskops 1, die bei seiner üblichen Verwendung Anregungslicht bereitstellt, kann bei der Durchführung der erfindungsgemäßen Verfahren Schaltlicht 8 bereitstellen, um das Molekül in der Probe 6 zu vereinzeln, dessen Ort in der Probe anschließend bestimmt wird. Das Vereinzeln des Moleküls kann dabei darauf basieren, dass andere gleichartige Moleküle mit dem Schaltlicht 8 in einen Dunkelzustand geschaltet werden, in dem sie nicht mit dem Anregungslicht 3 zur Emission von Lumineszenzlicht anregbar sind. Das Schaltlicht 8 wird in den Strahlengang des Anregungslichts 3 eingekoppelt, wozu hier ein dichroitischer Strahlteiler 9 vorgesehen ist. Mit einem Scanner 10 wird der Anstiegsbereich bzw. die Nullstelle des Anregungslichts 3 in der Probe 6 verschoben. Über einen dichroitischen Strahlteiler 11, der von der Probe 6 aus vor dem Scanner 10 angeordnet ist, wird Lumineszenzlicht 12 von der Probe 6 aus dem Strahlengang des Anregungslichts 3 ausgekoppelt und mit einer Optik 13 auf eine Kamera 14 abgebildet. Die Kamera 14 ist ein Beispiel für einen räumlich auflösenden Detektor für das Lumineszenzlicht 12. Alternativ hierzu wird mit einem dichroitischen Strahlteiler 15 das Lumineszenzlicht 12 von der Probe 6 einem Punktdetektor 16 mit einer vorgeschalteten Lochblende 17 zugeführt. Das Lumineszenzlicht 12 aus der Probe 6 stammt von dem vereinzelten Molekül, das mit dem Anregungslicht 3 zur Emission des Lumineszenzlichts angeregt wird. Der dieser Emission von Lumineszenzlicht zugrundeliegende Vorgang ist Photolumineszenz, insbesondere Fluoreszenz. Die Probe 6 ist auf einem Probenhalter 18 angeordnet. Mit dem Probenhalter 18 kann die Probe beispielsweise zusätzlich in z-Richtung, d. h. in Richtung der optischen Achse des Objektivs 5 verlagert werden, um den Intensitätsanstiegsbereich bzw. die Nullstelle der Intensitätsverteilung des Anregungslichts 3 auch in dieser Richtung in der Probe 6 zu verlagern, insbesondere wenn die Nullstelle auch in z-Richtung von Intensitätsmaxima benachbart ist. Auf die Kamera 14 wird die Probe 6 so abgebildet, dass eine Lokalisierung des vereinzelten Moleküls aus der räumlichen Verteilung der Photonen des Lumineszenzlichts 12 von dem Molekül über der Kamera 14 möglich ist. Bei allen erfindungsgemäßen Verfahren wird jedoch zumindest zusätzlich der Ort des Moleküls in der Probe 6 aufgrund der Intensitäten des Lumineszenzlichts 12 bei unterschiedlicher Anordnung des Intensitätsanstiegsbereichs bzw. der Nullstelle der Intensitätsverteilung des Anregungslichts 3 in der Probe 6 bestimmt.

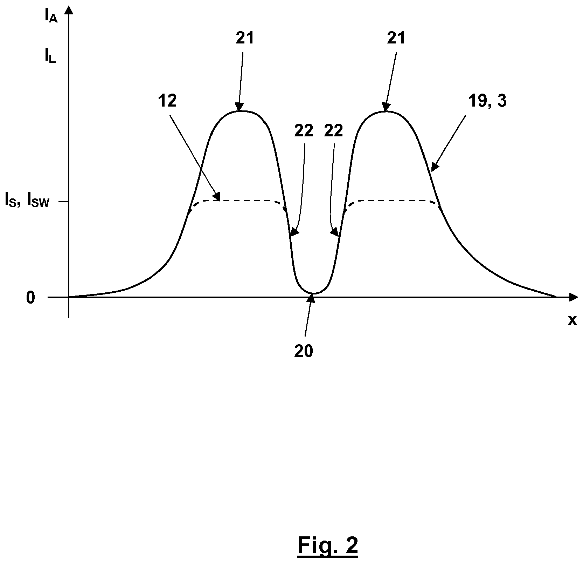

In **Fig. 2** ist die Intensitätsverteilung 19 des Anregungslichts 3 längs eines Schnitts in x-Richtung quer zur optischen Achse des Objektivs 5 gemäß Fig. 1 gezeigt. Die Intensitätsverteilung umfasst eine zentrale Nullstelle 20, in der die Intensität $I_A$ des Anregungslichts 3 bis auf null oder zumindest nahe null zurückgeht. Dieser Nullstelle 20 sind auf beiden Seiten Intensitätsmaxima 21 benachbart. Zwischen der Nullstelle 20 und den Intensitätsmaxima 21 sind Intensitätsanstiegsbereiche 22 ausgebildet. In diesen Intensitätsanstiegsbereichen 22 steigt die Intensität $I_A$ des Anregungslichts 3 von null auf eine Sättigungsintensität $I_S$ und darüber hinaus an. Bei der Sättigungsintensität $I_S$ erreicht die Intensität $I_L$ des mit dem Anregungslicht 3 angeregten Lumineszenzlichts 12 einen Sättigungswert $I_{SW}$, über den hinaus die Intensität $I_L$ nicht weiter ansteigt. Die Intensitätsverteilung 19 des Anregungslichts 3 ist symmetrisch zu der Nullstelle 20 ausgebildet, d. h. die Intensitätsanstiegsbereiche verlaufen symmetrisch zueinander.

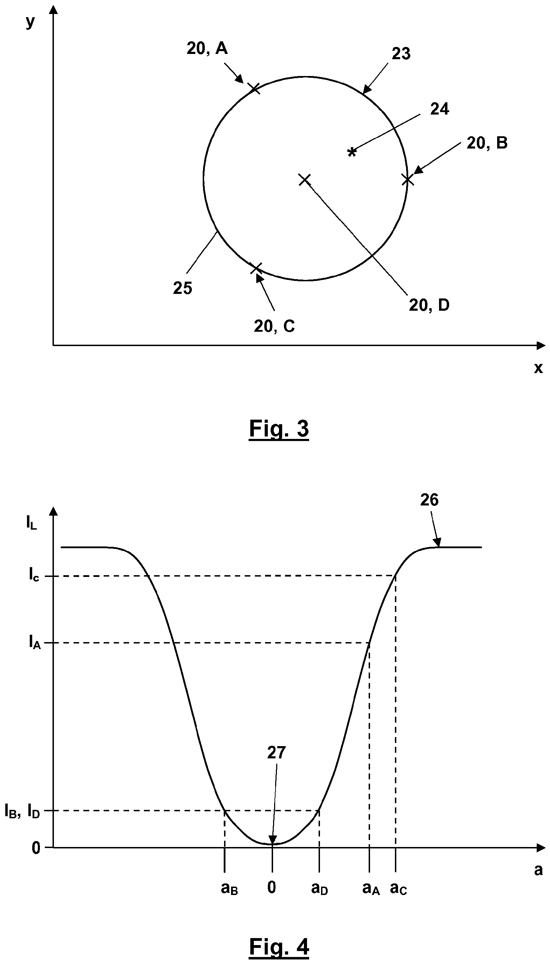

**Fig. 3** illustriert einen begrenzten Ortsbereich 23 in der Probe 6, in dem sich das Molekül 24 mutmaßlich befindet. Dieser Ortsbereich 23 ist ein Kreis in der x-y-Ebene. Um den Ort des Moleküls 24 in x- und y-Richtung zu bestimmen wird die Nullstelle 20 der Intensitätsverteilung 19 des Anregungslichts 3 in der x-y-Ebene an vier Positionen A bis D relativ zu dem begrenzten Ortsbereich angeordnet. Dabei liegen die drei auch als periphere Positionen bezeichneten Positionen A bis C auf einem Kreisbogen 25 um den begrenzten Ortsbereich 23 und sind dabei längs des Kreisbogens 25 in gleichen Abständen angeordnet. Die vierte Position D der Nullstelle 20 liegt im Zentrum des begrenzten Ortsbereichs 23 und damit im Mittelpunkt des Kreisbogens 25. Anders beschrieben liegen die Positionen A bis C in der x-y-Ebene in den Ecken eines gleichseitigen Dreiecks, und die Position D liegt im Mittelpunkt dieses Dreiecks. Zu den Positionen A bis D der Nullstelle 20 in der Probe wird das von dem Molekül 24 aufgrund seiner Anregung mit dem Anregungslicht 3 emittierte Lumineszenzlicht 12 registriert. Bei einer rotationssymmetrischen Ausbildung der Intensitätsanstiegsbereiche 22 um die Nullstelle 20 in der x-y-Ebene hängt die Intensität des zu den verschiedenen Positionen A bis D der Nullstelle 20 registrierten Lumineszenzlichts 12 allein von dem Abstand a des Moleküls 24 zu der jeweiligen Position A bis D und dem Verlauf 26 der Intensität $I_L$ des Lumineszenzlichts über diesem Abstand a ab, wie er in **Fig. 4** aufgetragen ist.

In Fig. 4 sind auch die Abstände $a_A$ bis $a_D$ des Moleküls 24 von der Nullstelle 20 für die Positionen A bis D eingezeichnet sowie die hieraus resultierenden Intensitäten des Lumineszenzlichts $I_A$ bis $I_D$. Indem diese Intensitäten bei der der ersten Ausführungsform der Erfindung gemessen werden, können anhand des Verlaufs 26 die zugehörigen Abstände $a_A$ bis $a_D$ ermittelt werden, und hieraus kann der Ort des Moleküls 24 gegenüber den bekannten Positionen A bis D bestimmt werden. Da die Intensitäten $I_A$ bis $I_D$ jeweils nur mit einer gewissen Genauigkeit bestimmt werden können, die von der Anzahl der zu den Positionen A bis D registrierten Photonen des Lumineszenzlichts 12 abhängt, kann auch der Ort des Moleküls 24 nicht exakt, sondern nur mit einer bestimmten Präzision bestimmt werden. Verglichen mit der hierfür benötigten Gesamtanzahl der Photonen des Lumineszenzlichts 12 ist die bei den erfindungsgemäßen Verfahren erreichte Präzision bei der Bestimmung des Orts des Moleküls 24 aber sehr hoch. Sie ist insbesondere deutlich höher als bei einer Lokalisierung des Moleküls 24 auf Basis einer räumlichen Verteilung der Photonen des Lumineszenzlichts von dem Molekül 24, die mit einem räumlich auflösenden Detektor wie der Kamera 14 gemäß Fig. 1 detektiert wird. Alternativ zu einer Bestimmung des Orts des Moleküls 24 gegenüber den Positionen A bis D auf Basis der Abstände $a_A$ bis $a_D$ kann an die zu den Positionen A bis D gemessenen Intensitäten $I_A$ bis $I_D$ eine den Verlauf 26 beschreibende Funktion angefittet werden, und der Ort des Moleküls 24 in der Probe kann dem Ort der Nullstelle 27 des Verlaufs 26 gleichgesetzt werden.

Bei einer praktischen Erprobung der ersten Ausführungsform der Erfindung konnte mit weniger als 5 % der Photonen des Lumineszenzlichts, die für eine Lokalisation des Moleküls 24 mit derselben Präzision benötigt werden, der Ort des Moleküls auf etwa 1 nm genau bestimmt werden.

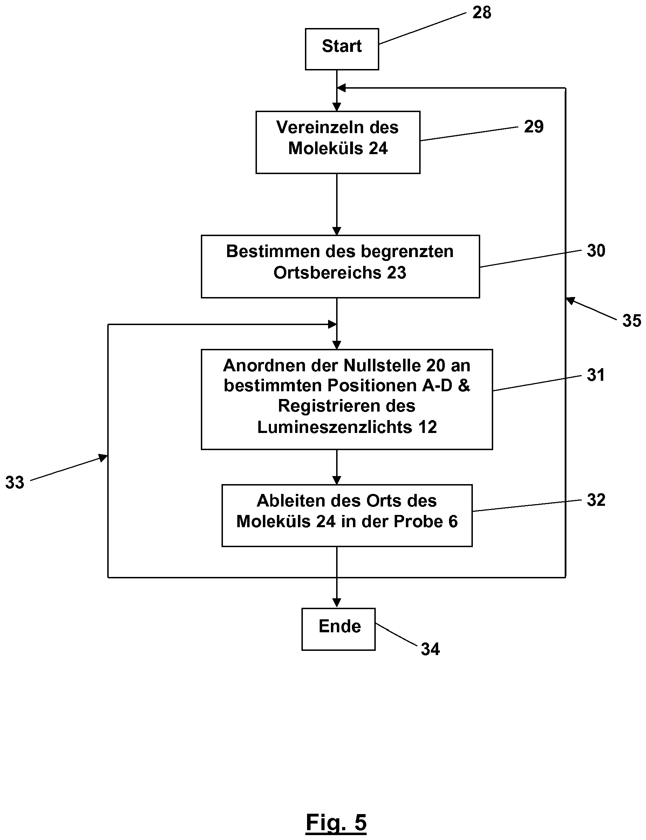

Die in **Fig. 5** in Form eines Blockdiagramms gezeigte Ausgestaltung der ersten Ausführungsform der Erfindung beginnt nach dem Start 28 mit einem Vereinzeln 29 des Moleküls. Es folgt ein Bestimmen 30 des begrenzten Ortsbereichs 23, in dem sich das Molekül mutmaßlich befindet, beispielsweise indem die Probe 6 insgesamt mit dem Anregungslicht 3 beaufschlagt und das auf die Kamera 14 abgebildete Lumineszenzlicht 12 aus der Probe ausgewertet wird. Dann folgt eine Prozedur 31 bestehend aus dem Anordnen der Nullstelle 20 an bestimmten Positionen A bis D und des Registrierens des Lumineszenzlichts 12 zu diesen Positionen A bis D. Hieran schließt sich ein Ableiten 32 des Orts des Moleküls 24 in der Probe 6 aus den Intensitäten des zu den verschiedenen Positionen A bis D registrierten Lumineszenzlichts 12 an. Eine Schleife 33, in der die Prozedur 31 und das Ableiten 32 erneut durchgeführt werden, kann vor dem Ende 34 dazu dienen, den Ort des Moleküls 24 mit noch höherer Präzision zu bestimmen, wobei die Position A bis D der Nullstelle 20 mehr an den beim ersten Ableiten 32 bestimmten Ort des Moleküls 24 in der Probe 6 herangerückt werden und die absolute Intensität des Anregungslichts erhöht wird.

Die Schleife 33 kann aber auch vielfach ohne dichtere Anordnung der Positionen A bis D der Nullstelle durchlaufen werden, um ein sich in der Probe bewegendes vereinzeltes Molekül 24 zu verfolgen, das heißt zu tracken. Dabei können die Positionen A bis D immer um den beim vorherigen Ableiten 32 bestimmten Ort des Moleküls 24 herum angeordnet werden. Der dabei von den Positionen A bis D überspannte Ortsbereich 23 ist so groß zu wählen, dass er das Molekül 24 auch dann noch umfasst, wenn es sich nach dem letzten Registrieren des Lumineszenzlichts 12 maximal weit in der Probe 6 bewegt hat. Eine größere Schleife 35 umfasst die Wiederholung aller Schritte 29 bis 32, um von einer Vielzahl von Molekülen, mit denen eine interessierende Struktur in der Probe 6 markiert ist, immer andere zu vereinzeln. Die Summe der bestimmten Orte der vereinzelten Moleküle 24 beschreibt dann mit zunehmender Genauigkeit die interessierende Struktur in der Probe 6.

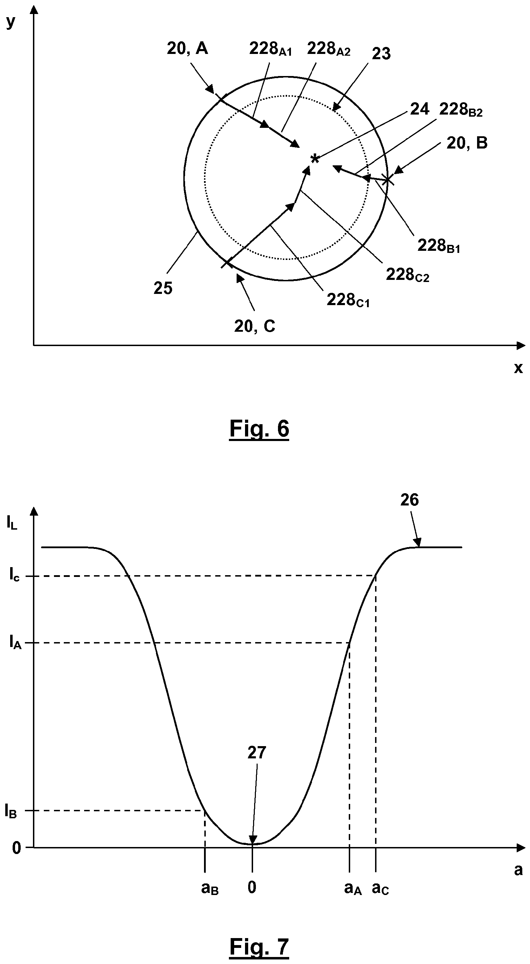

Zu der zweiten Ausführungsform der Erfindung illustriert **Fig. 6** einen anfänglichen Ortsbereich 23 in der Probe 6, in dem sich das Molekül 24 aufgrund früherer Messungen befindet. Dieser Ortsbereich ist hier ein Kreis in der x-y-Ebene. Um den Ort des Moleküls 24 in x- und y-Richtung zu bestimmen, werden drei anfängliche Positionen der Nullstelle 20 der Intensitätsverteilung 19 des Anregungslichts 3 in der x-y-Ebene relativ zu dem anfänglichen Ortsbereich festgelegt. Dabei sind die Positionen A bis C auf einem Kreisbogen 25 angeordnet, der mit Abstand um den anfänglichen Ortsbereich 23 herum verläuft, so dass der anfängliche Ortsbereich 23 in allen Raumrichtungen zwischen den Positionen A bis C liegt. Längs des Kreisbogens 25 sind die Positionen A bis C in gleichen Abständen angeordnet. Anders beschrieben liegen die Positionen A bis C in der x-y-Ebene in den Ecken eines gleichseitigen Dreiecks. Zu den Positionen A bis C der Nullstelle 20 in der Probe wird das von dem Molekül 24 aufgrund seiner Anregung mit dem Anregungslicht 3 emittierte Lumineszenzlicht 12 registriert. Bei einer rotationssymmetrischen Ausbildung der Intensitätsanstiegsbereiche 22 um die Nullstelle 20 in der x-y-Ebene hängt die Intensität des zu den verschiedenen Positionen A bis C der Nullstelle 20 registrierten Lumineszenzlichts 12 allein von dem Abstand a des Moleküls 24 zu der jeweiligen Position A bis C und dem Verlauf 26 der Intensität $I_L$ des Lumineszenzlichts über diesem Abstand a ab, wie er in **Fig. 7** aufgetragen ist.

In Fig. 7 sind die Abstände $a_A$-$a_C$ des Moleküls 24 von der Nullstelle 20 für die Positionen A bis D sowie die hieraus resultierenden Intensitäten des Lumineszenzlichts $I_A$ bis $I_D$ eingezeichnet. Wenn diese Intensitäten genau erfasst würden, könnte mittels des Verlaufs 26 die zugehörigen Abstände $a_A$ bis $a_C$ ermittelt und hieraus dann kann der Ort des Moleküls 24 gegenüber den bekannten Positionen A bis C bestimmt werden. Die Genauigkeit, mit der die Intensitäten erfasst werden, hängt von der Anzahl der zu den Positionen A bis C registrierten Photonen des Lumineszenzlichts 12 ab. Eine genaue Bestimmung der Intensitäten $I_A$ bis $I_C$ erfordert daher das Registrieren einer großen Anzahl von Photonen zu jeder Positionen A bis C der Nullstelle 20.

Die zweite Ausführungsform der Erfindung schlägt einen anderen Weg ein. Erfindungsgemäß werden nur relativ wenige Photonen des Lumineszenzlichts zu den verschiedenen Positionen A bis C der Nullstelle registriert, und zwar nur so viele, dass sich Aussagen darüber treffen lassen, ob die jeweilige Position A bis C der Nullstelle 20 noch relativ weit von dem Molekül 24 entfernt ist, das heißt, ob der Abstand $a_A$ bis $a_C$ noch groß ist und ob die Abstände $a_a$ bis $a_c$ der verschiedenen Positionen A bis C der Nullstelle 20 von dem Molekül 24 etwa gleich oder in bestimmter Weise unterschiedlich sind. Abhängig von dem Ergebnis dieser Bestimmungen, für die an jeder der Positionen A bis C nur wenige Photonen des Lumineszenzlichts von dem Molekül 24 registriert werden müssen, werden die Positionen A bis C in den anfänglichen Ortsbereich 23 hinein verschoben, wie mit Pfeilen $228_{A1}$ bis $228_{C1}$ in Fig. 6 illustriert ist. Zu den derart verschobenen Positionen A bis C der Nullstelle 20 wird dann wieder das Lumineszenzlicht 12 von dem Molekül 24 registriert, um die Bestimmungen erneut durchzuführen. Da die in Fig. 6 eingezeichneten Pfeile $228_{A1}$ bis $228_{C1}$ die Position A bis C der Nullstelle 20 in gleiche Abstände zu dem Molekül 24 führen, würden an den derart verschobenen Positionen A bis C der Nullstelle 20 gleiche Raten beziehungsweise zeitliche Abstände der Photonen des Lumineszenzlichts 12 erfasst. Entsprechend würden die Positionen A bis C anschließend auf ihren gemeinsamen Mittelpunkt hin weiter verschoben, was in Fig. 6 durch Pfeile $228_{A2}$ bis $228_{C2}$ angedeutet ist. Praktisch können zum Annähern der Positionen A bis C an das Molekül 24 sehr viele Wiederholungen der Schritte des Verschiebens der Positionen A bis C und des Registrierens des Lumineszenzlichts von dem Molekül 24 zu den verschiedenen Position A bis C durchgeführt werden. Dabei erfolgt das Registrieren des Lumineszenzlichts 12 zu den verschiedenen Positionen A bis C quasi gleichzeitig, um möglichst schnell festzustellen, wie sich die Raten der Photonen beziehungsweise deren zeitliche Abstände zueinander verhalten, um möglichst bald, das heißt nach insgesamt möglichst wenigen Photonen die Positionen A bis C in sinnvoller Weise weiter in den anfänglichen Ortsbereich 23 hinein zu verschieben, mit dem Ziel einer Annäherung der Positionen A bis C an das Molekül 24. Dabei versteht es sich, dass die Anzahl der zu jeder Position A bis C bis zum nächsten Verschieben registrierten Photonen des Lumineszenzlichts mit der Schrittweite korreliert ist, um die die Positionen A bis C anschließend sinnvoll verschoben werden können. Grundsätzlich müssen auch nicht alle Positionen A bis C nach jedem Registrieren von Lumineszenzlicht verschoben werden. Es können auch nur die Positionen A bis C verschoben werden, an denen die Rate der Photonen besonders groß ist beziehungsweise ihre zeitlichen Abstände besonders klein sind. Dies kann so weit getrieben werden, dass jede Position A bis C immer dann verschoben wird, wenn zu ihr eine gewisse Anzahl von Photonen registriert wurde, während die anderen Positionen A bis C, zu denen dies noch nicht der Fall ist, zunächst noch nicht verschoben werden. Mit der zweiten Ausführungsform der Erfindung kann der Ortsbereich des Moleküls 24 in der Probe sehr schnell, das heißt konkret mit viel weniger Photonen als bei einer Lokalisierung des Moleküls 24 in der Probe 6 sehr stark eingegrenzt werden. Wenn die Positionen A bis C schon sehr dicht beieinanderliegen, kann der von ihnen umschlossene Ortsbereich als Ort des Moleküls +/- der erreichten Präzision ausgegeben werden. Ausgehend von diesen letzten Positionen A bis C der Nullstelle 20 kann aber auch noch eine genauere Bestimmung des Orts des Moleküls 24 erfolgen, indem er beispielsweise von den zu diesen Positionen A bis C bestimmten Intensitäten des Lumineszenzlichts 12 anhand des Verlaufs 26 gemäß Fig. 7 abgeleitet wird.

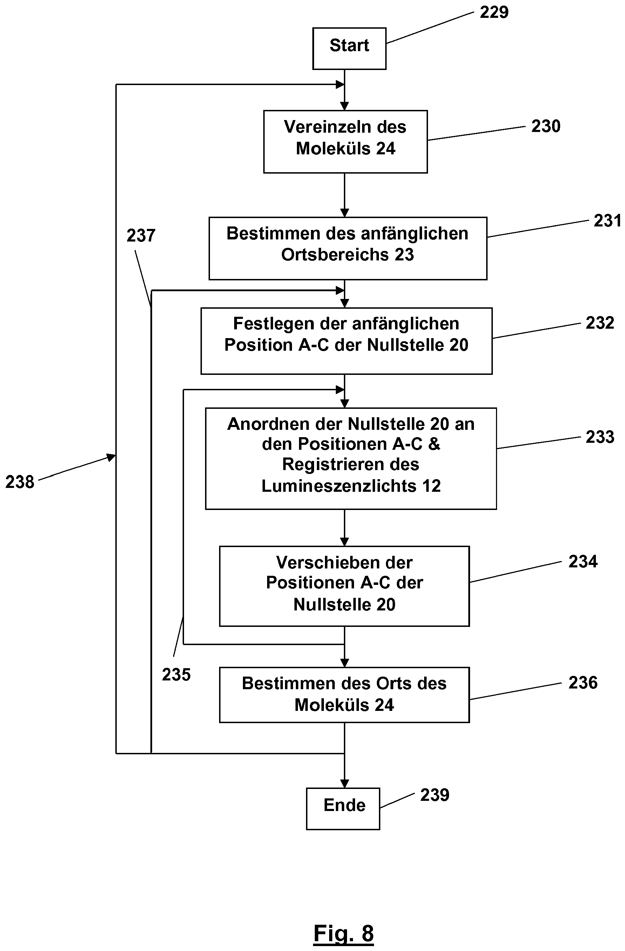

Die in **Fig. 8** in Form eines Blockdiagramms dargestellte Ausgestaltung der zweiten Ausführungsform der Erfindung beginnt nach dem Start 229 mit einem Vereinzeln 230 des Moleküls 24, beispielsweise mit Hilfe des Schaltlichts 8 gemäß Fig. 1. Dann erfolgt ein Bestimmen 231 des anfänglichen Ortsbereichs 23. Beim Festlegen 232 werden die anfänglichen Positionen A bis C der Nullstelle 20 relativ zu dem anfänglichen Ortsbereich 23 festgelegt. Dann wird in einer Prozedur 233 die Nullstelle 20 an den Positionen A bis C angeordnet, und zu den Positionen A bis C wird das von dem Molekül 24 emittierte Lumineszenzlicht 12 registriert. Dabei wird die Nullstelle 20 so zwischen den Positionen A bis C hin und her verschoben, wobei das Lumineszenzlicht 12 zu den verschiedenen Positionen A bis C getrennt registriert wird, dass das Lumineszenzlicht 12 zu den verschiedenen Positionen A bis C quasi gleichzeitig registriert wird. Beim nachfolgenden Verschieben 234 werden die Positionen A bis C der Nullstelle 20 in den anfänglichen Ortsbereich 23 hinein verschoben und zwar abhängig von den Raten beziehungsweise den zeitlichen Abständen der Photonen des zu den verschiedenen Positionen A bis C registrierten Lumineszenzlicht 12. Die Prozedur 233 und das Verschieben 234 werden in einer Schleife 235 wiederholt, bis sich die Positionen A bis C der Nullstelle 20 auf ein gewünschtes Maß an den Ort des Moleküls 24 in der Probe angenähert haben. Dann wird beim Bestimmen 236 der Ort des Moleküls 24 in der Probe bestimmt, beispielsweise als der von den letzten Positionen A bis C begrenzte Ortsbereich. Die Schritte 232, 233, 234 und 236 können einschließlich der Schleife 235 in einer weiteren Schleife 237 wiederholt werden, um das Molekül 24, wenn es sich in der Probe 6 bewegt, zu verfolgen. Man spricht dann auch von einem Tracken des Moleküls 24. Dabei können die Positionen A bis C immer um den beim vorherigen Bestimmen 236 bestimmten Ort des Moleküls 24 herum angeordnet werden. Der anschließend von den festgelegten Positionen A bis C überspannte anfängliche Ortsbereich 23 ist so groß zu wählen, dass er das Molekül 24 auch dann noch umfasst, wenn es sich nach der letzten Prozedur 233 maximal weit in der Probe 6 bewegt hat.

Alternativ können in einer größeren Schleife 238 zusätzlich die Schritte 230 und 231 wiederholt werden, um eine mit einer Vielzahl von gleichartigen Molekülen 24 markierte interessierende Strukturen in der Probe 6 sukzessive abzubilden. Das Ende 239 ist in diesem Fall dann erreicht, wenn die interessierende Struktur mit einer gewünschten Vollständigkeit abgebildet ist.

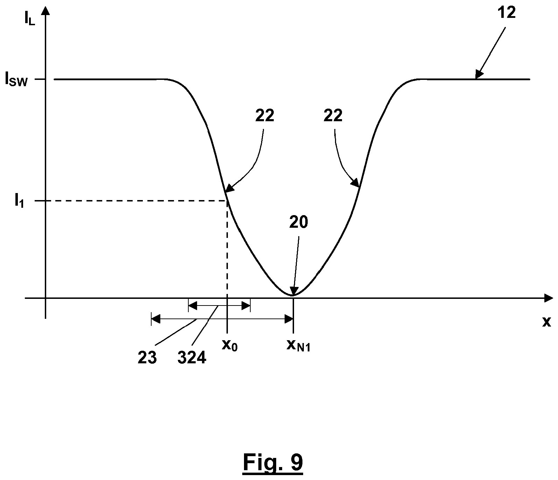

Zu der dritten Ausführungsform der Erfindung gibt **Fig. 9** für eine Lage der Nullstelle 20 bei $X_N$ die resultierende Intensität $I_L$ des Lumineszenzlichts 12 in Abhängigkeit von dem Ort x des vereinzelten Moleküls in der Probe an. Die Intensität $I_L$ steigt über die Intensitätsanstiegsbereiche 22 von null auf den Sättigungswert $I_{SW}$ an. Dies wird bei der dritten Ausführungsform der Erfindung wie folgt genutzt. Beispielsweise aus der Verteilung des Lumineszenzlichts 12 von dem vereinzelten Molekül über der Kamera 14 bei räumlicher Beleuchtung der Probe 6 mit dem Anregungslicht 3 gemäß Fig. 1 wird ein anfänglicher Ortsbereich 23 bestimmt, in dem sich der Ort des Moleküls in der Probe 6 befindet. Durch Positionieren der Nullstelle 20 mit Hilfe des Scanners 10 gemäß Fig. 1 an einer Position $X_{N1}$ wird der hier linke Intensitätsbereich 22 so in der Probe 6 angeordnet, dass er den anfänglichen Ortsbereich 23 überspannt. Dann wird während des Beaufschlagens der Probe 6 mit dem Anregungslicht 3 das von dem an dem tatsächlichen Ort $x_0$ befindlichen Molekül emittierte Lumineszenzlicht 12 registriert und dessen Intensität $I_1$ bestimmt. Die Genauigkeit, mit der die Intensität $I_1$ bestimmt wird, hängt von der Anzahl der Photonen des Lumineszenzlichts 12 ab, die zu dieser Position $X_{N1}$ der Nullstelle registriert wird. Wenn die Intensität $I_1$ ebenso wie der Sättigungswert $I_{SW}$ genau bekannt wären, könnte aus dem bekannten Verlauf der Intensität $I_L$ über den Abstand zu der Nullstelle 20 exakt auf den Ort $x_0$ des vereinzelten Moleküls geschlossen werden. Mit einer begrenzten Anzahl von Photonen, die zur Bestimmung der Intensität $I_1$ registriert werden, verbleibt hier jedoch ein Fehler. Ebenso verbleibt ein Fehler bei der Bestimmung des Sättigungswerts $I_{SW}$ beispielsweise aus den anfangs mit der Kamera 14 registrierten Photonen des Lumineszenzlichts 12 von dem Molekül. Hingegen ist der Verlauf der Intensität $I_L$ des Lumineszenzlichts 12 recht genau bestimmbar. In der Nähe der Nullstelle 20 ist er bei Anregung des Moleküls zur Emission des Lumineszenzlichts 12 durch einen Einphotonenprozess in aller Regel quadratisch von dem Abstand zu der Nullstelle 20 abhängig. Trotz der Ungenauigkeiten bei der Bestimmung von $I_1$ und $I_{SW}$ lässt sich daher aufgrund der Messung von $I_1$ ein weiterer Ortsbereich 324 bestimmen, in dem der Ort $x_0$ des Moleküls liegt und der deutlich kleiner als der Ortsbereich 23 ist. Dieser weitere Ortsbereich 324 ist in Fig. 9 für bestimmte fehlerbehaftete Messwerte von $I_1$ und $I_{SW}$ eingezeichnet.

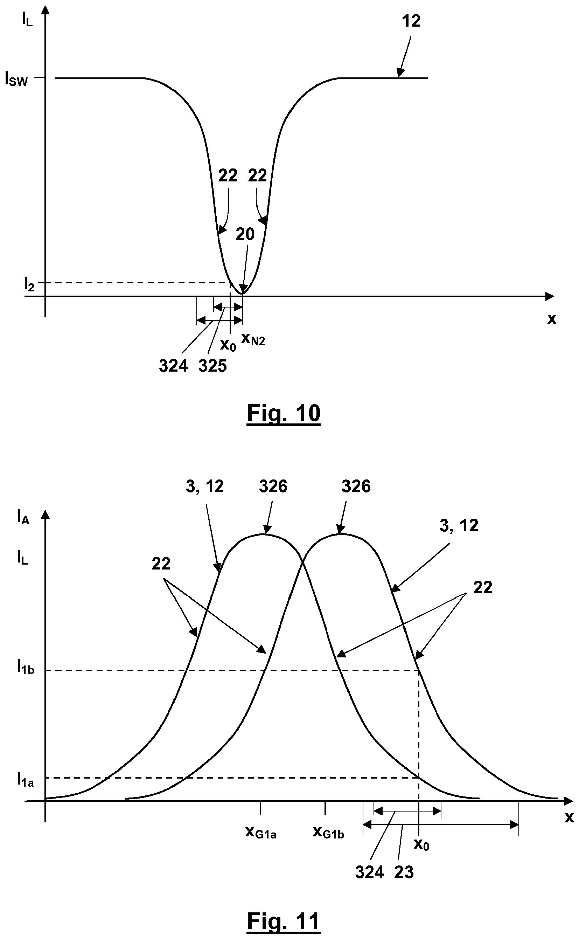

**Fig. 10** zeigt, wie die Kenntnis über den weiteren Ortsbereich 324 bei der dritten Ausführungsform der Erfindung zur neuerlichen Positionierung der Nullstelle 20 jetzt an der Position $X_{N2}$ genutzt wird, um den tatsächlichen Ort $x_0$ des Moleküls mit noch höherer Präzision, d. h. räumlicher Auflösung, in der Probe 6 zu bestimmen. Hierzu wird die Position $X_{N2}$ der Nullstelle 20 wieder so angeordnet, dass sich der linke Intensitätsanstiegsbereich 22 über den Ortsbereich 324 hinweg erstreckt. Zudem wird die absolute Intensität des Anregungslichts 3 so erhöht, dass der Sättigungswert $I_{SW}$ des Lumineszenzlichts 12 über einen kleineren Abstand zu der Nullstelle 20 erreicht wird. Dann wird zu dieser Position $X_{N2}$ der Nullstelle 20 die Intensität $I_2$ des Lumineszenzlichts 12 von dem Molekül bestimmt. Aus dieser Intensität $I_2$ und dem Sättigungswert $I_{SW}$ kann dann ein weiterer Ortsbereich 325 bestimmt werden, in dem sich das Molekül in der Probe 6 befindet und der wieder kleiner als der Ortsbereich 324 ist. Dieser weitere Ortsbereich 325 kann dann zur Positionierung der Nullstelle 20 an noch einer weiteren Position in der Probe 6 genutzt werden, um den Ort $x_0$ des Moleküls in der Probe mit noch höherer Präzision zu bestimmen. Der Ortsbereich 325 gibt aber den Ort $x_0$ des Moleküls in der Probe bereits mit sehr viel höherer Genauigkeit als der anfängliche Ortsbereich 23 an. Tatsächlich kann der Ort $x_0$ des Moleküls in der Probe 6 mit der dritten Ausführungsform der Erfindung praktisch mit einem Fehler von nicht mehr als der Größenordnung von 1 nm bestimmt werden.

Statt den weiteren Ortsbereich 324, 325 aus der Intensität $I_1$ bzw. $I_2$ und dem Sättigungswert $I_{SW}$ der Intensität $I_L$ des Lumineszenzlichts 12 zu bestimmen, kann die Nullstelle 20 auch an zwei verschiedenen Positionen $x_{N1a}$ und $x_{N1b}$ in der Probe angeordnet werden, um die zugehörigen Intensitäten des Lumineszenzlichts 12 zu messen und dann kann aus diesen zwei Intensitäten und dem Verlauf der Intensität $I_L$ über den Abstand zu der Nullstelle 20 der weitere Ortsbereich 324, 325 bestimmt werden, ohne dabei auf den Sättigungswert $I_{SW}$ zurückgreifen zu müssen.

**Fig. 11** illustriert ein entsprechendes Vorgehen bei einer gaußförmigen Intensitätsverteilung des Anregungslichts 3, die hier mangels Erreichens eines Sättigungsgrenzwerts in einer ebenfalls gaußförmigen Intensitätsverteilung des Lumineszenzlichts 12 resultiert. Die Intensitätsanstiegsbereiche 22 finden sich dabei an den Flanken der gaußförmigen Intensitätsverteilungen. Um den anfänglichen Ortsbereich 23 des Orts $x_0$ des Moleküls in der Probe 6 einzugrenzen, wird hier der Schwerpunkt 326 der gaußförmigen Intensitätsverteilung des Anregungslichts 3 an zwei unterschiedlichen Positionen $x_{G1a}$ und $x_{G1b}$ positioniert, so dass jeweils der in Fig. 11 linke Intensitätsanstiegsbereich 22 den anfänglichen Ortsbereich 23 überspannt. Zu jeder dieser Positionen $x_{G1a}$ und $x_{G1b}$ wird die Intensität $I_{1a}$ bzw. $I_{1b}$ des Lumineszenzlichts 12 von dem Molekül registriert. Aus den Intensitäten $I_{1a}$ und $I_{1b}$ wird zusammen mit dem Verlauf der Intensität $I_L$ des Lumineszenzlichts 12 über dem Abstand zu dem Schwerpunkt 326 ein kleinerer weiterer Ortsbereich 324 bestimmt, in dem sich der Ort $x_0$ des Moleküls in der Probe 6 befindet. Dabei ist zu berücksichtigen, dass Fig. 11 nicht im demselben Maßstab dargestellt ist wie die Figuren 3 und 4 und dass dann, wenn vorteilhafter Weise möglichst niedrige Intensitäten des Anregungslichts 3 in den Anstiegsbereichen 22 genutzt werden, um das vereinzelte Molekül möglichst wenig zu beanspruchen, die Positionen $x_{G1a}$, $x_{G1b}$ des Aufpunkts der Intensitätsverteilung $I_A$ des Anregungslichts 3 viel weiter weg von dem interessierenden Ort $x_0$ des Moleküls in der Probe angeordnet werden müssen als die Positionen $x_{N1}$ bzw. $x_{N2}$ der Nullstelle 20. Dies liegt daran, dass die gaußförmige Intensitätsverteilung $I_A$ des Anregungslichts 3 eine Halbwertsbreite von der Beugungsgrenze bei der Wellenlänge des Anregungslichts 3 aufweist, und die Bereiche kleiner Intensität $I_A$ des Anregungslichts 3 etwa diese Halbwertsbreite von dem Schwerpunkt 326 entfernt sind, während die kleinen Intensitäten des Anregungslichts 3 in den Intensitätsanstiegsbereichen 22 bei der Intensitätsverteilung des Anregungslichts 3 mit der Nullstelle 20 direkt an die Nullstelle 20 angrenzen.

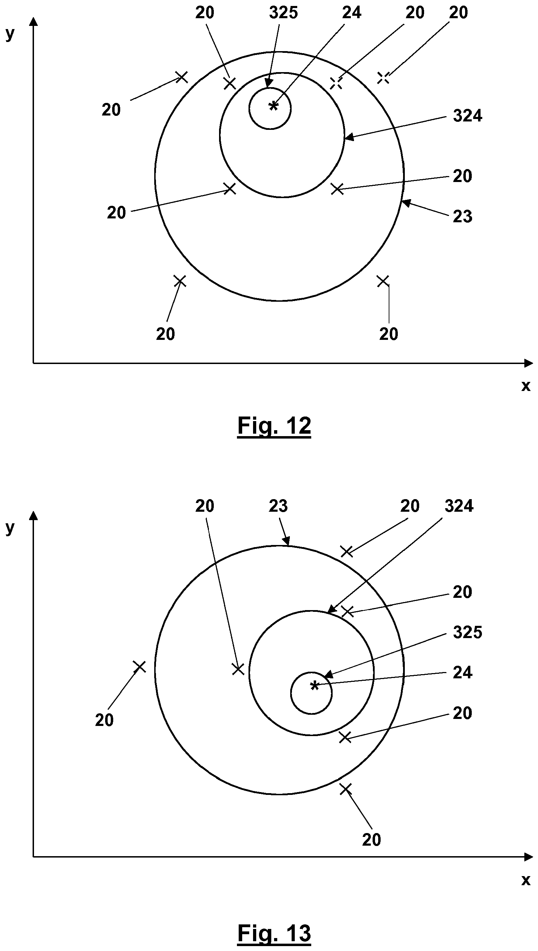

**Fig. 12** zeigt den anfänglichen Ortsbereich 23 des Moleküls in der Probe 6 in einer x-y-Ebene senkrecht zur optischen Achse des Objektivs 5 gemäß Fig. 1. Um diesen Ortsbereich herum sind vier gleich beabstandete Positionen der Nullstelle 20 als Aufpunkt der Intensitätsverteilung des Anregungslichts 3 gemäß Fig. 2 eingezeichnet. Wenn zu jeder dieser Positionen der Nullstelle 20 die Intensität des Lumineszenzlichts von dem Molekül 24 registriert wird, kann daraus der weitere Ortsbereich 324 bestimmt werden. Dabei ist eine der in Fig. 12 dargestellten Positionen der Nullstelle 20 nur fakultativ, was bei der hier oben rechts dargestellten Position zeichnerisch angedeutet ist. Entsprechend kann in einem nächsten Schritt der dritten Ausführungsform der Erfindung der weitere Ortsbereich 324 durch Positionieren der Nullstelle 20 an daran angrenzenden Positionen weiter auf den weiteren Ortsbereich 325 eingeschränkt werden, der den Ort des Moleküls 24 in der Probe 6 mit noch kleinerem Fehler angibt. Auch hier ist eine der in Fig. 12 dargestellte Position der Nullstelle 20 fakultativ, was wieder oben rechts zeichnerisch angedeutet ist.

**Fig. 13** zeigt eine andere Anordnung der Nullstelle 20 gegenüber dem anfänglichen Ortsbereich 23 und dem weiteren Ortsbereich 324 in jeweils drei gleich beabstandeten Positionen. Auch diese drei Positionen umfassen je Raumrichtung x und y, in denen der Ort des Moleküls 24 bestimmt wird, mindestens zwei verschiedene Positionen.

Das in den Figuren 6 und 7 für zwei Dimensionen illustrierte Vorgehen kann auch auf drei Dimensionen ausgeweitet werden. Dazu sind zu jedem Ortsbereich 23-325 jeweils mindestens vier Positionen der Nullstelle 20 festzulegen.

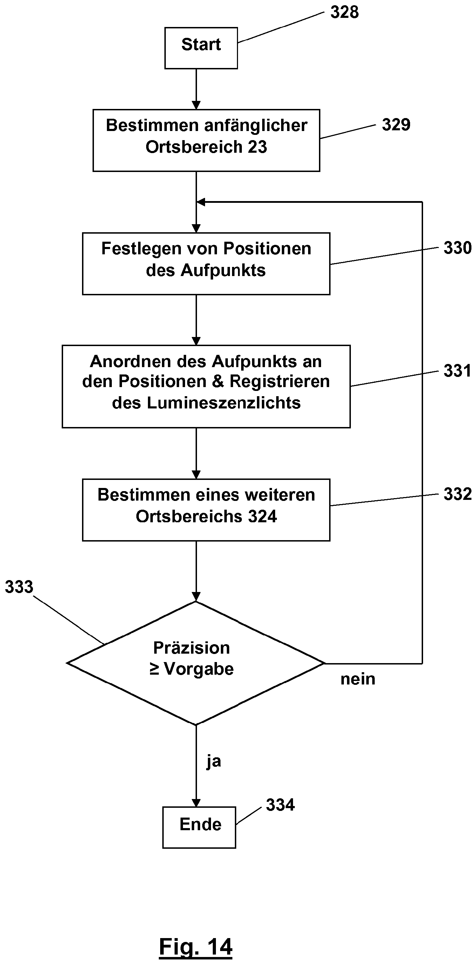

**Fig. 14** ist ein Blockdiagramm einer Ausgestaltung der dritten Ausführungsform der Erfindung. Nach dem Start 328 erfolgt ein Bestimmen 329 des anfänglichen Ortsbereichs 23. Dann erfolgt für den bestimmten Ortsbereich ein Festlegen 330 von Positionen des Aufpunkts, d. h. der Nullstelle 20 oder des Schwerpunkts 326. Im folgenden Schritt 331 wird die Intensitätsverteilung des Anregungslichts 3 unter Anordnung des Aufpunkts an den Positionen auf die Probe 6 gerichtet und das von dem vereinzelten Molekül in der Probe 6 emittierte Lumineszenzlicht wird registriert. Auf Basis der in dem Schritt 331 erfassten Intensitäten des Lumineszenzlichts erfolgt dann ein Bestimmen 332 eines weiteren Ortsbereichs 324, ggf. unter zusätzlicher Verwendung des Sättigungswerts $I_{SW}$ des Lumineszenzlichts von dem Molekül. Anschließend findet eine Überprüfung 333 statt, ob die durch die Abmessung des Ortsbereichs 324 gegebene Präzision bereits eine Vorgabe für diese Präzision erfüllt. Wenn die Überprüfung 333 ergibt, dass die Präzision noch nicht hoch genug ist, werden die Schritte 330-332 wiederholt, wobei beim Festlegen 330 die Positionen des Aufpunkts relativ zu dem weiteren Ortsbereich 324 festgelegt werden. Wenn die Überprüfung 333 ein positives Ergebnis hat, ist das Ende 334 des Verfahrens für die Bestimmung des Orts des Moleküls 24 in der Probe 6 erreicht.

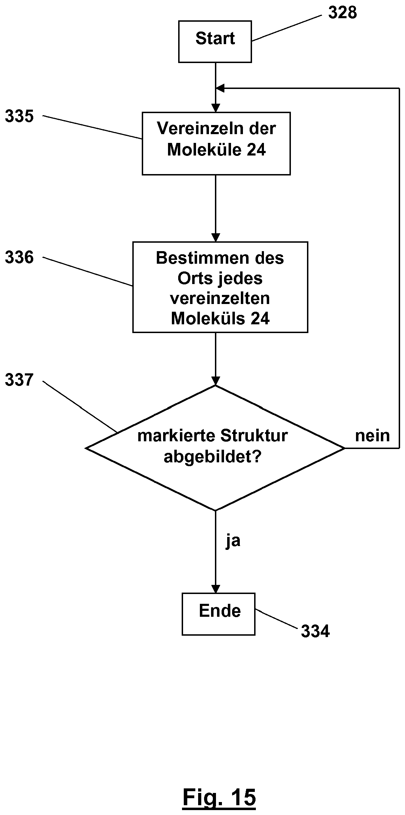

**Fig. 15** ist ein Blockdiagramm eines Verfahrens, bei dem das Verfahren gemäß Fig. 14 bezüglich seiner Schritte 329-333 wiederholt durchgeführt wird. Hier erfolgt nach dem Start 328 zunächst ein Vereinzeln 335 der Moleküle. Dann werden in einer Routine 336 unter Anwendung der Schritte 329-333 für jedes der vereinzelten Moleküle deren Orte bestimmt. Bei einer Überprüfung 337 wird festgestellt, ob eine mit den Molekülen markierte Struktur bereits mit ausreichendem Detaillierungsgrad abgebildet ist. Wenn nein, werden von den Molekülen, die die Struktur markieren, erneut einige vereinzelt. Wenn die markierte Struktur bei der Überprüfung 337 als ausreichend abgebildet angesehen wird, ist das Ende 334 erreicht.

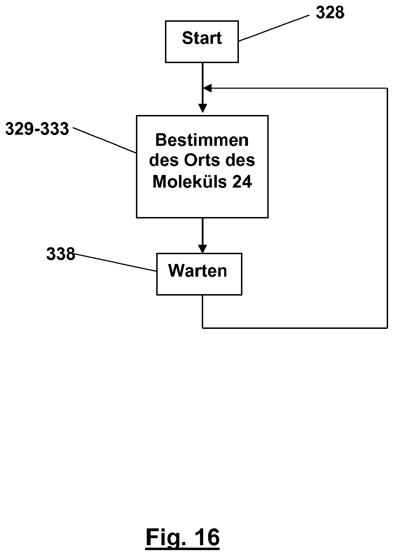

**Fig. 16** ist ein Blockdiagramm für eine wiederholte Ausführung der Schritte 329-333 gemäß Fig. 14 zum Tracken eines vereinzelten Moleküls 24 in der Probe 6. Dazu wird nach dem Start 328 der momentane Ort des Moleküls 24 mit der gewünschten Genauigkeit durch Ausführung der Schritte 329-333 bestimmt. Anschließend wird optional gewartet 338 oder es wird sofort erneut der aktuelle Ort des Moleküls in der Probe 6 bestimmt. Bei jeder der Wiederholungen des Bestimmens des Orts des Moleküls 24 mit den Schritten 329-333 kann der zuletzt bestimmte kleinste Ortsbereich des Moleküls 24 in der Probe 6 auf einen neuen anfänglichen Ortsbereich zentrisch aufgeweitet werden, der dann als anfänglicher Ortsbereich 23 für die neuerliche Durchführung der Schritte 329-333 verwendet wird. Die Aufweitung des zuletzt bestimmten kleinsten Ortsbereichs ist so vorzunehmen, dass sich das Molekül 24 in der Zwischenzeit noch nicht aus dem aufgeweiteten Ortsbereich heraus bewegt haben kann.

## BEZUGSZEICHENLISTE

| | |
|---|---|
| 1 | STED-Fluoreszenzlichtmikroskop |
| 2 | Lichtquelle |
| 3 | Anregungslicht |
| 4 | Strahlformungsmittel |
| 5 | Objektiv |
| 6 | Probe |
| 7 | Lichtquelle |
| 8 | Schaltlicht |
| 9 | dichroitischer Strahlteiler |
| 10 | Scanner |
| 11 | dichroitischer Strahlteiler |
| 12 | Lumineszenzlicht |
| 13 | Optik |
| 14 | Kamera |
| 15 | dichroitischer Strahlteiler |
| 16 | Punktdetektor |
| 17 | Lochblende |
| 18 | Probenhalter |
| 19 | Intensitätsverteilung |
| 20 | Nullstelle der Intensitätsverteilung 19 des Anregungslichts 3 |

| | |
|---|---|
| 21 | Maximum |
| 22 | Intensitätsanstiegsbereich |
| 23 | begrenzter Ortsbereich |
| 24 | Molekül |
| 25 | Kreisbogen |
| 26 | Verlauf |
| 27 | Nullstelle des Verlaufs 26 |
| 28 | Start |
| 29 | Vereinzeln |
| 30 | Bestimmen |
| 31 | Prozedur |
| 32 | Ableiten |
| 33 | Schleife |
| 34 | Ende |
| 35 | Schleife |
| 228 | Pfeil |
| 229 | Start |
| 230 | Vereinzeln |
| 231 | Bestimmen |
| 232 | Festlegen |
| 233 | Prozedur |
| 234 | Verschieben |
| 235 | Schleife |
| 236 | Routine |
| 237 | Schleife |
| 238 | Schleife |
| 239 | Ende |
| 324 | weiterer Ortsbereich |
| 325 | weiterer Ortsbereich |
| 326 | Schwerpunkt (Aufpunkt) der Intensitätsverteilung 19 des Anregungslichts 3 |
| 328 | Start |
| 329 | Bestimmen |
| 330 | Festlegen |
| 331 | Schritt |
| 332 | Bestimmen |
| 333 | Überprüfung |
| 334 | Ende |
| 335 | Vereinzeln |
| 336 | Routine |
| 337 | Überprüfung |
| 338 | Warten |
| $I_A$ | Intensität des Anregungslichts 3 |
| $I_L$ | Intensität des Lumineszenzlichts 12 |
| $I_S$ | Sättigungsintensität des Anregungslichts 3 |
| $I_{SW}$ | Sättigungswert der Intensität $I_L$ des Lumineszenzlichts 12 |
| a | Abstand |
| A | Position der Nullstelle 20 |
| B | Position der Nullstelle 20 |
| C | Position der Nullstelle 20 |
| D | Position der Nullstelle 20 |
| $a_A$ | Abstand der Position A der Nullstelle 20 von dem Molekül 24 |
| $a_B$ | Abstand der Position B der Nullstelle 20 von dem Molekül 24 |
| ac | Abstand der Position C der Nullstelle 20 von dem Molekül 24 |

$a_D$      Abstand der Position D der Nullstelle 20 von dem Molekül 24

$I_A$      Intensität des Lumineszenzlichts 12 an der Position A Position der Nullstelle 20

$I_B$      Intensität des Lumineszenzlichts 12 an der Position B Position der Nullstelle 20

$I_C$      Intensität des Lumineszenzlichts 12 an der Position C Position der Nullstelle 20

$I_D$      Intensität des Lumineszenzlichts 12 an der Position D Position der Nullstelle 20

$x_0$      Ort des Moleküls 24 in der Probe 6

$X_{N1}$      Position der Nullstelle 20 der Intensitätsverteilung 19 des Anregungslichts 3

$X_{N2}$      Position der Nullstelle 20 der Intensitätsverteilung 19 des Anregungslichts 3

$X_{G1a}$      Position des Schwerpunkts 326 der Intensitätsverteilung 19 des Anregungslichts 3

$X_{G1b}$      Position des Schwerpunkts 326 der Intensitätsverteilung 19 des Anregungslichts 3


**Patentansprüche**

1. Verfahren zum räumlich hochauflösenden Bestimmen des Orts eines vereinzelten Moleküls (24) in einer oder mehreren Raumrichtungen in einer Probe (6), wobei das Molekül (24) mit Anregungslicht (3) zur Emission von Lumineszenzlicht (12) anregbar ist,

   - wobei das Anregungslicht (3) mit einer Intensitätsverteilung (19) auf die Probe (6) gerichtet wird, die eine Nullstelle (20) und Intensitätsanstiegsbereiche (22) aufweist, welche in jeder der Raumrichtungen beidseitig an die Nullstelle (20) angrenzen,
   - wobei zu jeder von verschiedenen Positionen (A-D) der Nullstelle (20) in der Probe (6) das von dem Molekül (24) emittierte Lumineszenzlicht (12) registriert wird und
   - wobei der Ort des Moleküls (24) in der Probe (6) von den Intensitäten ($I_A$-$I_D$) des zu den verschiedenen Positionen (A-D) der Nullstelle (20) registrierten Lumineszenzlichts (12) abgeleitet wird,

   **dadurch gekennzeichnet, dass** die Nullstelle (20) an nicht mehr als n x 3 verschiedenen Positionen (A-D) in der Probe (6) angeordnet wird, um den Ort des Moleküls (24) in den n Raumrichtungen von den zu den verschiedenen Positionen (A-D) der Nullstelle (20) registrierten Intensitäten ($I_A$-$I_D$) des Lumineszenzlichts (12) abzuleiten, wobei die verschiedenen Positionen (A-D), an denen die Nullstelle (20) in der Probe (6) angeordnet wird, in jeder Raumrichtung, in der der Ort des Moleküls (24) in der Probe (6) bestimmt wird, je eine Position (A-C) auf beiden Seiten eines Zentrums eines begrenzten Ortsbereichs (23) in der Probe umfassen, in dem das Molekül (24) angeordnet ist.

2. Verfahren nach Anspruch 1, **dadurch gekennzeichnet, dass** die Nullstelle (20) an nicht mehr als (n x 2) + 1 verschiedenen Positionen (A-D) in der Probe angeordnet wird, um den Ort des Moleküls (24) in den n Raumrichtungen von den zu den verschiedenen Positionen (A-D) der Nullstelle (20) registrierten Intensitäten ($I_A$-$I_D$) des Lumineszenzlichts (12) abzuleiten, wobei die Nullstelle (20) optional an nicht mehr als n + 2 verschiedenen Positionen (A-D) in der Probe angeordnet wird, um den Ort des Moleküls (24) in den n Raumrichtungen von den zu den verschiedenen Positionen (A-D) der Nullstelle (20) registrierten Intensitäten ($I_A$-$I_D$) des Lumineszenzlichts (12) abzuleiten.

3. Verfahren nach Anspruch 1 oder 2, **dadurch gekennzeichnet, dass** die verschiedenen Positionen (A-D), an denen die Nullstelle (20) in der Probe (6) angeordnet wird, in jeder Raumrichtung, in der der Ort des Moleküls (24) in der Probe (6) bestimmt wird, neben den beiden Positionen (A-C) auf beiden Seiten des Zentrums des begrenzten Ortsbereich (23) eine Position (D) in dem Zentrum des begrenzten Ortsbereichs (23) umfassen.

4. Verfahren nach einem der Ansprüche 1 bis 3, **dadurch gekennzeichnet, dass** die verschiedenen Positionen (A-D), an denen die Nullstelle (20) in der Probe (6) angeordnet wird,

   - wenn der Ort des Moleküls (24) in zwei Raumrichtungen bestimmt wird, eine zentrale Position (D) und drei periphere Positionen (A-C) sind, wobei die peripheren Positionen (A-C) in einer von den beiden Raumrichtungen aufgespannten und durch die zentrale Position verlaufenden Ebene äquidistant auf einem Kreisbogen (25) um die zentrale Position angeordnet sind, und/oder
   - wenn der Ort des Moleküls (24) in drei Raumrichtungen bestimmt wird, eine zentrale Position und vier periphere Positionen sind, wobei die peripheren Positionen äquidistant auf einer Kugelschale um die zentrale Position angeordnet sind.

5. Verfahren nach einem der vorhergehenden Ansprüche, **dadurch gekennzeichnet, dass** eine maximale Intensität des Anregungslichts (3) so eingestellt wird, dass ein maximaler Abstand jeder Position (A-D) der Nullstelle (20) zu jedem Punkt zwischen den Positionen (A-D) der Nullstelle (20) in der Probe (6) nicht größer als eine Ausdehnung jedes Intensitätsanstiegsbereichs (22) in Richtung des Abstands (a) ist, über der die Intensität des Anregungslichts (3) bis auf 90 % einer Sättigungsintensität (ls) des Anregungslichts (3) ansteigt.

6. Verfahren nach einem der vorhergehenden Ansprüche, **dadurch gekennzeichnet,**

- **dass** das Lumineszenzlicht (12) zu den Positionen (A-D) der Nullstelle nur so lange registriert wird, bis die Intensitäten (I_A-I_D) des registrierten Lumineszenzlichts (12) zu den Positionen (A-D) der Nullstelle (20) mit einer ausreichenden Genauigkeit erfasst sind, dass der Ort der vereinzelten Moleküls (24) mit einer vorgegebenen Präzision bestimmbar ist,
- wobei die vorgegebene Präzision optional im Bereich zwischen 0,5 und 20 nm liegt.

7. Wiederholte Durchführung des Verfahrens nach einem der vorhergehenden Ansprüche mit kleiner werdenden Abständen der Positionen (A-D) der Nullstelle (20) in der Probe (6), wobei die Positionen (A-D) der Nullstelle (20) in der Probe (6) bei jeder Wiederholung des Verfahrens um den Ort des Moleküls (24) in der Probe (6) herum angeordnet werden, der bei der vorherigen Durchführung des Verfahrens von den registrierten Intensitäten (I_A-I_D) des Lumineszenzlichts (12) abgeleitet wurde.

8. Verfahren zum räumlich hochauflösenden Bestimmen (31) des Orts eines vereinzelten Moleküls (24) in einer oder mehreren Raumrichtungen in einer Probe (6), wobei das Molekül (24) mit Anregungslicht (3) zur Emission von Lumineszenzlicht (12) anregbar ist,

- wobei das Anregungslicht (3) mit einer Intensitätsverteilung auf die Probe (6) gerichtet wird, die eine Nullstelle (20) und Intensitätsanstiegsbereiche (22) aufweist, welche in jeder der Raumrichtungen, in denen der Ort des Moleküls (24) bestimmt wird, beidseitig an die Nullstelle (20) angrenzen,
- wobei die Nullstelle (20) in jeder der Raumrichtungen, in denen der Ort des Moleküls (24) bestimmt wird, in der Probe verschoben wird, wobei zu jeder Position (A, B, C) der Nullstelle (20) in der Probe (6) das von dem Molekül (24) emittierte Lumineszenzlicht (12) registriert wird, **dadurch gekennzeichnet,**
- **dass** ein anfänglicher Ortsbereich (23) in der Probe (6) bestimmt wird, in dem das Molekül (24) angeordnet ist,
- **dass** in jeder der Raumrichtungen, in denen der Ort des Moleküls (24) bestimmt wird, mindestens eine anfängliche Position (A, B, C) der Nullstelle (20) so festgelegt wird, dass sie in der jeweiligen Raumrichtung auf einer Seite des anfänglichen Ortsbereichs (23) liegt,

- **dass** das Lumineszenzlicht (12) zu den allen Raumrichtungen, in denen der Ort des Moleküls (24) bestimmt wird, zugeordneten Positionen (A, B, C) der Nullstelle (20), wenn dies mehrere Positionen (A, B, C) sind, quasi gleichzeitig registriert wird, indem die Nullstelle (20) wiederholt zwischen den Positionen (A, B, C) verschoben wird,
- **dass** die Positionen (A, B, C) der Nullstelle (20) abhängig von den zu jeder der Positionen (A, B, C) registrierten Photonen des Lumineszenzlichts (12) sukzessive in den anfänglichen Ortsbereich (23) hinein verschoben werden, so dass die Positionen (A, B, C) der Nullstelle (20) an den tatsächlichen Ort des Moleküls (24) in der Probe angenähert und damit auf einen gegenüber dem anfänglichen Ortsbereich (23) verkleinerten Ortsbereich des Moleküls (24) eingeschränkt werden, dessen Abmessungen einer Präzision entsprechen, mit der der Ort des vereinzelten Moleküls (24) bestimmt wird.

9. Verfahren nach Anspruch 8, **dadurch gekennzeichnet, dass** die Positionen (A, B, C) der Nullstelle (20) abhängig von den Raten oder zeitlichen Abständen der zu jeder der Positionen (A, B, C) registrierten Photonen des Lumineszenzlichts (12) sukzessive in den anfänglichen Ortsbereich (23) hinein verschoben werden.

10. Verfahren nach Anspruch 8 oder 9, **dadurch gekennzeichnet, dass** eine Anzahl der Positionen (A, B, C) der Nullstelle (20) zwischen n und 2n liegt, wobei n die Anzahl der Raumrichtungen ist, in denen der Ort des Moleküls (24) bestimmt wird.

11. Verfahren nach einem der Ansprüche 8 bis 9, **dadurch gekennzeichnet, dass** in mindestens einer der Raumrichtungen, in denen der Ort des Moleküls (24) bestimmt wird, der Ort des Moleküls (24) in der Probe (6)

- mit der der jeweiligen Raumrichtung zugeordneten Position (A, B, C) der Nullstelle (20) gleichgesetzt wird, in der eine Rate der Photonen des Lumineszenzlichts (12) minimiert ist, die zu dieser Position (A, B, C) der Nullstelle (20) registriert werden, oder
- aus einer Rate oder zeitlichen Abständen der Photonen des Lumineszenzlichts (12) abgeleitet wird, die zu der mindestens einen der jeweiligen Raumrichtung zugeordneten Position (A, B, C) der Nullstelle (20) registriert werden.

12. Verfahren nach einem der Ansprüche 8 bis 10, **dadurch gekennzeichnet,**

- **dass** die anfänglichen Positionen (A, B, C) der Nullstelle (20) zu jeder der Raumrichtungen, in denen der Ort des Moleküls (24) bestimmt wird, zwei Positionen umfassen, die in der jeweiligen Raumrichtung auf beiden Seiten des anfänglichen Ortsbereichs (23) liegen, und
- **dass** durch das sukzessive Verschieben (234) der allen Raumrichtungen, in denen der Ort des Moleküls (24) bestimmt wird, zugeordneten Positionen (A, B, C) der Nullstelle (20) abhängig von den zu allen Positionen bestimmten Raten oder zeitlichen Abständen der Photonen des Lumineszenzlichts (12) ein zwischen den Positionen (A, B, C) der Nullstelle (20) verbleibender Ortsbereich des Moleküls (24) sukzessive eingeengt wird.

13. Verfahren nach Anspruch 12, **dadurch gekennzeichnet,**

- **dass** der zwischen den Positionen der Nullstelle (A, B, C) verbleibende Ortsbereich des Moleküls (24) sukzessive eingeengt wird, bis seine Abmessungen nicht mehr größer als eine vorgegebene Präzision sind,
- wobei die vorgegebene Präzision optional im Bereich zwischen 0,5 nm und 20 nm oder im Bereich von 1 nm bis 10 nm liegt.

14. Verfahren nach einem der Ansprüche 8 bis 13, **dadurch gekennzeichnet,**

- **dass** mindestens eine der allen Raumrichtungen, in denen der Ort des Moleküls (24) bestimmt wird, zugeordneten Positionen (A, B, C) der Nullstelle (20) verschoben wird, sobald an den bisherigen Positionen im Mittel p Photonen des Lumineszenzlichts (12) registriert wurden, wobei p nicht größer als 30, 20, 10 oder 5 ist, und/oder
- **dass** mindestens eine der allen Raumrichtungen, in denen der Ort des Moleküls (24) bestimmt wird, zugeordneten Positionen (A, B, C) der Nullstelle (20) verschoben wird, sobald an den bisherigen Positionen insgesamt n x q Photonen des Lumineszenzlichts (12) registriert wurden, wobei n die Anzahl der Raumrichtungen ist, in welchen der Ort des Moleküls (24) in der Probe (6) bestimmt wird, und wobei q nicht größer als 50, 25 oder 5 ist, und/oder
- **dass** die Position (A, B, C) jeder Nullstelle (20) verschoben wird, sobald an der bisherigen Position m Photonen des Lumineszenzlichts (12) registriert wurden, wobei m nicht größer als 30, 20, 10, 5 oder 3 ist.

15. Verfahren nach einem der Ansprüche 8 bis 14, **dadurch gekennzeichnet,**

- **dass** eine maximale Intensität ($I_A$) des Anregungslichts (3) so eingestellt wird, dass sich der anfängliche Ortsbereich (23) bezüglich jeder Position der Nullstelle (20) in einem Bereich von nicht mehr als 90 % einer Sättigungsintensität (Is) des Anregungslichts (3) befindet, und
- **dass** die absolute Intensität ($I_A$) des Anregungslichts (3) mit dem Verschieben (234) der Positionen (A, B, C) der Nullstelle (20) sukzessive erhöht wird, wobei die absolute Intensität ($I_A$) des Anregungslichts (3)

- so erhöht wird, dass eine Rate der zu allen jeweiligen Positionen (A, B, C) der Nullstelle (20) registrierten Photonen zumindest vorübergehend gleich bleibt, und/oder
- insgesamt um mindestens 50 % erhöht wird.

16. Verfahren nach einem der vorhergehenden Ansprüche, **dadurch gekennzeichnet, dass** die in jeder der Raumrichtungen, in denen der Ort des Moleküls (24) bestimmt wird, an die Nullstelle (20) angrenzenden Intensitätsanstiegsbereiche (22) symmetrisch zu der Nullstelle (20) ausgebildet sind.

17. Verfahren zum räumlich hochauflösenden Bestimmen des Orts eines vereinzelten Moleküls (24) in einer oder mehreren Raumrichtungen in einer Probe (6), wobei das Molekül (24) mit Anregungslicht (3) zur Emission von Lumineszenzlicht (12) anregbar ist,

- wobei das Anregungslicht (3) mit einer Intensitätsverteilung (19) auf die Probe (6) gerichtet wird, die in jeder der Raumrichtungen, in denen der Ort des Moleküls (24) bestimmt wird, mindestens einen Intensitätsanstiegsbereich (22) mit bekanntem streng monotonem Verlauf der Intensität ($I_A$) des Anregungslichts (3) über einem Abstand zu einem Aufpunkt (20, 326) der Intensitätsverteilung (19) aufweist,
- wobei der Aufpunkt (20, 326) der Intensitätsverteilung (19) in jeder der Raumrichtungen, in denen der Ort des Moleküls (24) bestimmt wird, an verschiedenen Positionen in der Probe (6) angeordnet wird,
- wobei zu jeder Position des Aufpunkts (20, 326) der Intensitätsverteilung (19) in der Probe (6) das von dem Molekül (24) emittierte Lumineszenzlicht (12) registriert wird und
- wobei der Ort des Moleküls in der Probe ($x_0$) von Intensitäten des registrierten Lumineszenzlichts (12) abgeleitet wird,
**dadurch gekennzeichnet,**
- **dass** ein anfänglicher Ortsbereich (23) in der Probe (6) bestimmt wird, in dem das Molekül (24) angeordnet ist,

- **dass** (i) in jeder der Raumrichtungen, in denen der Ort des Moleküls (24) bestimmt wird, mindestens eine Position des Aufpunkts (20, 326) der Intensitätsverteilung (19) so festgelegt wird, dass sich der mindestens eine Intensitätsanstiegsbereich (22) in der jeweiligen Raumrichtung über den anfänglichen Ortsbereich (23) erstreckt,
- **dass** (ii) aus Intensitätswerten ($I_1$, $I_{SW}$, $I_{1a}$, $I_{1b}$) des Lumineszenzlichts (12), die zu jeder der Raumrichtungen, in denen der Ort des Moleküls (24) bestimmt wird, zwei Intensitätswerte ($I_1$, $I_{SW}$ bzw. $I_{1a}$, $I_{1b}$) umfassen, von welchen einer ($I_1$ bzw. $I_{1a}$) die Intensität des zu der mindestens einen Position des Aufpunkts der Intensitätsverteilung (19) registrierten Lumineszenzlichts (12) angibt, ein weiterer Ortsbereich (324, 325) in der Probe (6) bestimmt wird, in dem das Molekül (24) angeordnet ist und der kleiner als der anfängliche Ortsbereich (23) ist, wobei der zweite Intensitätswert zu der jeweiligen Raumrichtung, in der der Ort des Moleküls (24) bestimmt wird,

    - eine Intensität ($I_{1b}$) des zu einer zweiten Position des Aufpunkts der Intensitätsverteilung (19) registrierten Lumineszenzlichts (12) ist, die in der jeweiligen Raumrichtung an anderer Stelle auf derselben Seite wie die mindestens eine Position des Aufpunkts der Intensitätsverteilung (19) oder auf der der mindestens einen Position des Aufpunkts der Intensitätsverteilung (19) gegenüberliegenden Seite des anfänglichen Ortsbereichs (23) liegt, oder
    - eine Sättigungswert ($I_{SW}$) der Intensität (L) des Lumineszenzlichts (12) von dem Molekül (24) bei Anregung mit dem Anregungslicht (3) ist, und

    - **dass** die Schritte (i) und (ii) mindestens einmal unter Verwendung des weiteren Ortsbereichs als neuer anfänglicher Ortsbereich (23) wiederholt werden.

18. Verfahren nach Anspruch 17, **dadurch gekennzeichnet,**

    - **dass** der Aufpunkt eine Nullstelle (20) der Intensitätsverteilung (19) ist, an die sich in jeder der Raumrichtungen auf einer Seite der mindestens eine Intensitätsanstiegsbereich (22) und auf der gegenüberliegenden Seite ein weiterer Intensitätsanstiegsbereich (22) anschließt,
    - wobei der mindestens eine Intensitätsanstiegsbereich (22) und der weitere Intensitätsanstiegsbereich (22) optional symmetrisch zu der Nullstelle (20) ausgebildet sind.

19. Verfahren nach einem der Ansprüche 17 und 18, **dadurch gekennzeichnet, dass** die Anzahl der Positionen, die bei jeder Ausführung des Schritts (i) festgelegt werden zwischen n+1 und 2n liegt, wobei n die Anzahl der Raumrichtungen ist, in denen der Ort des Moleküls (24) bestimmt wird.

20. Verfahren nach einem der Ansprüche 17 bis 19, **dadurch gekennzeichnet,**

    - **dass** das Lumineszenzlicht (12) zu den Positionen des Aufpunkts (20, 326) der Intensitätsverteilung (19) nur so lange registriert wird, bis die Intensitäten des registrierten Lumineszenzlichts (12) zu den Positionen mit einer ausreichenden Genauigkeit erfasst sind, dass der weitere Ortsbereich (324, 325) um einen vorgegebenen Wert kleiner als der anfängliche Ortsbereich (23) bestimmbar ist,
    - wobei der vorgegebene Wert, um den der weitere Ortsbereich (324, 325) in der jeweiligen Raumrichtung kleiner als der anfängliche Ortsbereich (23) bestimmbar ist, optional in einem Bereich von 5 % bis 75 % liegt.

21. Verfahren nach einem der Ansprüche 17 bis 20, **dadurch gekennzeichnet, dass** eine maximale Intensität des Anregungslichts (3) so eingestellt wird, dass sich der anfängliche Ortsbereich (23) bezüglich jeder Position des Aufpunkts (20, 326) der Intensitätsverteilung (19) in einem Bereich von nicht mehr als 90 % einer Sättigungsintensität (Is) des Anregungslichts (3) befindet, wobei die maximale Intensität des Anregungslichts (3)

    - bei mindestens einer Wiederholung der Schritte (i) und (ii) erhöht wird und
    - über alle Wiederholungen der Schritte (i) und (ii) optional um mindestens 50 % erhöht wird.

22. Verfahren nach einem der Ansprüche 17 bis 21, **dadurch gekennzeichnet,**

    - **dass** die Schritte (i) und (ii) solange wiederholt werden, bis der weitere Ortsbereich (324, 325) nicht mehr größer als eine vorgegebene Präzision ist,
    - wobei die vorgegebene Präzision optional im Bereich zwischen 0,5 und 20 nm liegt.

23. Verfahren nach einem der Ansprüche 1 bis 7 bzw. 17 bis 22, **dadurch gekennzeichnet, dass** das Lumineszenzlicht (12) zu den Positionen der Nullstelle (20) bzw. des Aufpunkts (326) der Intensitätsverteilung (19) quasi gleichzeitig registriert wird, indem die Nullstelle bzw. der Aufpunkt (326) wiederholt zwischen den Positionen verschoben wird.

**24.** Verfahren nach einem der vorhergehenden Ansprüche, **dadurch gekennzeichnet, dass** das Lumineszenzlicht (12) mit räumlicher Auflösung registriert wird, wobei zusätzlich eine räumliche Verteilung des insgesamt registrierten Lumineszenzlichts (12) hinsichtlich des Orts des Moleküls (24) in der Probe (6) ausgewertet wird.

**25.** Verfahren nach einem der vorhergehenden Ansprüche, **dadurch gekennzeichnet, dass** die Probe (6) vor dem Bestimmen des Orts des vereinzelten Moleküls (24) mit einem Schaltsignal beaufschlagt wird, das das Molekül (24) von benachbarten gleichartigen Molekülen vereinzelt, indem die benachbarten gleichartigen Moleküle (24) nach dem Vereinzeln - im Gegensatz zu dem vereinzelten Molekül (24) - mit dem Anregungslicht (3) nicht zur Emission von Lumineszenzlicht (12) anregbar sind.

**26.** Wiederholte Durchführung des Verfahrens nach einem der vorhergehenden Ansprüche

    - zum Bestimmen des Orts einer Vielzahl von nacheinander vereinzelten, mit Anregungslicht (3) zur Emission des Lumineszenzlichts (12) anregbaren Molekülen (24), die eine interessierende Struktur in der Probe (6) markieren, oder
    - zum Verfolgen des sich in der Probe (6) bewegenden vereinzelten Moleküls (24).

**27.** Verwendung eines STED-Rasterfluoreszenzlichtmikroskops (1) zur Durchführung des Verfahrens nach einem der vorhergehenden Ansprüche, wobei durch das STED-Rasterfluoreszenzlichtmikroskop (1) bereitgestelltes STED-Licht als das Anregungslicht (3) verwendet wird.


**Claims**

**1.** Method of spatial high resolution determining, in one or more spatial dimensions, the position of an isolated molecule (24) in a sample (6), the molecule (24) being excitable with excitation light (3) for emission of luminescence light (12),

    - wherein the excitation light (3) is directed onto the sample (6) with an intensity distribution (19) having a zero point (20) and intensity increasing regions (22) which are adjoining the zero point (20) on both sides in each of the spatial dimensions,
    - wherein the luminescence light (12) emitted by the molecule (24) is registered for each of different positions (A-D) of the zero point (20) in the sample (6), and
    - wherein the position of the molecule (24) in the sample (6) is deduced from the intensities ($I_A$-$I_D$) of the luminescence light (12) registered for the different positions (A-D) of the zero point (20),

**characterised in that** the zero point (20) is arranged at not more than n x 3 different positions (A-D) in the sample (6) to deduce the position of the molecule (24) in the n spatial dimensions from the intensities ($I_A$-$I_D$) of the luminescence light (12) registered for the different positions (A-D) of the zero point (20), wherein the different positions (A-D) at which the zero point (20) is arranged in the sample (6) include, in each spatial dimension in which the position of the molecule (24) is determined in the sample (6), one position (A-C) on both sides of a centre of a limited local area (23) in the sample, in which the molecule (24) is arranged.

**2.** Method of claim 1, **characterised in that** the zero point (20) is arranged at not more than (n x 2) + 1 different positions (A-D) in the sample to deduce the position of the molecule (24) in the n spatial dimensions from the intensities ($I_A$-$I_D$) of the luminescence light (12) registered for the different positions (A-D) of the zero point (20), wherein the zero point (20) is, optionally, arranged at not more than n + 2 different positions (A-D) in the sample to deduce the position of the molecule (24) in the n spatial dimensions from the intensities ($I_A$-$I_D$) of the luminescence light (12) registered for the different positions (A-D) of the zero point (20).

**3.** Method of claim 1 or 2, **characterised in that**, in each spatial dimension in which the position of the molecule (24) is determined in the sample (6), the different positions (A-D) at which the zero point (20) is arranged in the sample (6) include one position (D) in the centre of the limited local area (23) beside the two positions (A-C) on both sides of the centre of the limited local area (23).

**4.** Method of any of the claims 1 to 3, **characterised in that** the different positions (A-D) at which the zero point (20) is arranged in the sample (6)

    - are a central position (D) and three peripheral positions (A-C), if the position of the molecule (24) is determined in two spatial dimensions, wherein the peripheral positions (A-C) are arranged in a plane spanned by the two spatial dimensions and running through the central position at equal distances on a circular arch (25) around the central position, and/or,
    - are a central position and four peripheral positions, if the position of the molecule (24) is determined in three spatial dimensions, wherein the peripheral positions are arranged at equal distances on a spherical shell around the central position.

5. Method of any of the preceding claims, **characterised in that** a maximum intensity of the excitation light (3) is adjusted such that a maximum distance of each position (A-D) of the zero point (20) to each point between the positions (A-D) of the zero point (20) in the sample (6) is not longer than an extension of each intensity increasing area (22) in the direction of the distance (a) over which the intensity of the excitation light (3) increases up to 90 % of a saturation intensity (Is) of the excitation light (3).

6. Method of any of the preceding claims, **characterised in**

   - **that** the luminescence light (12) is only registered until the intensities ($I_A$-$I_D$) of the luminescence light (12) registered for the positions (A-D) of the zero point (20) are determined at a sufficient accuracy such that the position of the isolated molecule (24) can be determined at a predetermined precision,
   - wherein the predetermined precision is, optionally, in a range between 0.5 and 20 nm.

7. Repeated execution of the method of any of the preceding claims with decreasing distances of the positions (A-D) of the zero point (20) in the sample (6), wherein, in each repetition of the method, the positions (A-D) of the zero point (20) in the sample (6) are arranged around the position of the molecule (24) in the sample (6), which has been deduced in the previous execution of the method from the registered intensities ($I_A$-$I_D$) of the luminescence light (12).

8. Method of spatial high resolution determining (31), in one or more spatial dimensions, the position of an isolated molecule (24) in a sample (6) wherein the molecule (24) is excitable with excitation light (3) for emission of luminescence light (12),

   - wherein the excitation light (3) is directed onto the sample (6) with an intensity distribution having a zero point (20) and intensity increasing regions which are adjoining the zero point on both sides in each of the spatial dimensions in which the position of the molecule (24) is determined,
   - wherein the zero point (20), in each of the spatial dimensions in which the position of the molecule (24) is determined, is shifted within the sample, wherein the luminescence light (12) emitted by the molecule (24) is registered for each position (A, B, C) of the zero point (20) in the sample (6),
   **characterised in**
   - **that** a preliminary local area (23) in the sample (6) is determined, in which the molecule (24) is arranged,
   - **that**, in each of the spatial dimensions in which the position of the molecule (24) is determined, at least one preliminary position (A, B, C) of the zero point (20) is defined such that it is on one side of the preliminary local area (23) in the respective spatial dimension,
   - **that** the luminescence light (12) is quasi-simultaneously registered for the positions (A, B, C) of the zero point (20) assigned to all spatial dimensions in which the position of the molecule (24) is determined, if these are a plurality of positions (A, B, C), in that the zero point (20) is repeatedly shifted between the positions (A, B, C),
   - **that** the positions (A, B, C) of the zero point (20) are successively shifted into the preliminary local area (23) depending on the photons of the luminescence light (12) registered for each of the positions (A, B, C) so that the positions (A, B, C) of the zero point (20) are advanced to the actual position of the molecule (24) in the sample and confined to a local area which is reduced in size as compared to the preliminary local area (23) of the molecule (24) and whose dimensions correspond to a precision at which the position of the isolated molecule (24) is determined.

9. Method of claim 8, **characterised in that** the positions (A, B, C) of the zero point (20) are successively shifted into the preliminary local area (23) depending on the rates or intervals in time of the photons of the luminescence light (12) registered for each of the positions (A, B, C).

10. Method of claim 8 or 9, **characterised in that** a number of the positions (A, B, C) of the zero point (20) is between n and 2n, wherein n is the number of the spatial dimensions in which the position of the molecule (24) is determined.

11. Method of any of the claims 8 to 9, **characterised in that**, in at least one of the spatial dimensions in which the position of the molecule (24) is determined, the position of the molecule (24) in the sample (6)

   - is set equal to that position (A, B, C) of the zero point (20) assigned to the respective spatial dimension, at which a rate of the photons of the luminescence light (12) which are registered for this zero point (20) is minimized, or
   - is deduced from a rate or intervals in time of the photons of the luminescence light (12), which are registered for the at least one position (A, B, C) of the zero point (20) assigned to the respective spatial dimension.

12. Method of any of the claims 8 to 10, **characterised in**

   - **that**, for each of the spatial dimensions in which the position of the molecule (24) is determined, the preliminary positions (A, B, C) of the zero point (20) include two positions which are on both sides of the preliminary local area (23) in the respective spatial dimension, and
- **that**, by means of the successive shifting (234) of the positions (A, B, C) of the zero point (20), which are assigned to all spatial dimensions in which the position of the molecule (24) is determined, depending on the rates or intervals in time of the photons of the luminescence light (12) registered for all positions, a local area of the molecule (24) remaining between the positions (A, B, C) of the zero point (20) is successively confined.

13. Method of claim 12, **characterised in**

- **that** the local area of the molecule (24) remaining between the positions of the zero point (A, B, C) is successively confined until its extensions are no longer greater than a predetermined precision,
- wherein the predetermined position is, optionally, in a range between 0.5 nm and 20 nm or in a range between 1 nm and 10 nm.

14. Method of any of the claims 8 to 13, **characterised in**

- **that** at least one of the positions (A, B, C) of the zero point (20), which are assigned to all of the spatial dimensions in which the position of the molecule (24) is determined, is shifted as soon as an average of p photons of the luminescence light (12) have been registered at the previous positions, wherein p is not higher than 30, 20, 10 or 5, and/or
- **that** at least one of the positions (A, B, C) of the zero point (20), which are assigned to all of the spatial dimensions in which the position of the molecule (24) is determined, is shifted as soon as a total of n x q photons of the luminescence light (12) have been registered at the previous positions, wherein n is the number of the spatial dimensions in which the position of the molecule (24) in the sample (6) is determined, and wherein q is not higher than 50, 25 or 5, and/or
- **that** the position (A, B, C) of each zero point (20) is shifted as soon as m photons of the luminescence light have been registered at the previous position, wherein m is not higher than 30, 20, 10, 5 or 3.

15. Method of any of the claims 8 to 14, **characterised in**

- **that** a maximum intensity ($I_A$) of the excitation light (3) is adjusted such that the preliminary local area (23), with regard to each position of the zero point (20), is in an area of not more than 90 % of a saturation intensity (Is) of the excitation light (3) and
- **that** the absolute intensity ($I_A$) of the excitation light (3) is successively increased with shifting (234) the positions (A, B, C) of the zero point (20), wherein the absolute intensity ($I_A$) of the excitation light (3)

- is increased such that a rate of the photons registered for all respective positions (A, B, C) of the zero point (20), at least temporarily, remains constant, and/or
- is increased by at least 50 % in total.

16. Method of any of the preceding claims, **characterised in that** the intensity increasing regions (22) which are adjoining the zero point (20) are formed symmetrically with regard to the zero point (20) in each of the spatial dimensions in which the position of the molecule (24) is determined.

17. Method of high spatial resolution determining, in one or more spatial dimensions, the position of an isolated molecule (24) in a sample (6), wherein the molecule (24) is excitable with excitation light (3) for emission of luminescence light (12),

- wherein the excitation light (3) is directed onto the sample (6) with an intensity distribution (19) which, in each of the spatial dimensions in which the position of the molecule (24) is determined, comprises at least one intensity increasing region (22) with a known strictly monotonic course of the intensity ($I_A$) of the excitation light (3) over a distance to a model point (20, 326) of the intensity distribution (19),
- wherein the model point (20, 326) of the intensity distribution (19), in each of the spatial dimensions in which the position of the molecule (24) is determined, is arranged at different positions in the sample (6),
- wherein the luminescence light (12) emitted by the molecule (24) is registered for each position of the model point (20, 326) of the intensity distribution (19) in the sample (6), and
- wherein the position of the molecule in the sample ($x_0$) is deduced from intensities of the registered luminescence light (12),
**characterised in**
- **that** a preliminary local area (23) in the sample (6) is determined, in which the molecule (24) is arranged,
- **that** (i), in each of the spatial dimensions in which the position of the molecule (24) is determined, at least one position of the model point (20, 326) of the intensity distribution (19) is defined such that the at least one intensity increasing region (22) extends over the preliminary local area (23) in the respective spatial dimension,

- **that** (ii), from intensity values ($I_1$, $I_{SW}$, $I_{1a}$, $I_{1b}$) of the luminescence light (12), which, for each of the spatial dimensions in which the position of the molecule (24) is determined, include two intensity values ($I_1$, Isw or $I_{1a}$, $I_{1b}$, respectively) of which at least one ($I_1$, or $I_{1a}$, respectively) indicates the intensity of the luminescence light (12) registered for the at least one position of the model point of the intensity distribution (19), a further local area (324, 325) in the sample (6) is determined in which the molecule (24) is arranged and which is smaller than the preliminary local area (23), wherein the second intensity value for the respective spatial dimension in which the position of the molecule (24) is determined

- is an intensity ($I_{1b}$) of the luminescence light (12) registered for a second position of the model point of the intensity distribution (19), which, in the respective spatial dimension, is at another point on the same side as the at least one position of the model point of the intensity distribution (19) or on the side of the preliminary local area (23) opposite to the at least one position of the model point of the intensity distribution (19), or

- is a saturation value ($I_{SW}$) of the intensity (L) of the luminescence light (12) from the molecule (24) with excitation by the excitation light (3), and

- **that** the steps (i) and (ii) are repeated at least once using the further local area as the new preliminary local area (23).

18. Method of claim (17), **characterised in**

- **that** the model point is the zero point (20) of the intensity distribution (19), the at least one intensity increasing region (22) adjoining the zero point (20) on one side and a further intensity increasing region (22) adjoining the zero point (20) on the opposite side in each of the spatial dimension,

- wherein the at least one intensity increasing region and the further intensity increasing region (22) are, optionally, symmetric with regard to the zero point (20).

19. Method of any of the claims 17 and 18, **characterised in that** the number of the positions which are defined in each execution of the step (i) is between n + 1 and 2n, wherein n is the number of spatial dimensions in which the position of the molecule (24) is determined.

20. Method of any of the claims 17 to 19, **characterised in**

- **that** the luminescence light (12) is only registered for the positions of the model point (20, 326) of the intensity distribution (19) until the intensities of the registered luminescence light are determined for the positions at a sufficient accuracy such that the further local area (324, 325) can be determined by a predetermined value smaller than the preliminary local area (23),

- wherein the predetermined value by which the further local area (324, 325), in the respective spatial dimension, can be determined smaller than the preliminary local area (23) is, optionally, in a range from 5 % to 75 %.

21. Method of any of the claims 17 to 20, **characterised in that** a maximum intensity of the excitation light (3) is adjusted such that the preliminary local area (23), with regard to each position of the model point (20, 326) of the intensity distribution (19), is in an area of not more than 90 % of a saturation intensity ($I_S$) of the excitation light (3), wherein the maximum intensity of the excitation light (3)

- is increased in at least one of the repetitions of the steps (i) and (ii), and

- is, optionally, increased by at least 50 % over all repetitions of the steps (i) and (ii).

22. Method of any of the claims 17 to 21, **characterised in**

- **that** the steps (i) and (ii) are repeated until the further local area (324, 325) is no longer larger than a predetermined precision,

- wherein the predetermined precision is, optionally, in a range between 0.5 and 20 nm.

23. Method of any of the claims 1 to 7 or 17 to 22, **characterised in that** the luminescence light (12) is quasi-simultaneously registered for the positions of the zero point (20) or the model point (326) of the intensity distribution (19) **in that** the zero point or the model point (326) are repeatedly shifted between the positions.

24. Method of any of the preceding claims, **characterised in that** the luminescence light (12) is registered at a spatial resolution, wherein, additionally, a spatial distribution of the entire registered luminescence light (12) is evaluated with regard to the position of the molecule (24) in the sample (6).

25. Method of any of the preceding claims, **character-**

**ised in that** the sample (6), prior to determining the position of the isolated molecule (24), is subjected to a switching signal which isolates the molecule (24) from neighbouring similar molecules **in that** the neighbouring similar molecules (24) after the isolating - in contrast to the isolated molecule (24) - are not excitable with the excitation light (3) for emission of luminescence light (12).

26. Repeated execution of the method of any of the preceding claims

- for determining the positions of a plurality of consecutively isolated molecules (24) excitable with excitation light (3) for emission of luminescence light (12), which mark a structure of interest in the sample (6), or
- for tracking an isolated molecule (24) moving in the sample (6).

27. Use of a STED-scanning-fluorescence-light-microscope (1) for executing the method of any of the preceding claims, wherein STED-light provided by the STED-scanning-fluorescence-light-microscope (1) is used as the excitation light (3).

**Revendications**

1. Procédé pour la détermination spatiale à haute résolution de la localisation d'une molécule isolée (24) dans une ou plusieurs directions de l'espace dans un échantillon (6), dans lequel la molécule (24) peut être excitée avec une lumière d'excitation (3) pour l'émission d'une lumière luminescente (12),

- dans lequel la lumière d'excitation (3) est dirigée vers l'échantillon (6) avec une répartition d'intensité (19) qui présente un point zéro (20) et des zones d'augmentation d'intensité (22) qui sont adjacentes au point zéro (20) des deux côtés dans chacun des directions de l'espace,
- dans lequel, à chacune de différentes positions (A-D) du point zéro (20) dans l'échantillon (6), la lumière luminescente (12) émise par la molécule (24) est enregistrée et
- la localisation de la molécule (24) dans l'échantillon (6) est déduite des intensités ($I_A$-$I_D$) de la lumière luminescente (12) enregistrées aux différentes positions (A-D) du point zéro (20),

**caractérisé en ce que** le point zéro (20) est disposé à pas plus de n x 3 différentes positions (A-D) dans l'échantillon (6), afin de déduire la localisation de la molécule (24) dans les n directions de l'espace des intensités ($I_A$-$I_D$) de la lumière luminescente (12) enregistrées aux différentes positions (A-D) du point zéro (20), dans lequel les différentes positions (A-D) auxquelles le point zéro (20) est disposé dans l'échantillon (6) comprennent chacune, dans chaque direction de l'espace, dans laquelle la localisation de la molécule (24) dans l'échantillon (6) est déterminée, une position (A-C) sur les deux côtés d'un centre d'une zone locale limitée (23) dans l'échantillon dans laquelle la molécule (24) est disposée.

2. Procédé selon la revendication 1, **caractérisé en ce que** le point zéro (20) est disposé à pas plus de (nx2) + 1 différentes positions (A-D) dans l'échantillon, afin de déduire la localisation de la molécule (24) dans les n directions de l'espace des intensités ($I_A$-$I_D$) de la lumière luminescente (12) enregistrées aux différentes positions (A-D) du point zéro (20), dans lequel le point zéro (20) est disposé en option à pas plus de n+2 différentes positions (A-D) dans l'échantillon, afin de déduire la localisation de la molécule (24) dans les n directions de l'espace des intensités ($I_A$-$I_D$) de la lumière luminescente (12) enregistrées aux différentes positions (A-D) du point zéro (20).

3. Procédé selon la revendication 1 ou 2, **caractérisé en ce que** les différentes positions (A-D) auxquelles le point zéro (20) est disposé dans l'échantillon (6) présentent, dans chaque direction de l'espace, dans laquelle la localisation de la molécule (24) dans l'échantillon (6) est déterminée, en plus des deux positions (A-C) sur les deux côtés du centre de la zone locale limitée (23), une position (D) au centre de la zone locale limitée (23).

4. Procédé selon l'une des revendications 1 à 3, **caractérisé en ce que** les différentes positions (A-D) auxquelles le point zéro (20) est disposé dans l'échantillon (6),

- sont, lorsque la localisation de la molécule (24) est déterminée dans deux directions de l'espace, une position centrale (D) et trois positions périphériques (A-C), dans lequel les positions périphériques (A-C) sont disposées, dans un plan délimité par des deux directions de l'espace et passant par la position centrale, de manière équidistante sur un arc de cercle (25) autour de la position centrale et/ou
- sont, lorsque la localisation de la molécule (24) est déterminée dans trois directions de l'espace, une position centrale et quatre positions périphériques, dans lequel les positions périphériques sont disposées de manière équidistante sur une coque sphérique autour de la position centrale.

5. Procédé selon l'une des revendications précédentes, **caractérisé en ce qu'**une intensité maximale de la lumière d'excitation (3) est réglée de façon à ce qu'une distance maximale de chaque position (A-D) du point zéro (20) à chaque point entre les positions (A-D) du point zéro (20) dans l'échantillon (6) ne soit pas plus grande qu'une extension de chaque zone d'augmentation d'intensité (22) en direction de la distance (a), sur laquelle l'intensité de la lumière d'excitation (3) augmente jusqu'à 90 % d'une intensité de saturation ($I_S$) de la lumière d'excitation (3).

6. Procédé selon l'une des revendications précédentes, **caractérisé en ce que**

   - la lumière luminescente (12) est enregistrée aux positions (A-D) du point zéro seulement jusqu'à ce que les intensités ($I_A$-$I_D$) de la lumière luminescente (12) enregistrée aux positions (A-D) du point zéro (20) soient mesurées avec une précision suffisante pour que la localisation de la molécule (24) isolée puisse être déterminée avec une précision prédéterminée,
   - dans lequel la précision prédéterminée se trouve en option dans un intervalle entre 0,5 et 20 nm.

7. Exécution répétée du procédé selon l'une des revendications précédentes avec des distances décroissantes entre les positions (A-D) et le point zéro (20) dans l'échantillon (6), dans laquelle les positions (A-D) du point zéro (20) dans l'échantillon (6) est disposé, à chaque répétition du procédé, autour de la localisation de la molécule (24) de l'échantillon (6), qui a été déduite des intensités ($I_A$-$I_D$) de la lumière luminescente (12) enregistrées lors de la précédente exécution du procédé.

8. Procédé pour la détermination (31) spatiale à haute résolution de la localisation d'une molécule isolée (24) dans une ou plusieurs directions de l'espace dans un échantillon (6), dans lequel la molécule (24) peut être excitée avec une lumière d'excitation (3) pour l'émission d'une lumière luminescente (12),

   - dans lequel la lumière d'excitation (3) est dirigée vers l'échantillon (6) avec une répartition d'intensité qui présente un point zéro (20) et des zones d'augmentation d'intensité (22) qui sont adjacentes au point zéro (20) des deux côtés dans chacun des directions de l'espace, dans lesquelles la localisation de la molécule (24) est déterminée,
   - dans lequel le point zéro (20) dans l'échantillon est décalé dans chacune des directions de l'espace dans lesquelles la localisation de la molécule (24) est déterminée, dans lequel, à chaque position (A, B, C) du point zéro (20) dans l'échantillon (6), la lumière luminescente (12) émise par la molécule (24) est enregistrée, **caractérisé en ce que**
   - une zone locale initiale (23) est déterminée dans l'échantillon (6), dans laquelle la molécule (24) est disposée,
   - dans chacune des directions de l'espace, dans lesquelles la localisation de la molécule (24) est déterminée, au moins une position initiale (A, B, C) du point zéro (20) est déterminée de façon à ce qu'elle se trouve dans la direction de l'espace respective sur u côté de la zone locale initiale (23),
   - la lumière luminescente (12) est enregistrée de manière quasi simultanée à toutes les positions (A, B, C) du point zéro (20) correspondant à toutes les directions de l'espace dans lesquelles la localisation de la molécule (24) est déterminée, s'il s'agit de plusieurs positions (A, B, C), grâce au fait que le point zéro (20) est décalée de manière répétée entre les positions (A, B, C),
   - les positions (A, B, C) du point zéro (20) sont décalées successivement vers la zone locale initiale (23) en fonction des photons de la lumière luminescente (12) enregistrés à chacune des positions (A, B, C), de façon à ce que les positions (A, B, C) du point zéro (20) sont avancé à la localisation actuelle de la molécule (24) et ce faisant rétrécié à une zone locale de la molécule (24) réduiré en regard de la zone locale initiale (23), dont les dimensions correspondent à une précision avec laquelle la localisation de la molécule (24) isolée est déterminée.

9. Procédé selon la revendication 8, **caractérisé en ce que** les positions (A, b, C) du point zéro (20) sont décalées successivement vers la zone locale initiale (23) en fonction des fréquences ou des intervalles temporels des photons de la lumière luminescente (12) enregistrés à chacune des positions (A, B, C).

10. Procédé selon la revendication 8 ou 9, **caractérisé en ce qu'**un nombre des positions (A, B, C) du point zéro (20) se trouve entre n et 2n, dans lequel n est le nombre de directions de l'espace dans lesquelles la localisation de la molécule (24) est déterminée.

11. Procédé selon l'une des revendications 8 à 9, **caractérisé en ce que**, dans au moins une des directions de l'espace, dans lesquelles la localisation de la molécule (24) est déterminée, la localisation de la molécule (24) dans l'échantillon (6)

   - est comparée avec la position (A, B, C) du point zéro (20) correspondant à la direction de l'espace respective, dans laquelle une fréquence des photons de la lumière luminescente (12) est minimisée, qui sont enregistrées à cette position (A, B, C) du point zéro (20) ou
   - est déduite à partir d'une fréquence ou d'intervalles temporels des photons de la lumière luminescente (12) qui sont enregistrés à la position (A, B, C) du point zéro (20) correspondant au moins à la direction de l'espace respective.

**12.** Procédé selon l'une des revendications 8 à 10, **caractérisé en ce que**

- les positions initiales (A, B, C) du point zéro (20) dans chacune des directions de l'espace dans lesquelles la localisation de la molécule (24) est déterminée comprennent deux positions qui se trouvent dans la direction de l'espace respective sur les deux côtés de la zone locale initiale (23) et
- grâce au décalage successif (234) de toutes les positions (A, B, C) du point zéro (20) correspondant aux directions de l'espace dans lesquelles la localisation de la molécule (24) est déterminée, une zone locale de la molécule (24) subsistant entre les positions (A, B, C) du point zéro (20) est rétrécie successivement en fonction de toutes les fréquences ou de tous les intervalles temporels des photons de la lumière luminescente (12) déterminés à toutes les positions.

**13.** Procédé selon la revendication 12, **caractérisé en ce que**

- la zone locale initiale de la molécule (24) subsistant entre les positions du point zéro (A, B, C) est successivement rétrécie jusqu'à ce que ses dimensions ne soient pas plus grandes qu'une précision prédéterminée,
- dans lequel la précision prédéterminée se trouve, en option, dans un intervalle entre 0,5 nm et 20 nm ou dans un intervalle de 1 nm à 10 nm.

**14.** Procédé selon l'une des revendications 8 à 13, **caractérisé en ce que**

- au moins une des positions (A, B, C) du point zéro (20) correspondant aux directions de l'espace dans lesquelles la localisation de la molécule (24) est déterminée, est décalée dès que, aux positions précédentes, en moyenne p photons de la lumière luminescente (12) sont enregistrés, dans lequel p n'est pas supérieur à 30, 20, 10 ou 5 et/ou
- au moins une des positions (A, B, C) du point zéro (20) correspondant aux directions de l'espace dans lesquelles la localisation de la molécule (24) est déterminée, est décalée dès que, aux positions précédentes, au total n x q photons de la lumière luminescente (12) sont enregistrés, dans lequel n est le nombre des directions de l'espace dans lesquelles la localisation de la molécule (24) dans l'échantillon (6) est déterminée et dans lequel q n'est pas supérieur à 50, 25 ou 5 et/ou

- les positions (A, B, C) de chaque point zéro (20) sont décalées dès que, aux précédentes, m photons de la lumière luminescente (12) sont enregistrés, dans lequel m n'est pas supérieur à 30, 20, 10, 5 ou 3.

**15.** Procédé selon l'une des revendications 8 à 14, **caractérisé en ce que**

- une intensité maximale ($I_A$) de la lumière d'excitation (3) est ajustée de façon à ce que la zone locale initiale (23) se trouve, par rapport à chaque position du point zéro (20), dans une zone de pas plus de 90 % d'une intensité de saturation (is) de la lumière d'excitation (3) et
- l'intensité absolue ($I_A$) de la lumière d'excitation (3) est successivement augmentée avec le décalage (234) des positions (A, B, C) du point zéro (20), dans lequel l'intensité absolue ($I_A$) de la lumière d'excitation (3)
- est augmentée de façon à ce qu'une fréquence des photons enregistrés à toutes les positions (A, B, C) respectives du point zéro reste au moins provisoirement constante et/ou
- est augmentée au total d'au moins 50 %.

**16.** Procédé selon l'une des revendications précédentes, **caractérisé en ce que**, dans chacune des directions de l'espace dans lesquelles la localisation de la molécule (24) est déterminée, sont formées des zones d'augmentation d'intensité (22) adjacentes au point zéro (20) de manière symétrique par rapport au point zéro (20).

**17.** Procédé pour la détermination spatiale à haute résolution de la localisation d'une molécule isolée (24) dans une ou plusieurs directions de l'espace dans un échantillon (6), dans lequel la molécule (24) peut être excitée avec une lumière d'excitation (3) pour l'émission d'une lumière luminescente (12),

- dans lequel la lumière d'excitation (3) est dirigée vers l'échantillon (6) avec une répartition d'intensité (19) qui présente, dans chacune des directions de l'espace dans lesquelles la localisation de la molécule (24) est déterminée, au moins une zone d'augmentation d'intensité (22) avec un tracé strictement monotone connu de l'intensité ($I_A$) de la lumière d'excitation (3) sur une distance par rapport à un point d'impact (20, 326) de la répartition d'intensité (19),
- dans lequel le point d'impact (20, 326) de la répartition d'intensité (19) est disposé, dans chacune des directions de l'espace dans lesquelles la localisation de la molécule (24) est déterminée, à différentes positions dans l'échantillon (6),

- dans lequel, à chaque position du point d'impact (20, 236) de la répartition d'intensité (19) dans l'échantillon (6), la lumière luminescente (12) émise par la molécule (24) est enregistrée et

- dans lequel la localisation de la molécule dans l'échantillon ($x_0$) est déduite des intensités de la lumière luminescente (12) enregistrée, **caractérisé en ce que**

- une zone locale initiale (23) dans l'échantillon (6) est déterminée, dans laquelle la molécule (24) est disposée,

- (i) dans chacune des directions de l'espace dans lesquelles la localisation de la molécule (24) est déterminée, au moins une position du point d'impact (20, 326) de la répartition d'intensité (19) est déterminée de façon à ce que l'au moins une zone d'augmentation d'intensité (22) s'étende, dans la direction de l'espace respective, sur la zone locale initiale (23),

- (ii) à partir des valeurs d'intensités ($I_1$, $I_{SW}$, $I_{1a}$, $I_{1b}$) de la lumière luminescente (12), qui comprennent, dans chacune des directions de l'espace dans lesquelles la localisation de la molécule (24) est déterminée, deux valeurs d'intensités ($I_1$, $I_{SW}$ resp. $I_{1a}$, $I_{1b}$), dont une ($I_1$, $I_{1a}$) indique l'intensité de la lumière luminescente (12) enregistrée à l'au moins une position du point d'impact de la répartition d'intensité (19), une autre zone locale (324, 325) dans l'échantillon (6) est déterminée, dans laquelle la molécule (24) est disposée et qui est plus petite que la zone locale initiale (23), dans lequel la deuxième valeur d'intensité, dans la direction de l'espace respective dans laquelle la localisation de la molécule (24) est déterminée,

- est une intensité ($I_{1b}$) de la lumière luminescente (12) enregistrée à une deuxième position du point d'impact de la répartition d'intensité (19) qui se trouve, dans la direction de l'espace respective, à un autre endroit sur le même côté que l'au moins une position du point d'impact de la répartition d'intensité (19) ou sur le côté, opposé à l'au moins une position du point d'impact de la répartition d'intensité (19), de la zone locale initiale (23) ou

- est une valeur de saturation ($I_{SW}$) de l'intensité ($I_L$) de la lumière luminescente (12) provenant de la molécule (24) lors de l'excitation avec la lumière d'excitation (3) et

- les étapes (i) et (ii) sont répétées au moins une fois en utilisant l'autre zone locale en tant que nouvelle zone locale initiale (23).

18. Procédé selon la revendication 17, **caractérisé en ce que**

- le point d'impact est un point zéro (20) de la répartition d'intensité (19) auquel se raccordent l'au moins une zone d'augmentation d'intensité (22) dans chacune des directions de l'espace sur un côté et l'autre zone d'augmentation de l'intensité (22) sur le côté opposé,

- dans lequel l'au moins une zone d'augmentation d'intensité (22) et l'autre zone d'augmentation d'intensité (22) sont, en option, symétriques par rapport au point zéro (20).

19. Procédé selon l'une des revendications 17 et 18, **caractérisé en ce que** le nombre de positions qui sont déterminées à chaque exécution de l'étape (i) se trouve entre n+1 et 2n, dans lequel n est le nombre de directions de l'espace dans lesquelles la localisation de la molécule (24) est déterminée.

20. Procédé selon l'une des revendications 17 à 19, **caractérisé en ce que**

- la lumière luminescente (12) aux positions du point d'impact (20, 326) de la répartition d'intensité (19) est enregistrée uniquement jusqu'à ce que les intensités de la lumière luminescente (12) enregistrée aux positions soit mesurées avec une précision suffisante, de façon à ce que l'autre zone locale (324, 325) puisse être déterminée d'une valeur prédéterminée plus petite que la zone locale initiale (23),

- dans lequel la valeur prédéterminée de laquelle l'autre zone locale (324, 325) peut être déterminée plus petite que la zone locale initiale (23) dans la direction de l'espace respective se trouve, en option dans un intervalle de 5 % à 75 %.

21. Procédé selon l'une des revendications 17 à 20, **caractérisé en ce qu'**une intensité maximale de la lumière d'excitation (3) est ajustée de façon à ce que la zone locale initiale (23) par rapport à chaque position du point d'impact (20, 326) de la répartition d'intensité (19) se trouve dans un intervalle non supérieur à 90 % d'une intensité de saturation ($I_S$) de la lumière d'excitation (3), dans lequel l'intensité maximale de la lumière d'excitation (3)

- est augmentée lors d'au moins une répétition des étapes (i) et (ii) et

- est augmentée, lors de toutes les répétitions des étapes (i) et (ii), en option, d'au moins 50 %.

22. Procédé selon l'une des revendications 17 à 21, **caractérisé en ce que**

- les étapes (i) et (ii) sont répétées jusqu'à ce que l'autre zone locale (324, 325) ne soit pas plus grande qu'une précision prédéterminée,

- dans lequel la précision prédéterminée se trouve, en option dans un intervalle entre 0,5 et 20 nm.

23. Procédé selon l'une des revendications 1 à 7 resp. 17 à 22, **caractérisé en ce que**

la lumière luminescente (12) est enregistrée quasi simultanément aux positions du point zéro (20) resp. du point d'impact (326) de la répartition d'intensité (19), grâce au fait que le point zéro resp. le point d'impact (326) est décalé de manière répétée entre les positions.

24. Procédé selon l'une des revendications précédentes, **caractérisé en ce que** la lumière luminescente (12) est enregistrée avec une résolution spatiale, dans lequel en outre une répartition spatiale de la lumière luminescente (12) totale enregistrée est analysée en ce qui concerne la localisation de la molécule (24) dans l'échantillon (6).

25. Procédé selon l'une des revendications précédentes, **caractérisé en ce que** l'échantillon (6) est sollicité, avant la détermination de la localisation de la molécule (24) isolée, avec un signal de commutation qui isole la molécule (24) des molécules adjacentes du même type, grâce au fait que les molécules adjacentes du même type (24) ne peuvent pas être excitées après l'isolation - contrairement à la molécule (24) isolée - avec la lumière d'excitation (3) pour l'émission d'une lumière luminescente (12).

26. Exécution répétée du procédé selon l'une des revendications précédentes

  - pour la détermination de la localisation d'une pluralité de molécules (24) isolées successivement, excitables avec une lumière d'excitation (3) pour l'émission de la lumière luminescente (12), qui marquent une structure intéressante dans l'échantillon (6) ou
  - pour la poursuite de la molécule (24) isolée se déplaçant dans l'échantillon (6).

27. Utilisation d'un microscope à lumière fluorescente à trame STED (1) pour l'exécution du procédé selon l'une des revendications précédentes, dans lequel la lumière STED mise à disposition par le microscope à lumière fluorescente à trame STED (1) est utilisée en tant que la lumière d'excitation (3).

**Fig. 1**

**Fig. 2**

**Fig. 3**

**Fig. 4**

28

Start

29

Vereinzeln des
Moleküls 24

30

Bestimmen des begrenzten
Ortsbereichs 23

35

31

Anordnen der Nullstelle 20 an
bestimmten Positionen A-D &
Registrieren des
Lumineszenzlichts 12

33

32

Ableiten des Orts des
Moleküls 24 in der Probe 6

Ende

34

**Fig. 5**

41

**Fig. 6**

**Fig. 7**

229

Start

230

Vereinzeln des
Moleküls 24

231

Bestimmen des anfänglichen
Ortsbereichs 23

237

232

Festlegen der anfänglichen
Position A-C der Nullstelle 20

238

233

Anordnen der Nullstelle 20 an
den Positionen A-C &
Registrieren des
Lumineszenzlichts 12

234

Verschieben der
Positionen A-C der
Nullstelle 20

235

236

Bestimmen des Orts des
Moleküls 24

239

Ende

**Fig. 8**

**Fig. 9**

**Fig. 10**

**Fig. 11**

Fig. 12

Fig. 13

328

Start

Bestimmen anfänglicher
Ortsbereich 23          329

Festlegen von Positionen
des Aufpunkts          330

Anordnen des Aufpunkts an
den Positionen & Registrieren
des Lumineszenzlichts          331

Bestimmen eines weiteren
Ortsbereichs 324          332

333

Präzision
≥ Vorgabe

nein

ja

Ende          334

**Fig. 14**

328

Start

335

Vereinzeln der
Moleküle 24

336

Bestimmen des
Orts jedes
vereinzelten
Moleküls 24

337

markierte Struktur
abgebildet?

nein

ja

Ende

334

Fig. 15

328

Start

329-333

Bestimmen
des Orts des
Moleküls 24

338

Warten

**Fig. 16**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2006127692 A2
- US 8174692 B2
- WO 2012171999 A1
- DE 102011055367 A1

- WO 2015097000 A1
- DE 102010028138 A1

**In der Beschreibung aufgeführte Nicht-Patentliteratur**

- **ENGELHARDT, J. et al.** Molecular Orientation Affects Localization Accuracy in Superresolution Far-Field Fluorescence Microscopy. *NanoLett,* 12. Januar 2011, vol. 11 (1), 209-13